# EUROPEAN PATENT SPECIFICATION

(11) **EP 4 332 149 B1**
(45) Date of publication and mention of the grant of the patent: **24.06.2026**
(21) Application number: 22795557.2
(22) Date of filing: 08.04.2022
(51) Int. Cl.: C08G 65/336, B32B 27/00, B32B 27/30, C08G 67/00, C09K 3/18, C08G 65/00

(54) **FLUOROPOLYETHER-GROUP-CONTAINING POLYMER, SURFACE TREATING AGENT, AND ARTICLE**
FLUORPOLYETHERGRUPPENHALTIGES POLYMER, OBERFLÄCHENBEHANDLUNGSMITTEL UND ARTIKEL
POLYMÈRE CONTENANT UN GROUPE FLUOROPOLYÉTHER, AGENT DE TRAITEMENT DE SURFACE ET ARTICLE

(30) Priority: 28.04.2021 JP 2021076316
(43) Date of publication of application: 06.03.2024
(73) Proprietor: SHIN-ETSU CHEMICAL CO., LTD., Tokyo 100-0005 (JP)
(72) Inventor: SAKOH, Ryusuke, Annaka-shi, Gunma 379-0224 (JP)
(74) Representative: Ter Meer Steinmeister & Partner
(86) International application number: PCT/JP2022/017425
(87) International publication number: WO 2022/230642

(56) References cited:
- EP-A1- 3 715 399
- WO-A1-2017/038830
- WO-A1-2017/141707
- WO-A1-2019/102832
- JP-A- 2017 082 194
- US-A1- 2019 002 635
- US-B2- 10 829 666

## Description

### TECHNICAL FIELD

This invention relates to a fluoropolyether group-containing polymer, and more particularly, to a fluoropolyether group-containing polymer capable of forming a coating having improved water/oil repellency and abrasion resistance, and a surface treating agent comprising the polymer and/or a partial (hydrolytic) condensate thereof.

### BACKGROUND ART

Recently, there is an accelerating demand to mount touch panels as the display on smartphones and other displays. While the touch panel has a screen kept bare, there are many chances of the finger or cheek coming in direct contact with the screen. Undesirably the touch panel is readily fouled with stains like sebum. There is an annually increasing need for the technology to attain fingerprint proofness or easy stain removal on a display surface for better appearance or visibility. It is thus desired to have a material capable of meeting these requirements. In particular, for touch panel displays which are readily stained with fingerprints, it is desirable to form a water/oil-repellent layer on their surface. Prior art water/oil-repellent layers have high water/oil repellency and easy stain wipe-off, but suffer from the problem that the antifouling performance deteriorates during service.

Generally, fluoropolyether group-containing compounds exhibit, by virtue of their extremely low surface free energy, water/oil repellency, chemical resistance, lubricity, parting, antifouling, and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent has an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 disclose a composition comprising a fluoropolyether group-containing polymer which is obtained by introducing a hydrolyzable silyl group into a fluoropolyether group-containing compound, the composition being tightly adherent to the substrate surface and capable of forming a coating with water/oil repellency, chemical resistance, lubricity, parting, antifouling and other properties on the substrate surface.

When lenses and antireflective coatings are surface treated with a composition comprising the fluoropolyether group-containing polymer obtained by introducing a hydrolyzable silyl group into a fluoropolyether group-containing compound, the cured films are improved in lubricity, parting, and durability to abrasion against steel wool, but cannot exhibit enough performance particularly in durability to abrasion against erasers.

A composition capable of forming a coating excellent in lubricity and parting, and having durability to abrasion against an eraser by using a fluoropolyether group-containing polymer in which a polyether group is introduced into a fluoropolyether group-containing compound is disclosed in Patent Document 7.

When lenses and antireflective coatings are surface treated with a composition comprising the fluoropolyether group-containing polymer in which a polyether group is introduced into a fluoropolyether group-containing compound, the cured films are improved in durability to abrasion against erasers, but cannot exhibit enough performance in durability to abrasion against steel wool. The durability to abrasion against both erasers and steel wool is required.

Patent Document 8 discloses a fluoropolyether group-containing polymer-modified silane that is capable of forming a cured coating film having excellent water repellent oil repellent properties and excellent wear resistance, as well as a surface treatment agent that contains the fluoropolyether group-containing polymer-modified silane and/or a partial hydrolytic condensate thereof.

Patent Document 9 is concerned with a perfluoropolyether group-containing silane compound that is capable of forming a layer having water-repellency, oil-repellency and antifouling property as well as high friction durability.

Patent Document 10 deals with a fluorinated ether compound that is capable of forming a surface layer excellent in water/oil repellency, abrasion resistance, fingerprint stain removability, lubricity and outer appearance, as well as with an article having a surface layer formed from such fluorinated ether compound.

Patent Document 11 describes a fluoropolyether-group-containing polymer that is capable of forming a cured coating having excellent water/oil-repellent property and abrasion resistance, as well as a surface treatment agent that contains the fluoropolyether-group-containing polymer and/or a partial (hydrolytic) condensate thereof.

### PRIOR ART DOCUMENTS

### PATENT DOCUMENTS

Patent Document 1: JP 2008-534696 A
Patent Document 2: JP 2008-537557 A
Patent Document 3: JP 2012-072272 A
Patent Document 4: JP 2012-157856 A
Patent Document 5: JP 2013-136833 A
Patent Document 6: JP 2015-199906 A
Patent Document 7: WO 2017/212850 A1
Patent Document 8: WO 2017/141707 A1
Patent Document 9: US 2019/002635 A1
Patent Document 10: US 10 829 666 B2
Patent Document 11: EP 3 715 399 A1

### SUMMARY OF INVENTION

### TECHNICAL PROBLEM

An object of the invention, which has been made under the above-mentioned circumstances, is to provide a fluoropolyether group-containing polymer capable of forming a cured film having improved water/oil repellency and abrasion resistance, a surface treating agent comprising the polymer and/or a partial (hydrolytic) condensate thereof, and an article having a surface treated with the surface treating agent.

### SOLUTION TO PROBLEM

Making extensive investigations to attain the above object, the inventor has found that among the foregoing fluoropolyether group-containing polymers, a fluoropolyether group-containing polymer having a hydroxyl group or hydrolyzable group and a polyether group, represented by the general formula (1), shown below, is effective in that a surface treating agent comprising the polymer and/or a partial (hydrolytic) condensate thereof is capable of forming a cured film having improved water/oil repellency, improved abrasion resistance against erasers, and improved abrasion resistance against steel wool. The present invention is predicated on this finding and is defined in the claims.

In a first aspect, the present invention thus provides a fluoropolyether group-containing polymer as defined in claim 1. The fluoropolyether group-containing polymer has a hydroxyl group or hydrolyzable group and a polyether group and is represented by the general formula (1): 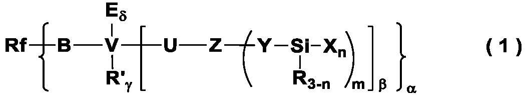
wherein Rf is a mono- or divalent fluoropolyether group,
B is independently a divalent organic group which is selected from the group consisting of a C₁-C₁₀ alkylene group, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms, a carbonyl group, and an amide group, and may contain at least one of an oxygen atom, a sulfur atom, a secondary amine, a tertiary amine, a ketone, an amide, and an ester group,
V is independently a carbon atom, silicon atom, nitrogen atom, or tri- to octavalent organic group,
E is independently a monovalent group represented by - W'(-(LO)ₖ-R")_{f}', wherein W' is a single bond, oxygen atom, X', or divalent or trivalent group which is a combination of X' and an oxygen atom, X' is a divalent or trivalent group having a C₁-C₂₀ divalent hydrocarbon moiety which may contain a nitrogen atom, silicon atom, siloxane bond, silalkylene bond, or silarylene bond, or amide group, L is independently a C₁-C₄ alkylene group, k is an integer of 1 to 20, R" is a C₁-C₄ alkyl group or a phenyl group, and f' is 1 or 2,
R' is independently a hydrogen atom, hydroxyl group, C₁-C₄ alkyl group, phenyl group, C₁-C₄ alkoxy group, or halogen group,
U is independently a single bond or divalent organic group,
Z is independently a single bond, carbon atom, silicon atom, nitrogen atom, or tri- to octavalent organic group,
Y is independently a divalent hydrocarbon group which may contain at least one selected from an oxygen atom, a sulfur atom, a silicon atom, and a siloxane bond,
R is independently a C₁-C₄ alkyl group or a phenyl group,
X is independently a hydroxyl group or hydrolyzable group,
n is independently an integer of 1 to 3 for each silicon atom to be bonded,
m is independently an integer of 1 to 7,
α is 1 or 2,
β is independently an integer of 1 to 6,
γ is independently 0 or 1,
δ is independently 1 or 2, and
the sum of β, γ, and δ is independently an integer of 2 to 7 for each V to be bonded.

In a second aspect, the present invention provides a surface treating agent as defined in claim 11. The surface treating agent comprises the fluoropolyether group-containing polymer of the first aspect and/or a partial (hydrolytic) condensate thereof.

### ADVANTAGEOUS EFFECTS OF INVENTION

The fluoropolyether group-containing polymer having a hydroxyl group or hydrolyzable group and a polyether group of the present invention has a polyether group in a predetermined structure in the molecule, thereby improving substrate adhesion and wettability, and thus an article having a surface treated with a surface treating agent comprising the polymer and/or a partial (hydrolytic) condensate thereof is excellent in water/oil repellency, abrasion resistance against erasers, and abrasion resistance against steel wool.

### DESCRIPTION OF EMBODIMENTS

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalents" implies a range from 0.015 equivalents to 0.024 equivalents. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C. In the present invention, the "partial (hydrolytic) condensate" refers to a partial condensate or a partial hydrolytic condensate.

The fluoropolyether group-containing polymer having a fluoropolyether group and a reactive functional group and having a polyether group in the molecule of the present invention is a fluoropolyether group-containing polymer having a hydroxyl group or hydrolyzable group and a polyether group, represented by the general formula (1): 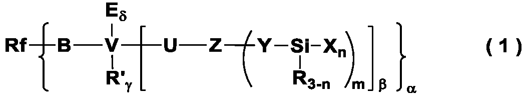 wherein Rf is a mono- or divalent fluoropolyether group, B is independently a divalent organic group, V is independently a carbon atom, silicon atom, nitrogen atom, or tri- to octavalent organic group, E is independently a monovalent group having an oxyalkylene group, R' is independently a hydrogen atom, hydroxyl group, C₁-C₄ alkyl group, phenyl group, C₁-C₄ alkoxy group, or halogen group, U is independently a single bond or divalent organic group, Z is independently a single bond, carbon atom, silicon atom, nitrogen atom, or tri- to octavalent organic group, Y is independently a divalent hydrocarbon group which may contain at least one selected from an oxygen atom, a sulfur atom, a silicon atom, and a siloxane bond, R is independently a C₁-C₄ alkyl group or a phenyl group, X is independently a hydroxyl group or hydrolyzable group, n is independently an integer of 1 to 3 for each silicon atom to be bonded, m is independently an integer of 1 to 7, α is 1 or 2, β is independently an integer of 1 to 6, γ is independently 0 or 1, δ is independently 1 or 2, and the sum of β, γ, and δ is independently an integer of 2 to 7 for each V to be bonded.

The fluoropolyether group-containing polymer having a hydroxyl group or hydrolyzable group and a polyether group of the present invention has a structure in which a mono- or divalent fluoropolyether group and a hydrolyzable silyl group such as an alkoxysilyl group or hydroxyl group-containing silyl group are bonded via a linking group, thereby improving substrate adhesion and wettability, and is excellent in water/oil repellency, abrasion resistance against erasers, and abrasion resistance against steel wool.

In the formula (1), Rf is a mono- or divalent fluoropolyether group, which is preferably a monovalent fluoropolyether group having the general formula (2) below when α is 1 (i.e., Rf is a monovalent fluorooxyalkylene group-containing polymer residue), or a divalent fluoropolyether group having the general formula (3) below when α is 2 (i.e., Rf is a divalent fluorooxyalkylene group-containing polymer residue). 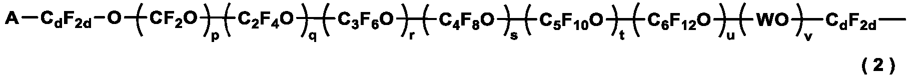 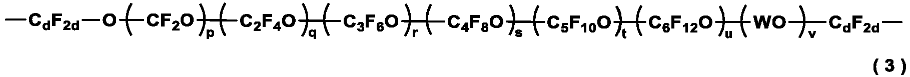 wherein A is a fluorine atom, hydrogen atom, or fluoroalkyl group terminated with a -CF₃ group, W is a fluoroalkylene group containing at least one hydrogen atom, d is independently an integer of 1 to 3 for each unit, p, q, r, s, t, u, and v are each an integer of 0 to 200, p + q + r + s + t + u + v is 3 to 200, each of the units may be linear or branched, and individual repeating units within the parentheses with p, q, r, s, t, u, and v may be randomly bonded.

In the formula (2), A is a fluorine atom, hydrogen atom, or fluoroalkyl group terminated with a -CF₃ group, and is preferably a fluorine atom.

In formulae (2) and (3), W is a fluoroalkylene group containing at least one hydrogen atom, examples of which include perfluoroalkylene groups such as CF₂, C₂F₄, C₃F₆, C₄F₈, C₅F₁₀, and C₆F₁₂ units in which one or two fluorine atoms are substituted by hydrogen.

In formulae (2) and (3), d is independently for each unit an integer of 1 to 3, preferably 1 or 2.

Also, p, q, r, s, t, u, and v are each an integer of 0 to 200, p is an integer of 0 to 100, especially 5 to 100, q is an integer of 0 to 100, especially 5 to 100, r is an integer of 0 to 100, s is an integer of 0 to 100, t is an integer of 0 to 100, u is an integer of 0 to 100, v is an integer of 0 to 100, p + q + r + s + t + u + v is 3 to 200, preferably 10 to 100, preferably p + q is 10 to 105, especially 15 to 60, and preferably r = s = t = u = v = 0. When p + q + r + s + t + u + v is not more than the upper limit, adhesion and curability are satisfactory, and when the same is not less than the lower limit, the characteristics of fluoropolyether group are fully developed.

In formulae (2) and (3), each unit may be linear or branched. Also, individual repeating units within the parentheses with p, q, r, s, t, u, and v may be randomly bonded.

Examples of Rf are shown below.

CF₃O(CF₂O)_{p'}CF₂-

CF₃O(CF₂O)_{p'}(CF₂CF₂O)_{q'}CF₂-

CF₃O(CF₂O)_{p'}(CF₂CF₂CF₂CF₂O)_{s'}CF₂-

CF₃O(CF₂O)_{p'}(CF₂CF₂CF₂CF₂O)_{s'}CF₂CF₂-

CF₃O(CF₂O)_{p'}(CF₂CF₂O)_{q'}(CF₂CF₂CF₂O)_{r'}CF₂-

CF₃O(CF₂O)_{p'}(CF₂CF₂O)_{q'}(CF₂CF₂CF₂O)_{r'}CF₂CF₂-

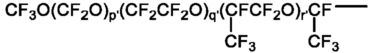

CF₃O(CF₂O)_{p'}(CF₂CF₂O)_{q'}(CF₂CF₂CF₂CF₂O)_{s'}CF₂-

CF₃O(CF₂O)_{p'}(CF₂CF₂O)_{q'}(CF₂CF₂CF₂O)_{r'}(CF₂CF₂CF₂CF₂O)_{s'}CF₂-

CF₃O(CF₂O)_{p'}(CF₂CF₂O)_{q'}(CF₂CF₂CF₂O)_{r'}(CF₂CF₂CF₂CF₂O)_{s'}(CF₂CF₂CF₂CF₂CF₂O)_{t'}CF₂-

CF₃O(CF₂O)_{p'}(CF₂CF₂O)_{q'}(CF₂CF₂CF₂O)_{r'}(CF₂CF₂CF₂CF₂O)_{s'}(CF₂CF₂CF₂CF₂CF₂O)_{t'}(CF₂CF₂CF₂CF₂CF₂CF₂O)_{u'}CF₂-

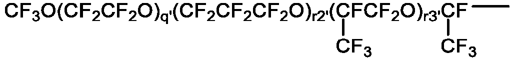

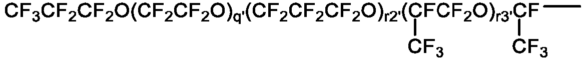

CF₃O(CF₂CF₂O)_{q'}CF₂-

CF₃O(CF₂CF₂CF₂O)_{r'}CF₂CF₂-

CF₃CF₂CF₂O(CF₂CF₂CF₂O)_{r'}CF₂CF₂-

CF₃O(CF₂CF₂O)_{q'}(CF₂CF₂CF₂CF₂O)_{s'}CF₂CF₂CF₂-

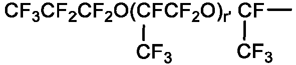

CF₃OCF₂CF₂CF₂OCF₂CFHOCH₂CF₂O(CF₂O)_{p'}(CF₂CF₂O)_{q'}CF₂-

CF₃CF₂CF₂OCFHCF₂OCH₂CF₂O(CF₂O)_{p'}(CF₂CF₂O)_{q'}CF₂-

-CF₂O(CF₂O)_{p'}CF₂-

-CF₂O(CF₂O)_{p'}(CF₂CF₂O)_{q'}CF₂-

-CF₂O(CF₂O)_{p'}(CF₂CF₂O)_{q'}(CF₂CF₂CF₂O)_{r'}CF₂-

-CF₂O(CF₂O)_{p'}(CF₂CF₂O)_{q'}(CF₂CF₂CF₂CF₂O)_{s'}CF₂-

-CF₂O(CF₂O)_{p'}(CF₂CF₂O)_{q'}(CF₂CF₂CF₂O)_{r'}(CF₂CF₂CF₂CF₂O)_{s'}CF₂-

-CF₂CF₂O(CF₂CF₂CF₂O)_{r'}CF₂CF₂-

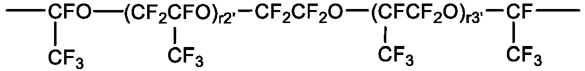

wherein p', q', r', s', t', and u' are each an integer of at least 1, their upper limit is the same as the upper limit of p, q, r, s, t, and u, and the sum of p', q', r', s', t', and u' is 3 to 200, r2' and r3' are each an integer of at least 1, and the sum of r2' and r3' is 2 to 199. Also, individual repeating units within the parentheses with p', q', r', s', t', and u' may be randomly bonded.

In the formula (1), B is independently a divalent organic group, and is a linking group connecting an Rf group and a V group. The divalent organic group is a group selected from the group consisting of a C₁-C₁₀ alkylene group, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms, a carbonyl group, and an amide group, and the divalent organic group may contain at least one of an oxygen atom, a sulfur atom, a secondary amine, a tertiary amine, a ketone, an amide, and an ester group. When B is a divalent organic group, flexibility can be imparted between the Rf group and the branched group V having a polyether moiety, and the mobility of the molecule is increased, so that durability to abrasion is improved.

As the moiety bonded to a silicon atom of the diorganosilylene moiety, silalkylene structure, silarylene structure, or organopolysiloxane residue, an alkyl moiety of 1 to 8, preferably of 1 to 4 carbon atoms such as a methyl, ethyl, propyl, or butyl, or phenyl is preferable. The alkylene moiety in the silalkylene structure is preferably of 2 to 6, preferably of 2 to 4 carbon atoms, for example, an ethylene, propylene (trimethylene, methylethylene), or butylene (tetramethylene, methylpropylene).

Examples of such B include the following groups. In the structures, the left valence bond is bonded to Rf, and the right valence bond is bonded to V. 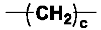 -(CH₂)ₐ-O-(CH₂)_{b}- -(CH₂)ₐ-O- 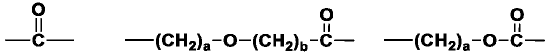 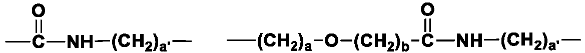 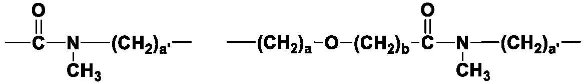 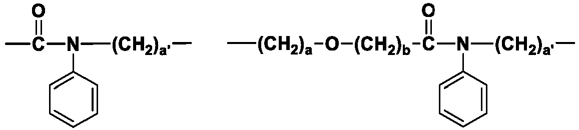 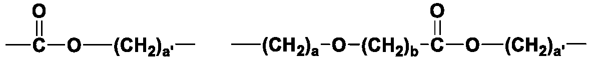 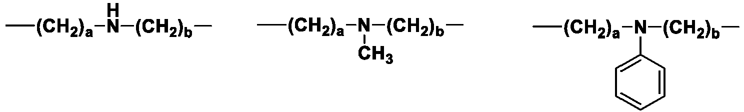 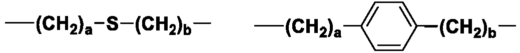 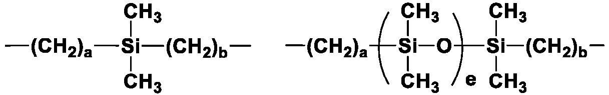 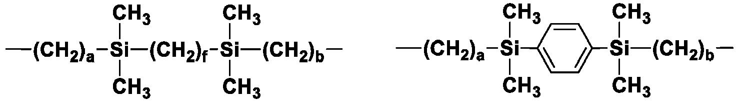 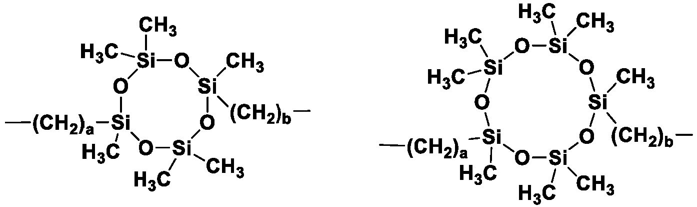 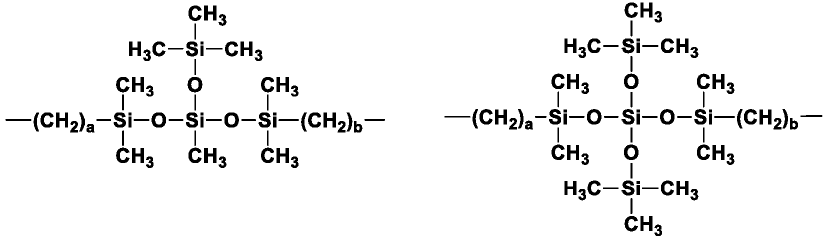 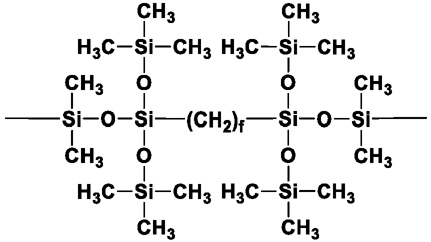 wherein f is an integer of 2 to 4, a, a', and b are each an integer of 1 to 4, c is an integer of 1 to 10, and e is an integer of 1 to 9.

In the formula (1), V is independently a carbon atom, silicon atom, nitrogen atom, or tri- to octavalent organic group, and is preferably a carbon atom, silicon atom, nitrogen atom, linear tri- to hexavalent organopolysiloxane residue of 2 to 10 silicon atoms, particularly 2 to 5 silicon atoms, branched or cyclic tri- to hexavalent organopolysiloxane residue of 3 to 10 silicon atoms, particularly 3 to 5 silicon atoms, trivalent isocyanuric group, or trivalent triazine ring-containing group. The organopolysiloxane residue may contain a silalkylene structure in which two silicon atoms are bonded via an alkylene moiety, that is, Si-(CH₂)ₓ-Si (x is an integer of 2 to 6 in the formula).

The organopolysiloxane residue preferably has an alkyl group of 1 to 8, preferably of 1 to 4 carbon atoms such as a methyl group, ethyl group, propyl group, or butyl group, or phenyl group.

Examples of such V include those shown below.

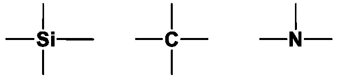

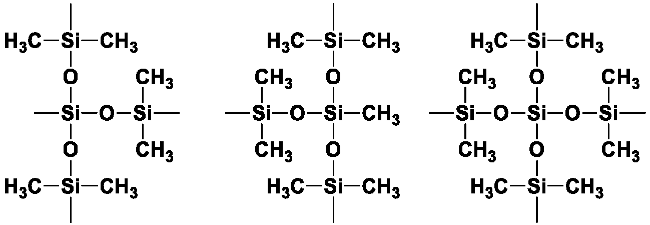

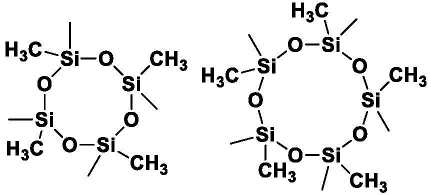

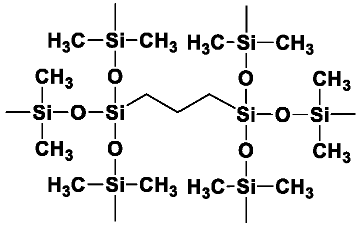

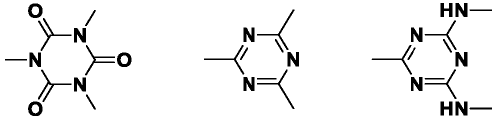

In the formula (1), E is independently a monovalent group represented by -W'(-(LO)ₖ-R")_{f'}.

W' is a single bond, oxygen atom, X', or divalent or trivalent group which is a combination of X' and an oxygen atom, X' is a divalent or trivalent group having a C₁-C₂₀ divalent hydrocarbon moiety which may contain a nitrogen atom, silicon atom, siloxane bond, silalkylene bond, or silarylene bond, or amide group, and the silicon atom preferably has an alkyl group of 1 to 8, preferably of 1 to 4 carbon atoms such as a methyl group, ethyl group, propyl group, or butyl group, or phenyl group, and may contain a hydroxyl group or hydrolyzable group. The alkylene moiety in the silalkylene bond is preferably a C₁-C₆ alkylene moiety, particularly preferably a C₂-C₄ alkylene moiety, and is preferably, for example, a methylene, ethylene, propylene (trimethylene, methylethylene), or butylene (tetramethylene, methylpropylene).

L is independently a C₁-C₄ alkylene group such as a methylene group, ethylene group, propylene group, or butylene group, and the number of carbon atoms may the same or different. k is an integer of 1 to 20, preferably an integer of 1 to 10. R" is a C₁-C₄ alkyl group such as a methyl group, ethyl group, propyl group, or butyl group, or a phenyl group. Inter alia, a methyl group is preferable. f' is 1 or 2.

Examples of such E include the following groups: 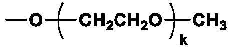 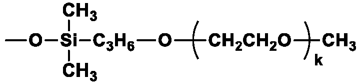 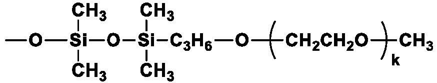 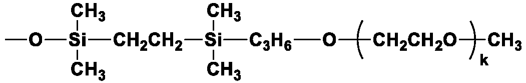 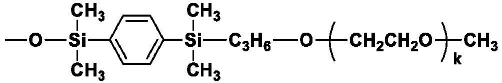 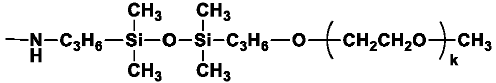 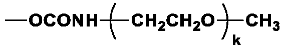 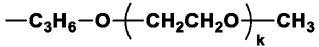 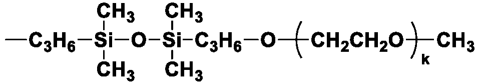 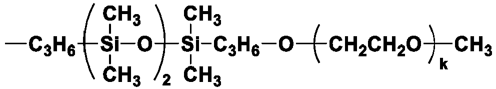 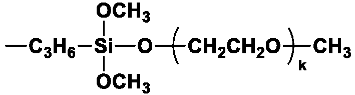 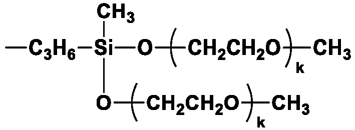 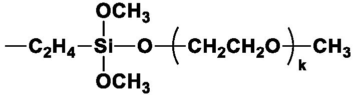 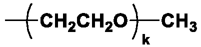 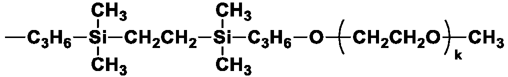 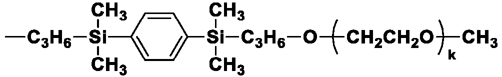 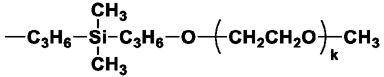 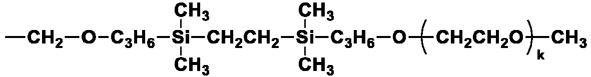 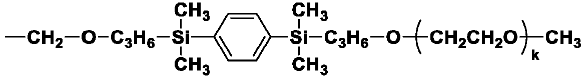 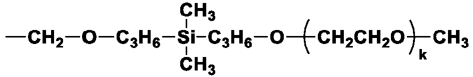 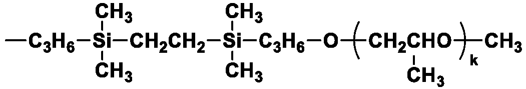 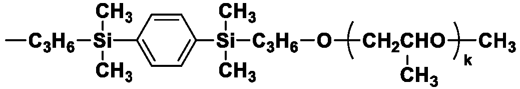 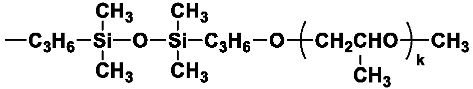 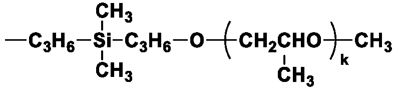 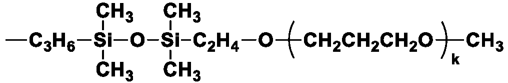 wherein k is the same as described above.

In the formula (1), R' is independently a hydrogen atom, hydroxyl group, C₁-C₄ alkyl group such as a methyl group, ethyl group, propyl group, or butyl group, phenyl group, C₁-C₄ alkoxy group such as a methoxy group, ethoxy group, propoxy group, or butoxy group, or halogen group such as fluorine, chlorine, bromine, or iodine.

In the formula (1), U is independently a single bond or divalent organic group, and is a linking group connecting a V group and a Z group. The divalent organic group is a group selected from the group consisting of a C₁-C₁₀ alkylene group, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms, and the divalent organic group may contain an oxygen atom and a sulfur atom.

As the moiety bonded to the silicon atom of the diorganosilylene moiety, silalkylene structure, silarylene structure, or organopolysiloxane residue, an alkyl moiety of 1 to 8, preferably of 1 to 4 carbon atoms such as methyl, ethyl, propyl, or butyl, or phenyl is preferable. The alkylene moiety in the silalkylene structure is preferably a C₁-C₆ alkylene, particularly preferably a C₂-C₄ alkylene, and is preferably, for example, methylene, ethylene, propylene (trimethylene, methylethylene), or butylene (tetramethylene, methylpropylene).

Examples of such U include the following groups in addition to a single bond. In the structures, the left valence bond is bonded to V, and the right valence bond is bonded to Z. 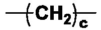 -(CH₂)ₐ-O-(CH₂)_{b}- -(CH₂)ₐ-S-(CH₂)_{b}- 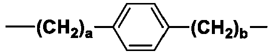 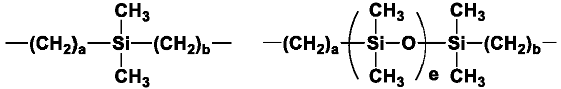 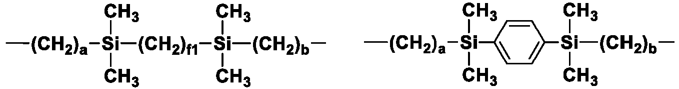 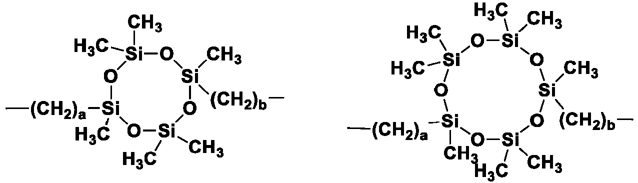 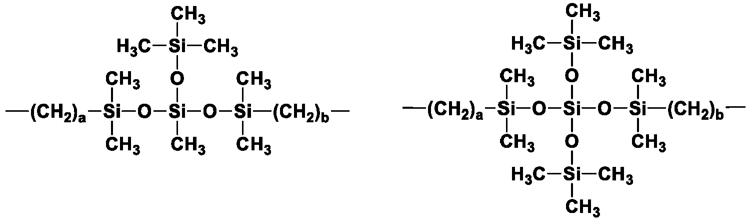 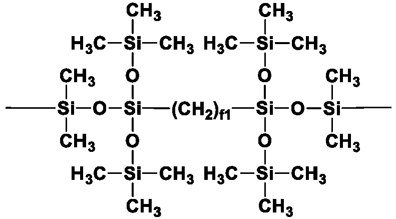 wherein f1 is an integer of 1 to 4, a and b are each an integer of 1 to 4, c is an integer of 1 to 10, and e is an integer of 1 to 9.

In the formula (1), Z is independently a single bond, carbon atom, silicon atom, nitrogen atom, or tri- to octavalent organic group, and the tri- to octavalent organic group is preferably -CH=, a linear tri- to octavalent organopolysiloxane residue of 2 to 10 silicon atoms, particularly 2 to 8 silicon atoms, or branched or cyclic tri- to hexavalent organopolysiloxane residue of 3 to 10 silicon atoms, particularly 3 to 8 silicon atoms. The organopolysiloxane residue may contain a silalkylene structure in which two silicon atoms are bonded via an alkylene moiety, that is, Si-(CH₂)ₓ-Si (x is an integer of 2 to 6 in the formula).

The organopolysiloxane residue preferably has an alkyl moiety of 1 to 8, more preferably of 1 to 4 carbon atoms such as methyl, ethyl, propyl, or butyl, or phenyl.

Examples of such Z include those shown below in addition to a single bond.

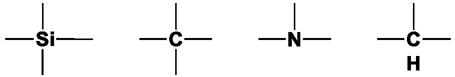

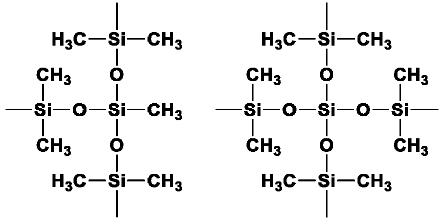

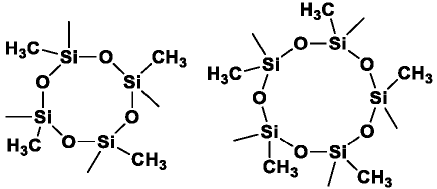

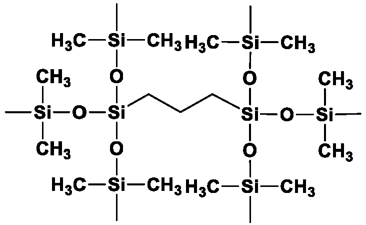

In the formula (1), Y is independently a divalent hydrocarbon group which may contain at least one selected from an oxygen atom, a sulfur atom, a silicon atom, and a siloxane bond, and preferably has 1 to 20 carbon atoms and more preferably has 2 to 20 carbon atoms, and is a linking group connecting Z moiety (or V moiety) and Si moiety. Specifically, the divalent hydrocarbon group is preferably a group selected from the group consisting of a C₁-C₁₀ alkylene group, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms, which may contain an oxygen atom or sulfur atom.

As the moiety bonded to the silicon atom of the diorganosilylene moiety, silalkylene structure, silarylene structure, or organopolysiloxane residue, an alkyl moiety of 1 to 8, preferably of 1 to 4 carbon atoms such as methyl, ethyl, propyl, or butyl, or phenyl is preferable. The alkylene moiety in the silalkylene structure is preferably a C₁-C₆ alkylene, particularly preferably a C₂-C₄ alkylene, and is preferably, for example, methylene, ethylene, propylene (trimethylene, methylethylene), or butylene (tetramethylene, methylpropylene).

Examples of such Y include the following groups. In the structures, the left valence bond is bonded to Z (or V), and the right valence bond is bonded to Si. 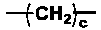 **-(CH₂)ₐ-O-(CH₂)_{b}- -(CH₂)ₐ-S-(CH₂)_{b}-** 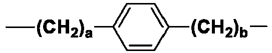 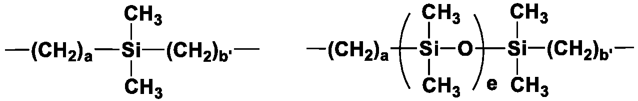 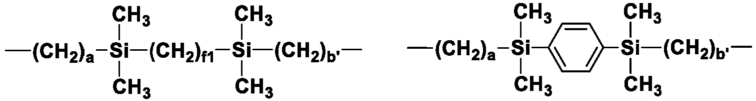 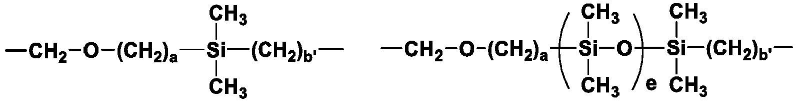 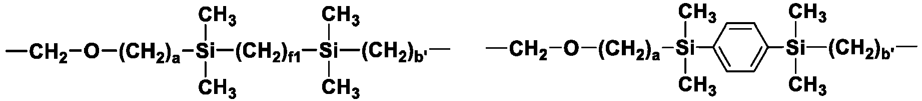 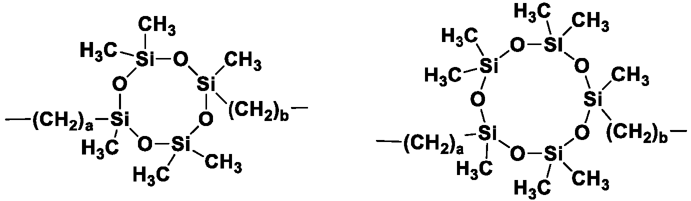 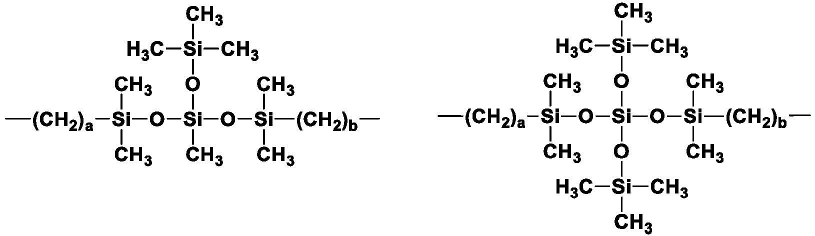 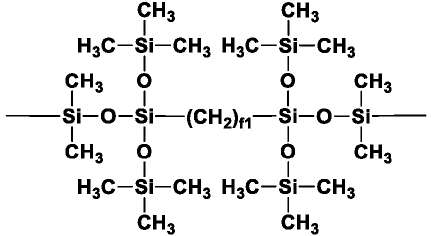 wherein f1 is an integer of 1 to 4, a and b are each an integer of 1 to 4, b' and c are each an integer of 1 to 10, and e is an integer of 1 to 9.

In the formula (1), R is independently a C₁-C₄ alkyl group such as a methyl group, ethyl group, propyl group, or butyl group, or phenyl group. Inter alia, a methyl group is preferable.

X is independently a hydroxyl group or hydrolyzable group, and examples of such X include a hydroxy group, a C₁-C₁₀ alkoxy group such as a methoxy group, an ethoxy group, a propoxy group, an isopropoxy group, and a butoxy group, a C₂-C₁₀ alkoxyalkoxy group such as a methoxymethoxy group and a methoxyethoxy group, a C₁-C₁₀ acyloxy group such as an acetoxy group, a C₂-C₁₀ alkenyloxy group such as an isopropenoxy group, and a halogen group such as a chloro group, a bromo group, and an iodo group. Inter alia, a methoxy group, an ethoxy group, an isopropenoxy group, and a chloro group are preferable.

In the formula (1), α is 1 or 2, β is independently an integer of 1 to 6, preferably 1 or 2, γ is independently 0 or 1, preferably 0, and δ is independently 1 or 2, preferably 1. The sum of β, γ, and δ is independently an integer of 2 to 7 (that is, the valence of V is -1.) for each V to be bonded.

n is independently an integer of 1 to 3, preferably 3, for each silicon atom to be bonded, and m is independently an integer of 1 to 7, preferably 1 or 3.

Examples of the method for preparing the fluoropolyether group-containing polymer having a hydroxyl group or hydrolyzable group and a polyether group when α is 1 (that is, Rf is a monovalent fluorooxyalkylene group-containing polymer residue) or α is 2 (that is, Rf is a divalent fluorooxyalkylene group-containing polymer residue) represented by the formula (1) include the following methods.

A fluoropolyether group-containing polymer having one or more polyether groups and one or more olefin sites at one molecular chain terminal or both molecular chain terminals is dissolved in a solvent, for example, a fluorine solvent such as 1,3-bis(trifluoromethyl)benzene, for example, an organosilicon compound having a SiH group and a hydroxyl group or hydrolyzable end group (a halogen atom, alkoxy group or the like) in a molecule such as trichlorosilane or trialkoxysilane is mixed, and the mixture is aged at a temperature of 40 to 120°C, preferably 60 to 100°C, more preferably about 80°C for 1 to 72 hours, preferably 20 to 36 hours, more preferably about 24 hours in the presence of a hydrosilylation catalyst, for example, a chloroplatinic acid/vinylsiloxane complex in toluene. When a SiH group-containing halogenated (organic) silicon compound such as trichlorosilane is used as the organosilicon compound having a SiH group and a hydroxyl group or hydrolyzable end group in the molecule, the substituent (halogen atom) on the silyl group may be then converted to, for example, an alkoxy group such as a methoxy group as another hydrolyzable group. As the organosilicon compound having a SiH group and a hydroxyl group or hydrolyzable end group in the molecule, two different compounds can be used, and in this case, compounds having different Y moieties in the formula (1) can be produced by stepwise addition.

In the preparation of the fluoropolyether group-containing polymer having a hydroxyl group or hydrolyzable group and a polyether group, represented by the formula (1), examples of the fluoropolyether group-containing polymer having one or more polyether groups and one or more olefin sites at one molecular chain terminal or both molecular chain terminals can include a fluoropolyether group-containing polymer represented by the general formula (4): 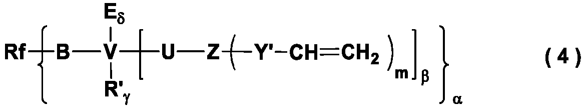 wherein Rf, B, V, R', E, U, Z, α, β, γ, δ, and m are the same as described above, and Y' is independently a single bond or divalent hydrocarbon group which may contain at least one selected from an oxygen atom, a sulfur atom, a silicon atom, and a siloxane bond.

In the formula (4), Y' is independently a single bond or divalent hydrocarbon group which may contain at least one selected from an oxygen atom, a sulfur atom, a silicon atom, and a siloxane bond, and preferably has 1 to 18 carbon atoms, and specifically, the divalent hydrocarbon group is preferably a group selected from the group consisting of a C₁-C₈ alkylene group, an alkylene group having a C₆-C₈ arylene moiety, a divalent group having alkylene moieties bonded to a diorganosilylene moiety, silalkylene structure, or silarylene structure, and a divalent group having a C₁-C₈ alkylene moiety bonded to the valence bond of a linear organopolysiloxane residue of 2 to 10 silicon atoms, or the valence bond of a branched or cyclic organopolysiloxane residue of 3 to 10 silicon atoms, which may contain an oxygen atom or sulfur atom. Y' is preferably a C₁-C₆ linear alkylene group.

Examples of the fluoropolyether group-containing polymer represented by the formula (4) include the following. 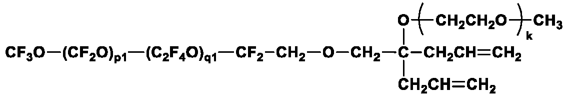 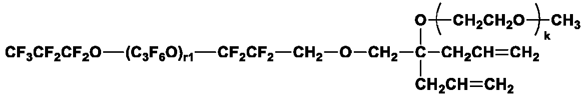 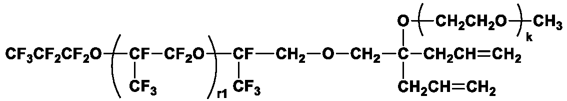 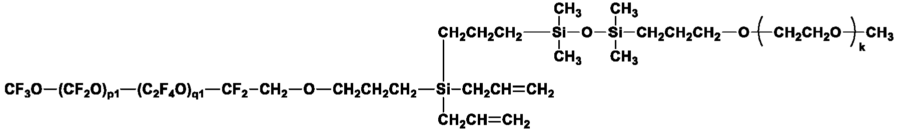 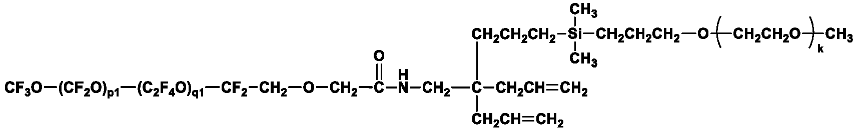 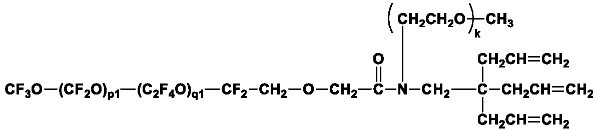 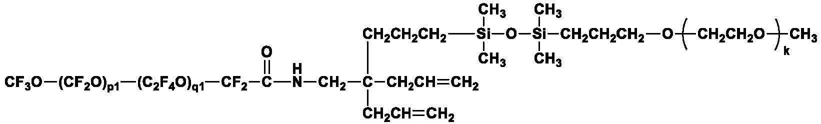 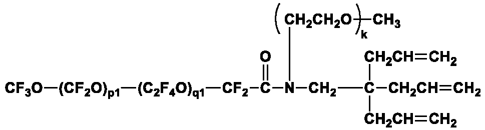 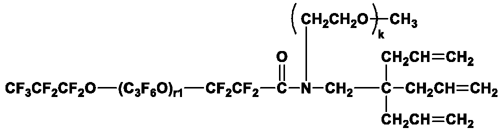 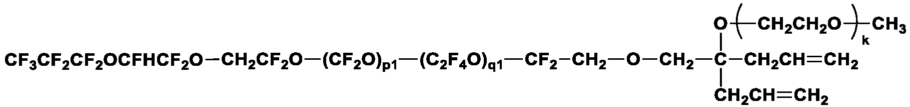 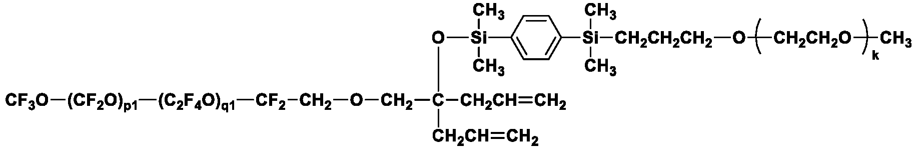 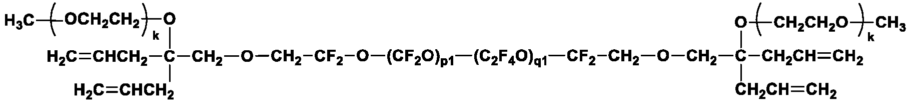 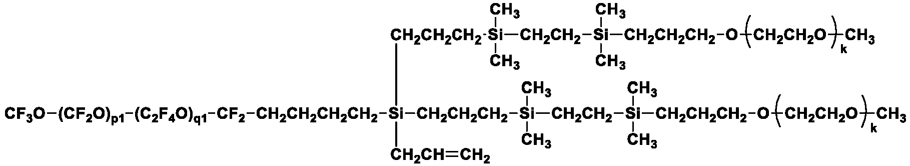 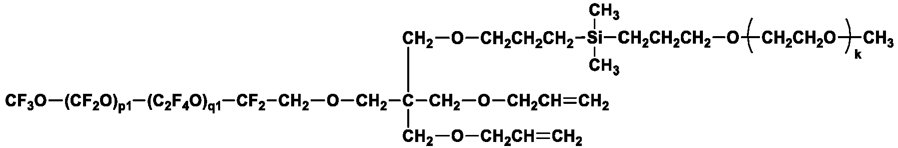 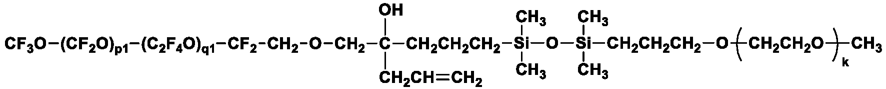 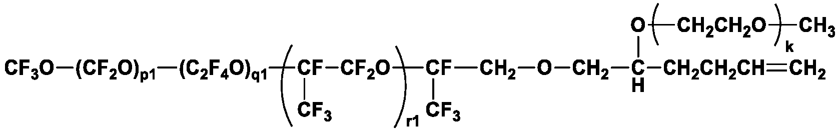 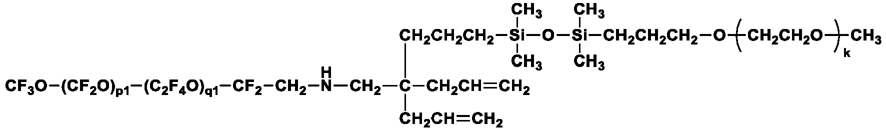 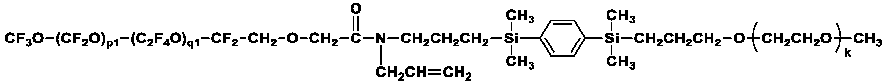 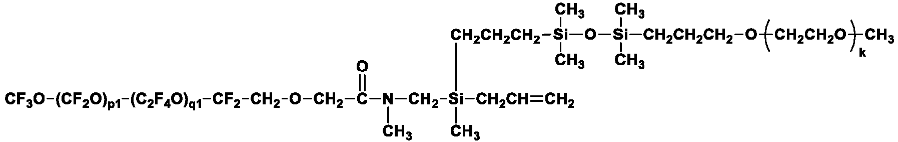 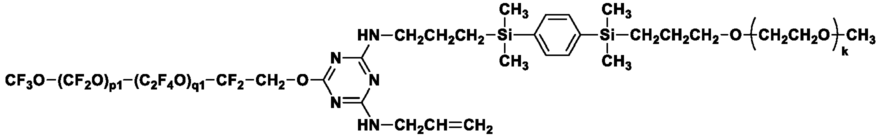 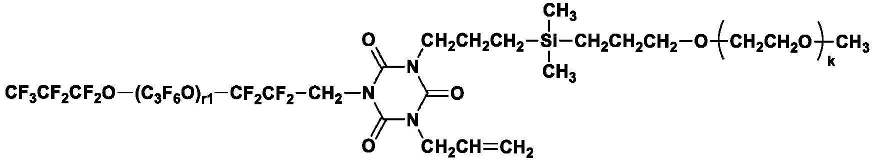 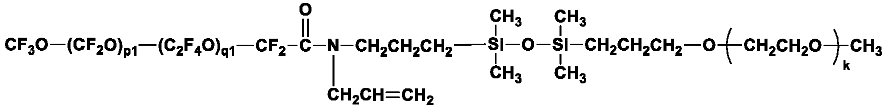 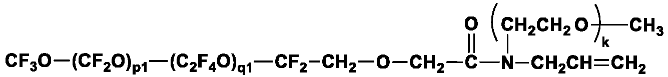 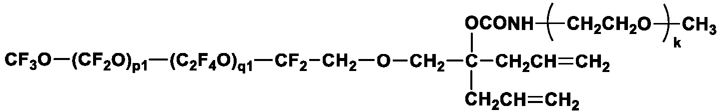 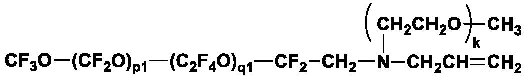 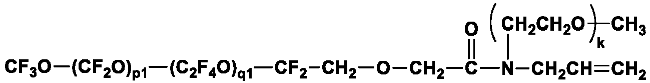 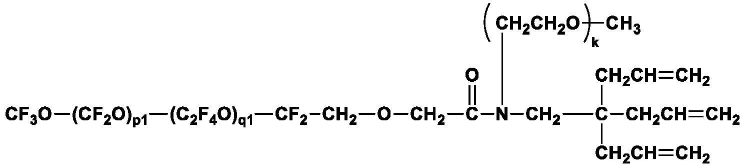 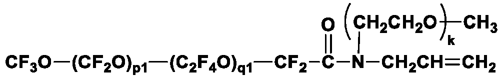 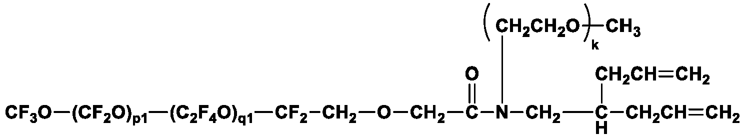 wherein k is the same as described above, p1, q1, and r1 are each an integer of at least 1, the upper limit thereof is the same as the upper limit of p, q, and r described above, and the sum of p1, q1, and r1 in each formula is 3 to 200, and individual repeating units within the parentheses with p1 and q1 may be randomly bonded.

As a method for producing the fluoropolyether group-containing polymer represented by the formula (4), for example, a fluoropolyether group-containing polymer having one or more hydroxyl groups or amino groups and one or more olefin sites at one molecular chain terminal or both molecular chain terminals and a polyether group-introducing agent are used, and aging is performed at a temperature of 0 to 90°C, preferably 50 to 80°C, more preferably about 60°C, for 1 to 48 hours, preferably 10 to 40 hours, more preferably about 24 hours, in the presence of a base, using an additive or solvent for improving reactivity as necessary.

Specific examples of the fluoropolyether group-containing polymer having one or more hydroxyl groups or amino groups and one or more olefin sites at one molecular chain terminal or both molecular chain terminals used for preparing the fluoropolyether group-containing polymer represented by the formula (4) include those shown below. 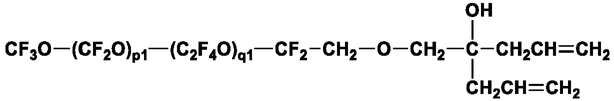 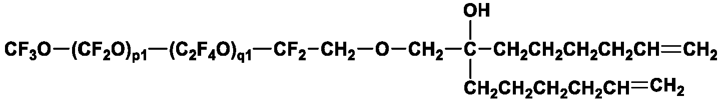 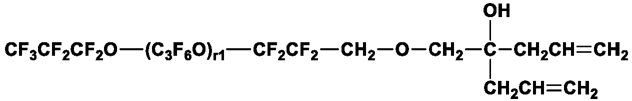 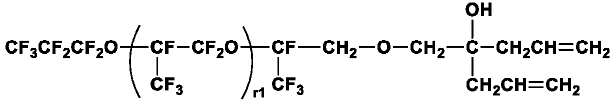 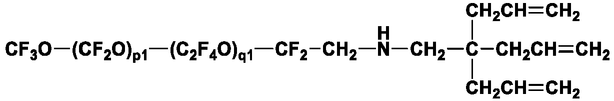 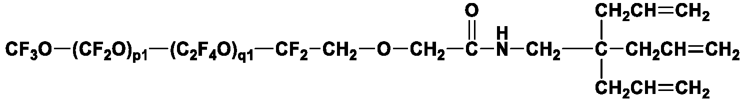 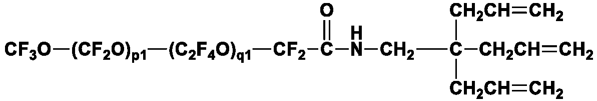 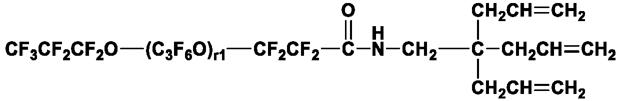 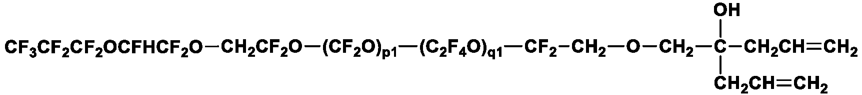 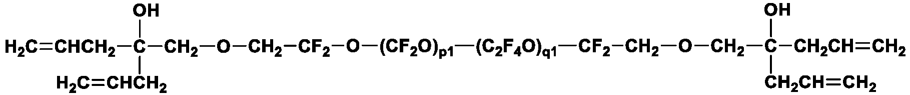 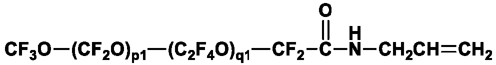 wherein the sum of p1, q1, r1, p1, and q1 is the same as described above, and individual repeating units within the parentheses with p1 and q1 may be randomly bonded.

As the polyether group-introducing agent used for preparing the fluoropolyether group-containing polymer represented by the formula (4), for example, a polyether halide can be used, and specific examples thereof include 2-bromoethyl methyl ether, ethylene glycol 2-bromoethyl methyl ether, diethylene glycol 2-bromoethyl methyl ether, and triethylene glycol 2-bromoethyl methyl ether.

The amount of the polyether group-introducing agent used can be 1 to 15 equivalents, more preferably 3 to 9 equivalents, and still more preferably about 6 equivalents per 1 equivalent of the reactive end group of the fluoropolyether group-containing polymer having one or more hydroxyl groups or amino groups and one or more olefin sites at one molecular chain terminal or both molecular chain terminals.

Examples of the base used for preparing the fluoropolyether group-containing polymer represented by the formula (4) include an amine and an alkali metal base. Specific examples of the amine include triethylamine, diisopropylethylamine, pyridine, DBU, and imidazole. Examples of the alkali metal base include sodium hydroxide, potassium hydroxide, sodium hydride, potassium hydride, alkyl lithium, t-butoxy potassium, lithium diisopropylamide, lithium bis(trimethylsilyl)amide, sodium bis(trimethylsilyl)amide, and potassium bis(trimethylsilyl) amide.

The amount of the base used can be 1 to 15 equivalents, more preferably 3 to 9 equivalents, and still more preferably about 6 equivalents per 1 equivalent of the reactive end group of the fluoropolyether group-containing polymer having one or more hydroxyl groups or amino groups and one or more olefin sites at one molecular chain terminal or both molecular chain terminals.

**In** the preparation of the fluoropolyether group-containing polymer represented by the formula (4), a tetrabutylammonium halide, alkali metal halide or the like may be used as an additive for improving reactivity in the reaction between the fluoropolyether group-containing polymer having one or more hydroxyl groups or amino groups and one or more olefin sites at one molecular chain terminal or both molecular chain terminals and the polyether group-introducing agent. Specific examples of the additive include tetrabutylammonium chloride, tetrabutylammonium bromide, tetrabutylammonium iodide, tetrabutylammonium hydrogen sulfate, sodium iodide, potassium iodide, cesium iodide, and crown ether. These additives are catalytically halogen-exchanged with the olefin-introducing agent in the reaction system to improve the reactivity, and the crown ether is coordinated to the metal to improve the reactivity.

The amount of the additive used can be 0.005 to 0.1 equivalents, more preferably 0.01 to 0.05 equivalents, and still more preferably about 0.02 equivalents per 1 equivalent of the reactive end group of the fluoropolyether group-containing polymer having one or more hydroxyl groups or amino groups and one or more olefin sites at one molecular chain terminal or both molecular chain terminals.

In the preparation of the fluoropolyether group-containing polymer represented by the formula (4), a solvent may be used for the reaction between the fluoropolyether group-containing polymer having one or more hydroxyl groups or amino groups and one or more olefin sites at one molecular chain terminal or both molecular chain terminals and the polyether group-introducing agent. The solvent is not necessarily used, and examples of the solvent used include a fluorine-containing aromatic hydrocarbon solvent such as 1,3-bis(trifluoromethyl)benzene or trifluoromethylbenzene, a hydrofluoroether (HFE) solvent (manufactured by 3M, trade name: Novec series) such as 1,1,1,2,3,4,4,5,5,5-decafluoro-3-methoxy-2-(trifluoromethyl)pentane, and a perfluoro solvent composed of a completely fluorinated compound (manufactured by 3M, trade name: fluorinert series) as fluorine solvents. Furthermore, dimethylformamide, dimethylacetamide, dimethylsulfoxide, acetonitrile, THF and the like can be used as an organic solvent.

When a solvent is used, the amount of the solvent used can be 10 to 300 parts by weight, preferably 30 to 150 parts by weight, and still more preferably about 50 parts by weight per 100 parts by weight of the fluoropolyether group-containing polymer having one or more hydroxyl groups or amino groups and one or more olefin sites at one molecular chain terminal or both molecular chain terminals.

As another method of the method for producing a fluoropolyether group-containing polymer represented by the formula (4) (production method 2), for example, a fluoropolyether group-containing polymer having one or more hydroxyl groups or amino groups and one or more olefin sites at one molecular chain terminal or both molecular chain terminals and an organosilicon compound having two or more SiH groups in the molecule are used, and dehydrogenation is performed at 0 to 60°C, preferably 15 to 35°C, more preferably about 25°C for 10 minutes to 24 hours, preferably 30 minutes to 2 hours, more preferably about 1 hour in the presence of a dehydrogenation catalyst and using a solvent as necessary to obtain a fluoropolyether group-containing polymer having one or more SiH groups and one or more olefin sites at one molecular chain terminal or both molecular chain terminals.

Subsequently, the fluoropolyether group-containing polymer having one or more SiH groups and one or more olefin sites at one molecular chain terminal or both molecular chain terminals, and a polyether compound having an olefin site in the molecule (for example, polyalkylene oxide compound blocked at one molecular chain terminal with an alkenyloxy group or the like) are dissolved in a solvent, for example, a fluorine solvent such as 1,3-bis(trifluoromethyl)benzene, and the mixture is aged at a temperature of 40 to 120°C, preferably 60 to 100°C, more preferably about 80°C for 1 to 72 hours, preferably 20 to 36 hours, more preferably about 24 hours in the presence of a hydrosilylation catalyst, for example, a chloroplatinic acid/vinylsiloxane complex in toluene.

Examples of the fluoropolyether group-containing polymer having one or more hydroxyl groups or amino groups and one or more olefin sites at one molecular chain terminal or both molecular chain terminals used in the preparation of the fluoropolyether group-containing polymer represented by the formula (4) (production method 2) include the same as the fluoropolyether group-containing polymer having one or more hydroxyl groups or amino groups and one or more olefin sites at one molecular chain terminal or both molecular chain terminals exemplified above.

As the organosilicon compound having two or more SiH groups in the molecule used in the preparation of the fluoropolyether group-containing polymer represented by the formula (4) (production method 2), compounds represented by the general formulas (5) to (7) are preferable. 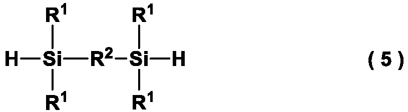 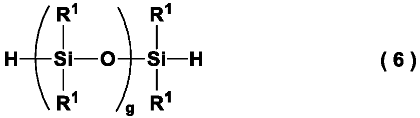 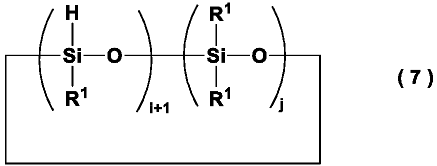 wherein R¹ is an alkyl group of 1 to 8, preferably of 1 to 4 carbon atoms such as a methyl group, ethyl group, propyl group, or butyl group, or phenyl group, R¹ may be the same or different, R² is an alkylene group of 2 to 6, preferably 2 to 4 carbon atoms such as an ethylene group, propylene group (trimethylene group, methylethylene group), or butylene group (tetramethylene group, methylpropylene group), or C₆-C₈ arylene group such as a phenylene group, g is an integer of 1 to 9, preferably 1 to 4, i is 2 or 3, j is an integer of 0 to 7, preferably 0 or 1, i + j is an integer of 2 to 9, and in the formula (7), individual repeating units within the parentheses may be randomly bonded.

Examples of such an organosilicon compound having two or more SiH groups in the molecule include those shown below.

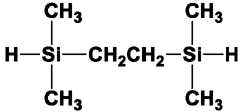

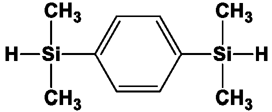

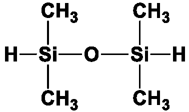

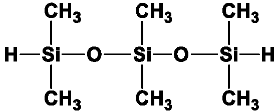

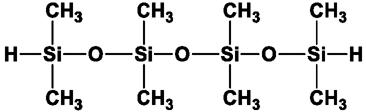

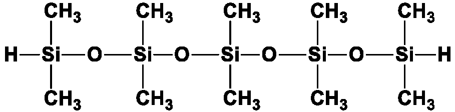

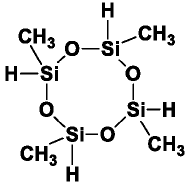

In the preparation of the fluoropolyether group-containing polymer represented by the formula (4) (production method 2), the amount of the organosilicon compound having two or more SiH groups in the molecule used can be 5 to 30 equivalents, more preferably 7 to 20 equivalents, and still more preferably about 8 to 12 equivalents per 1 equivalent of the reactive end group of the fluoropolyether group-containing polymer having one or more hydroxyl groups or amino groups and one or more olefin sites at one molecular chain terminal or both molecular chain terminals.

As the dehydrogenation catalyst used in the preparation of the fluoropolyether group-containing polymer represented by the formula (4) (production method 2), for example, a platinum group metal based catalyst such as rhodium, palladium, or ruthenium, a boron catalyst and the like can be used, and specific examples thereof include a platinum group metal catalyst such as tetrakis(triphenylphosphine)palladium or chlorotris(triphenylphosphine)rhodium, and a boron catalyst such as tris(pentafluorophenyl)borane.

The amount of the dehydrogenation catalyst used can be 0.0005 to 0.01 equivalents, more preferably 0.001 to 0.007 equivalents per 1 equivalent of the reactive end group of the fluoropolyether group-containing polymer having one or more hydroxyl groups or amino groups and one or more olefin sites at one molecular chain terminal or both molecular chain terminals.

In the preparation of the fluoropolyether group-containing polymer represented by the formula (4) (production method 2), examples of the polyether compound having an olefin site in the molecule, which is reacted with the obtained fluoropolyether group-containing polymer having one or more SiH groups and one or more olefin sites at one molecular chain terminal or both molecular chain terminals, include a polyalkylene oxide compound blocked at one molecular chain terminal with an alkenyloxy group such as polyethylene oxide blocked at one molecular chain terminal with an allyloxy group and blocked at the other molecular chain terminal with a methoxy group, shown below. 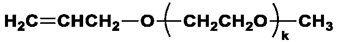 wherein k is the same as described above.

Specific examples of the polyether compound having an olefin site in the molecule such as a polyalkylene oxide compound blocked at one molecular chain terminal with an alkenyloxy group include UNIOX MA-200, UNIOX MA-300, UNIOX MA-350S, and UNIOX MA-500 manufactured by NOF CORPORATION.

The amount of the polyether compound having an olefin site in the molecule used can be 1 to 10 equivalents, more preferably 2 to 5 equivalents, and still more preferably about 3 equivalents per 1 equivalent of the SiH group of the fluoropolyether group-containing polymer having one or more SiH groups and one or more olefin sites at one molecular chain terminal or both molecular chain terminals.

In the preparation of the fluoropolyether group-containing polymer represented by the formula (4) (production method 2), examples of the hydrosilylation catalyst in reaction between the fluoropolyether group-containing polymer having one or more SiH groups and one or more olefin sites at one molecular chain terminal or both molecular chain terminals and the polyether compound having an olefin site in the molecule include a platinum group metal based catalyst such as platinum black, chloroplatinic acid, alcohol-modified chloroplatinic acid, a complex of chloroplatinic acid with olefin, aldehyde, vinyl siloxane, or acetylene alcohol, tetrakis(triphenylphosphine)palladium, or chlorotris(triphenylphosphine)rhodium. Inter alia, a platinum compound such as a vinyl siloxane coordination compound is preferable.

The amount of the hydrosilylation catalyst used is 0.1 to 100 ppm, more preferably 0.5 to 50 ppm in terms of transition metal (weight) per the weight of the fluoropolyether group-containing polymer having one or more SiH groups and one or more olefin sites at one molecular chain terminal or both molecular chain terminals.

In the preparation of the fluoropolyether group-containing polymer represented by the formula (4) (production method 2), a fluorine solvent is preferable as the solvent used, and examples of the fluorine solvent include a hydrofluoroether (HFE) solvent (manufactured by 3M, trade name: Novec series) such as 1,3-bis(trifluoromethyl)benzene, trifluoromethylbenzene, methylnonafluorobutyl ether, methylnonafluoroisobutyl ether, ethylnonafluorobutyl ether, ethylnonafluoroisobutyl ether, or 1,1,1,2,3,4,4,5,5,5-decafluoro-3-methoxy-2-(trifluoromethyl)pentane, and a perfluoro solvent composed of a completely fluorinated compound (manufactured by 3M, trade name: Fluorinert series).

The amount of the solvent used can be 10 to 300 parts by weight, preferably 50 to 150 parts by weight, and still more preferably about 100 parts by weight per 100 parts by weight of a fluoropolyether group-containing polymer having one or more hydroxyl groups or amino groups and one or more olefin sites at one molecular chain terminal or both molecular chain terminals, or a fluoropolyether group-containing polymer having one or more SiH groups and one or more olefin sites at one molecular chain terminal or both molecular chain terminals.

Further, as another method of the method for producing a fluoropolyether group-containing polymer represented by the formula (4) (production method 3), for example, a fluoropolyether group-containing polymer having one or more hydroxyl groups or amino groups and one or more olefin sites at one molecular chain terminal or both molecular chain terminals and an organosilicon compound having a SiH group and a polyether group in the molecule are used, and dehydrogenation is performed at 0 to 60°C, preferably 15 to 35°C, more preferably about 25°C for 10 minutes to 24 hours, preferably 30 minutes to 2 hours, more preferably about 1 hour in the presence of a dehydrogenation catalyst and using a solvent as necessary.

Examples of the fluoropolyether group-containing polymer having one or more hydroxyl groups or amino groups and one or more olefin sites at one molecular chain terminal or both molecular chain terminals used in the preparation of the fluoropolyether group-containing polymer represented by the formula (4) (production method 3) include the same as the fluoropolyether group-containing polymer having one or more hydroxyl groups or amino groups and one or more olefin sites at one molecular chain terminal or both molecular chain terminals exemplified above.

Examples of the organosilicon compound having a SiH group and a polyether group in the molecule used in the preparation of the fluoropolyether group-containing polymer represented by the formula (4) (production method 3), include the following. 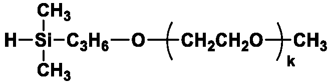 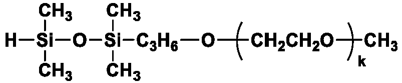 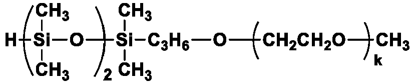 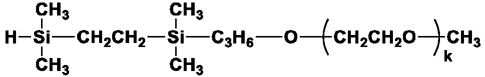 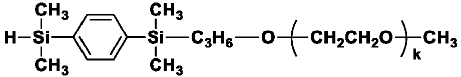 wherein k is the same as described above.

In the preparation of the fluoropolyether group-containing polymer represented by the formula (4) (production method 3), the amount of the organosilicon compound having a SiH group and a polyether group in the molecule used can be 1 to 5 equivalents, more preferably 1 to 3 equivalents per 1 equivalent of the hydroxyl group of the fluoropolyether group-containing polymer having one or more hydroxyl groups or amino groups and one or more olefin sites at one molecular chain terminal or both molecular chain terminals.

Examples of the dehydrogenation catalyst used in the preparation of the fluoropolyether group-containing polymer represented by the formula (4) (production method 3) include the same as the dehydrogenation catalyst exemplified in the above (production method 2), and the compounding amount thereof can be 0.0005 to 0.01 equivalents, more preferably 0.001 to 0.007 equivalents per 1 equivalent of the hydroxyl group of the fluoropolyether group-containing polymer having one or more hydroxyl groups or amino groups and one or more olefin sites at one molecular chain terminal or both molecular chain terminals.

Examples of the solvent used in the preparation of the fluoropolyether group-containing polymer represented by the formula (4) (production method 3) include the same as those exemplified in the above (production method 2), and the compounding amount can be 10 to 300 parts by weight, preferably 50 to 150 parts by weight, and still more preferably about 100 parts by weight per 100 parts by weight of the fluoropolyether group-containing polymer having one or more hydroxyl groups or amino groups and one or more olefin sites at one molecular chain terminal or both molecular chain terminals.

Further, as another method of the method for producing a fluoropolyether group-containing polymer represented by the formula (4) (production method 4), a fluoropolyether group-containing polymer having two or more olefin sites at one molecular chain terminal or both molecular chain terminals is used as a raw material, for example, a fluoropolyether group-containing polymer having three olefin sites at one molecular chain terminal or both molecular chain terminals is dissolved in a solvent, for example, a fluorine solvent such as 1,3-bis(trifluoromethyl)benzene, an organosilicon compound having a SiH group and a polyether group in the molecule is first mixed, for example, in an amount of 1/3 equivalent per 1 equivalent of the reactive end group (olefin sites) of the fluoropolyether group-containing polymer having three olefin sites at one molecular chain terminal or both molecular chain terminals, and, to react some of the olefin sites of the fluoropolyether group-containing polymer with the SiH group of the SiH group-containing organosilicon compound, aging is performed in the presence of a hydrosilylation catalyst, for example, a chloroplatinic acid/vinylsiloxane complex in toluene at a temperature of 40 to 120°C, preferably 60 to 100°C, more preferably about 80°C for 1 to 72 hours, preferably 20 to 36 hours, more preferably about 24 hours.

Specific examples of the fluoropolyether group-containing polymer having two or more olefin sites at one molecular chain terminal or both molecular chain terminals used in the preparation of the fluoropolyether group-containing polymer represented by the formula (4) (production method 4) include those shown below. 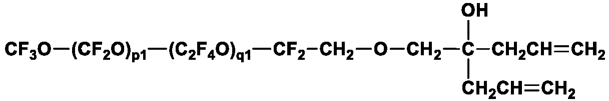 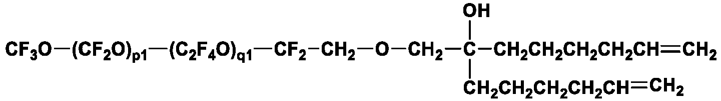 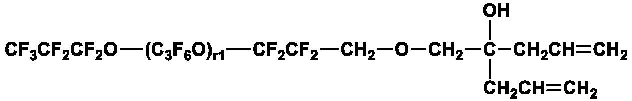 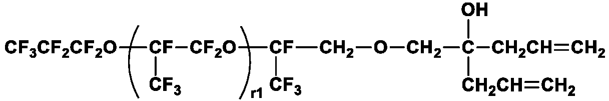 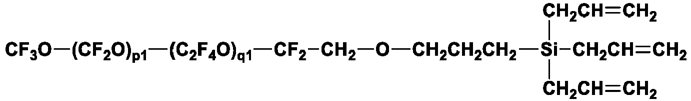 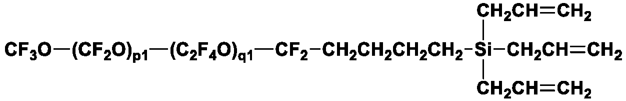 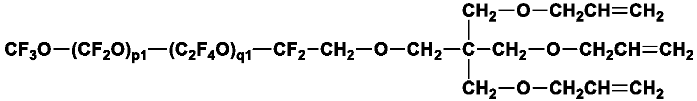 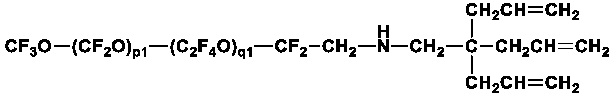 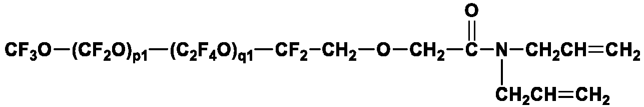 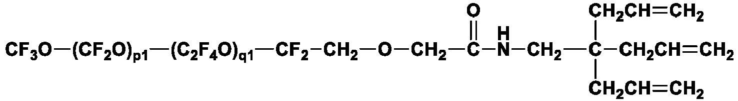 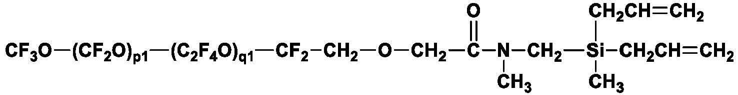 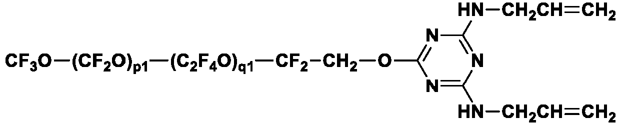 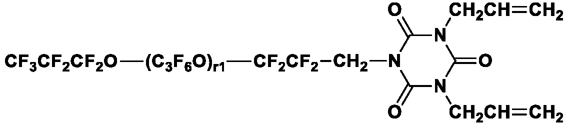 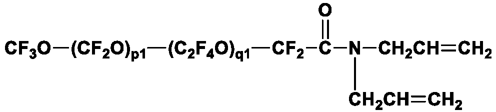 wherein the sum of p1, q1, r1, p1, and q1 is the same as described above, and individual repeating units within the parentheses with p1 and q1 may be randomly bonded.

Examples of the organosilicon compound having a SiH group and a polyether group in the molecule used in the preparation of the fluoropolyether group-containing polymer represented by the formula (4) (production method 4), include the following. 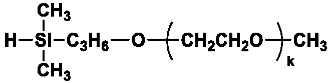 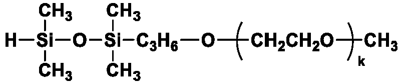 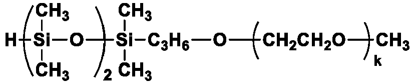 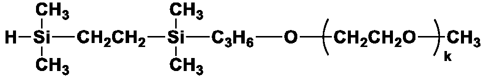 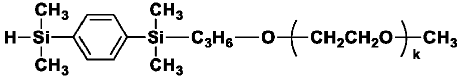 wherein k is the same as described above.

The amount of the organosilicon compound having a SiH group and a polyether group in the molecule used in the preparation of the fluoropolyether group-containing polymer represented by the formula (4) (production method 4) can be 1 equivalent when n = 2, and 1/n to 2/n equivalents when n < 2 per n equivalents of olefin sites of the fluoropolyether group-containing polymer having two or more olefin sites at one molecular chain terminal or both molecular chain terminals.

Examples of the hydrosilylation catalyst used in the preparation of the fluoropolyether group-containing polymer represented by the formula (4) (production method 4) include those same as the hydrosilylation catalyst exemplified in the above (production method 2), and for the compounding amount, the hydrosilylation catalyst can be used in an amount of 0.1 to 100 ppm, more preferably 0.5 to 50 ppm in terms of transition metal (weight) per the weight of the fluoropolyether group-containing polymer having two or more olefin sites at one molecular chain terminal or both molecular chain terminals.

Examples of the solvent used in the preparation of the fluoropolyether group-containing polymer represented by the formula (4) (production method 4) include the same as those exemplified in the above (production method 2), and the compounding amount can be 10 to 300 parts by weight, preferably 50 to 150 parts by weight, and still more preferably about 100 parts by weight per 100 parts by weight of the fluoropolyether group-containing polymer having two or more olefin sites at one molecular chain terminal or both molecular chain terminals.

Further, as another method of the method for producing a fluoropolyether group-containing polymer represented by the formula (4) (production method 5), for example, a fluoropolyether group-containing polymer having an acid halide or the like at one molecular chain terminal or both molecular chain terminals is dissolved in a solvent, for example, a fluorine solvent such as 1,3-bis(trifluoromethyl)benzene, and using an organic nitrogen compound having a polyether group and an olefin site in the molecule, aging is performed at a temperature of 0 to 90°C, preferably 60 to 90°C for 1 to 48 hours, preferably 10 to 40 hours, more preferably 15 to 24 hours in the presence of a base using a solvent as necessary.

As the group at one molecular chain terminal of the fluoropolyether group-containing polymer having an acid halide or the like at one molecular chain terminal or both molecular chain terminals used in the preparation of the fluoropolyether group-containing polymer represented by the formula (4) (production method 5), an acid anhydride, an ester, a carboxylic acid, an amide, a sulfonic acid ester and the like can also be used in addition to the acid halide described above.

Specific examples of the fluoropolyether group-containing polymer having these groups at one molecular chain terminal or both molecular chain terminals include those shown below. 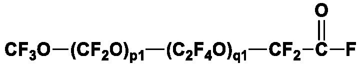 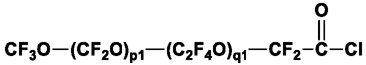 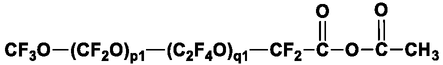 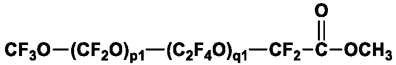 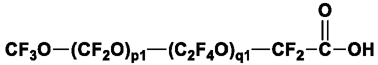 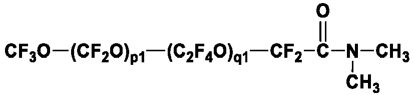 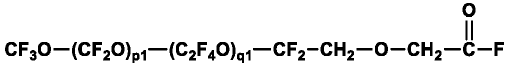 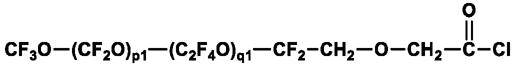 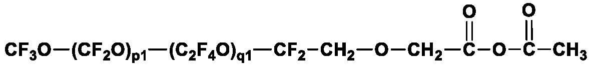 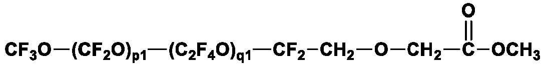 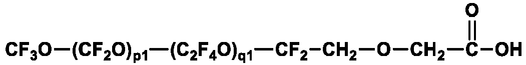 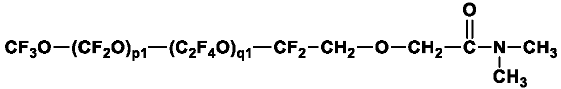 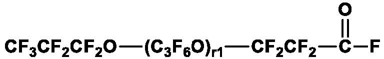 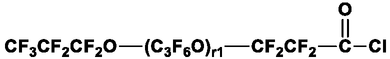 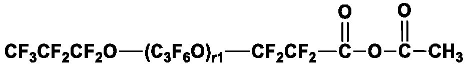 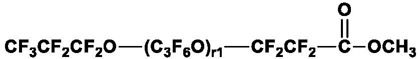 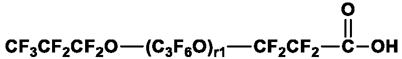 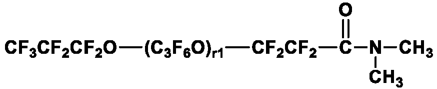 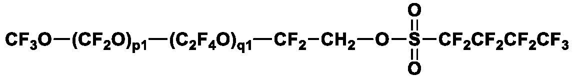 wherein the sum of p1, q1, r1, p1, and q1 is the same as described above, and individual repeating units within the parentheses with p1 and q1 may be randomly bonded.

Examples of the organic nitrogen compound having a polyether group and an olefin site in the molecule used in the preparation of the fluoropolyether group-containing polymer represented by the formula (4) (production method 5) include the following. 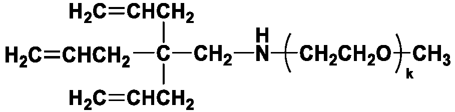 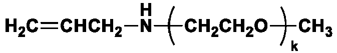 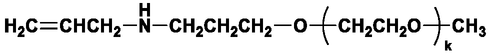 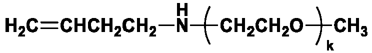 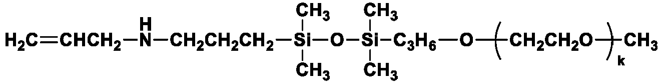 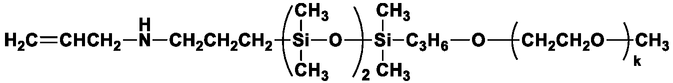 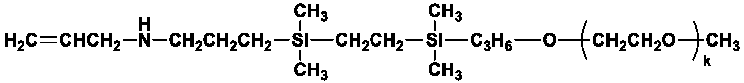 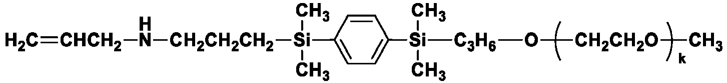 wherein k is the same as described above.

The amount of the organic nitrogen compound having a polyether group and an olefin site in the molecule used in the preparation of the fluoropolyether group-containing polymer represented by the formula (4) (production method 5) can be 1 to 15 equivalents, more preferably 2 to 6 equivalents, and still more preferably about 4 equivalents per 1 equivalent of the reactive end group of the fluoropolyether group-containing polymer having an acid halide or the like at one molecular chain terminal or both molecular chain terminals.

Examples of the base used for preparation of the fluoropolyether group-containing polymer represented by the formula (4) (production method (production method 5) include an amine and an alkali metal base. Specific examples of the amine include triethylamine, diisopropylethylamine, pyridine, DBU, and imidazole. Examples of the alkali metal base include sodium hydroxide, potassium hydroxide, sodium hydride, potassium hydride, alkyl lithium, t-butoxy potassium, lithium diisopropylamide, lithium bis(trimethylsilyl)amide, sodium bis(trimethylsilyl)amide, and potassium bis(trimethylsilyl) amide.

The amount of the base used can be 1 to 15 equivalents, more preferably 2 to 6 equivalents, and still more preferably about 4 equivalents per 1 equivalent of the reactive end group of the fluoropolyether group-containing polymer having an acid halide or the like at one molecular chain terminal or both molecular chain terminals.

In the preparation of the fluoropolyether group-containing polymer represented by the formula (4) (production method 5), a solvent may be used. The solvent is not necessarily used, and examples of the solvent used include a fluorine-containing aromatic hydrocarbon solvent such as 1,3-bis(trifluoromethyl)benzene or trifluoromethylbenzene, a hydrofluoroether (HFE) solvent (manufactured by 3M, trade name: Novec series) such as 1,1,1,2,3,4,4,5,5,5-decafluoro-3-methoxy-2-(trifluoromethyl)pentane, and a perfluoro solvent composed of a completely fluorinated compound (manufactured by 3M, trade name: fluorinert series) as fluorine solvents. Furthermore, dimethylformamide, dimethylacetamide, dimethylsulfoxide, acetonitrile, THF and the like can be used as an organic solvent.

When a solvent is used, the amount of the solvent used can be 10 to 300 parts by weight, preferably 30 to 150 parts by weight, and still more preferably about 50 to 100 parts by weight per 100 parts by weight of the fluoropolyether group-containing polymer having an acid halide or the like at one molecular chain terminal or both molecular chain terminals.

In the preparation of the fluoropolyether group-containing polymer having a hydroxyl group or hydrolyzable group and a polyether group, represented by the formula (1), as the organosilicon compound having a SiH group and a hydroxyl group or hydrolyzable end group in the molecule, compounds represented by the general formulas (8) to (11) are preferable. 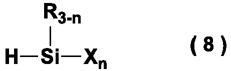 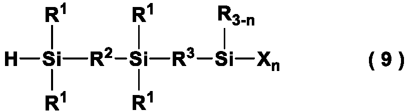 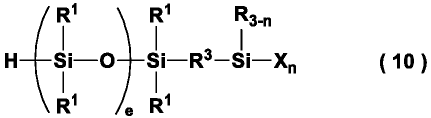 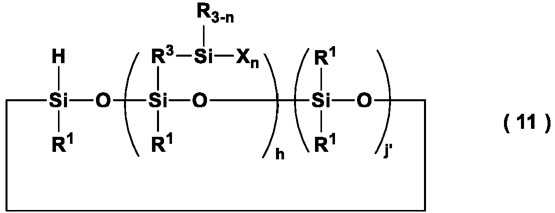 wherein R, X, n, R¹, R², e, and j are the same as described above, R³ is a C₂-C₈ divalent hydrocarbon group, h is 1, j' is an integer of 1 to 8, h + j' is an integer of 2 to 9, and in the formula (11), individual repeating units within the parentheses may be randomly bonded.

Examples of the divalent hydrocarbon group of 2 to 8, preferably 2 to 3 carbon atoms of R³ include an alkylene group such as a methylene group, an ethylene group, a propylene group (trimethylene group, methylethylene group), a butylene group (tetramethylene group, methylpropylene group), a hexamethylene group, and an octamethylene group, an arylene group such as a phenylene group, and a combination of two or more of these groups (an alkylene arylene group). Inter alia, an ethylene group and a trimethylene group are preferable.

Examples of the organosilicon compound having a SiH group and a hydroxyl group or hydrolyzable end group in the molecule include trimethoxysilane, triethoxysilane, tripropoxysilane, triisopropoxysilane, tributoxysilane, triisopropenoxysilane, triacetoxysilane, trichlorosilane, tribromosilane, triiodosilane, the following silane or siloxane compounds, and (partial) hydrolysates thereof.

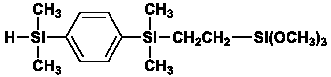

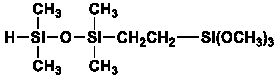

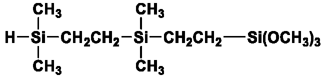

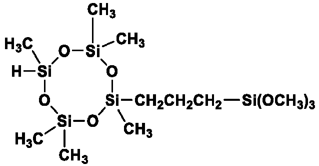

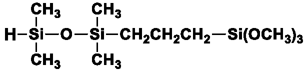

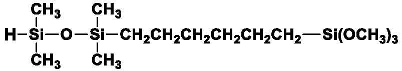

In the preparation of the fluoropolyether group-containing polymer having a hydroxyl group or hydrolyzable group and a polyether group, represented by the formula (1), the amount of the organosilicon compound having a SiH group and a hydroxyl group or hydrolyzable end group in the molecule used in reaction between the fluoropolyether group-containing polymer having one or more polyether groups and one or more olefin sites at one molecular chain terminal or both molecular chain terminals and the organosilicon compound having a SiH group and a hydroxyl group or hydrolyzable end group in the molecule can be 1 to 4 equivalents, more preferably 1.5 to 4 equivalents per 1 equivalent of the olefin site of the fluoropolyether group-containing polymer.

When a SiH group-containing halogenated (organic) silicon compound such as trichlorosilane is used as the organosilicon compound having a SiH group and a hydroxyl group or hydrolyzable end group in the molecule, the substituent (halogen atom) on the silyl group may be then converted to, for example, an alkoxy group such as a methoxy group as another hydrolyzable group, and examples of the reagent that can be used when the substituent (halogen atom) on the silyl group is converted to another hydrolyzable group include a C₁-C₁₀ alcohol such as methanol, ethanol, propanol, isopropanol, or butanol.

The amount used can be 10 to 200 parts by weight, more preferably 40 to 100 parts by weight, and still more preferably about 65 parts by weight per 100 parts by weight of an addition reaction product of the fluoropolyether group-containing polymer having one or more polyether groups and one or more olefin sites at one molecular chain terminal or both molecular chain terminals and the SiH group-containing halogenated (organic) silicon compound.

In the preparation of the fluoropolyether group-containing polymer having a hydroxyl group or hydrolyzable group and a polyether group, represented by the formula (1), examples of the solvent include a fluorine solvent. Examples of the fluorine solvent include a hydrofluoroether (HFE) solvent (manufactured by 3M, trade name: Novec series) such as 1,3-bis(trifluoromethyl)benzene, trifluoromethylbenzene, methylnonafluorobutyl ether, methylnonafluoroisobutyl ether, ethylnonafluorobutyl ether, ethylnonafluoroisobutyl ether, or 1,1,1,2,3,4,4,5,5,5-decafluoro-3-methoxy-2-(trifluoromethyl)pentane, and a perfluoro solvent composed of a completely fluorinated compound (manufactured by 3M, trade name: Fluorinert series).

The amount of the solvent used can be 10 to 300 parts by weight, preferably 50 to 150 parts by weight, still more preferably 50 to 100 parts by weight per 100 parts by weight of the fluoropolyether group-containing polymer having one or more polyether groups and one or more olefin sites at one molecular chain terminal or both molecular chain terminals.

In the preparation of the fluoropolyether group-containing polymer having a hydroxyl group or hydrolyzable group and a polyether group, represented by the formula (1), examples of the hydrosilylation catalyst include the following. Examples thereof include a platinum group metal based catalyst such as platinum black, chloroplatinic acid, alcohol-modified chloroplatinic acid, a complex of chloroplatinic acid with olefin, aldehyde, vinyl siloxane, or acetylene alcohol, tetrakis(triphenylphosphine)palladium, chlorotris(triphenylphosphine)rhodium and the like. Inter alia, a platinum compound such as a vinyl siloxane coordination compound is preferable.

The amount of the hydrosilylation catalyst used is 0.1 to 100 ppm, more preferably 1 to 50 ppm in terms of transition metal (weight) per the weight of the fluoropolyether group-containing polymer having one or more polyether groups and one or more olefin sites at one molecular chain terminal or both molecular chain terminals.

Examples of another method of the method for preparing the fluoropolyether group-containing polymer having a hydroxyl group or hydrolyzable group and a polyether group when α is 1 (that is, Rf is a monovalent fluorooxyalkylene group-containing polymer residue) or α is 2 (that is, Rf is a divalent fluorooxyalkylene group-containing polymer residue) represented by the formula (1) include the following methods.

A fluoropolyether group-containing polymer having two or more SiH groups at one molecular chain terminal or both molecular chain terminals is used as a raw material, for example, a fluoropolyether group-containing polymer having three SiH groups at one molecular chain terminal or both molecular chain terminals is dissolved in a solvent, for example, a fluorine solvent such as 1,3-bis(trifluoromethyl)benzene, a polyether compound having an olefin site in the molecule (for example, a polyalkylene oxide compound blocked at one molecular chain terminal with an alkenyloxy group or the like) is first mixed, for example, in an amount of 1/3 equivalent per 1 equivalent of the reactive end group (SiH group) of the fluoropolyether group-containing polymer having three SiH groups at one molecular chain terminal or both molecular chain terminals, and, to react some of the SiH groups of the fluoropolyether group-containing polymer with the olefin site of the polyether compound having an olefin site in the molecule, aging is performed in the presence of a hydrosilylation catalyst, for example, a chloroplatinic acid/vinylsiloxane complex in toluene at a temperature of 40 to 120°C, preferably 60 to 100°C, more preferably about 80°C for 1 to 72 hours, preferably 20 to 36 hours, more preferably about 24 hours to obtain a fluoropolyether group-containing polymer having a SiH group and a polyether group at one molecular chain terminal or both molecular chain terminals.

Subsequently, the fluoropolyether group-containing polymer having a SiH group and a polyether group at one molecular chain terminal or both molecular chain terminals, and an organosilicon compound having an olefin site and a hydroxyl group or hydrolyzable end group in the molecule are dissolved in a solvent, for example, a fluorine solvent such as 1,3-bis(trifluoromethyl)benzene, and the mixture is aged at a temperature of 40 to 120°C, preferably 60 to 100°C, more preferably about 80°C for 1 to 72 hours, preferably 20 to 36 hours, more preferably about 24 hours in the presence of a hydrosilylation catalyst, for example, a chloroplatinic acid/vinylsiloxane complex in toluene. As the organosilicon compound having an olefin site and a hydroxyl group or hydrolyzable end group in the molecule, two different compounds can be used, and in this case, compounds having different Y moieties in the formula (1) can be produced by stepwise addition.

In another method of the method for preparing the fluoropolyether group-containing polymer having a hydroxyl group or hydrolyzable group and a polyether group, represented by the formula (1), examples of the fluoropolyether group-containing polymer having two or more SiH groups at one molecular chain terminal or both molecular chain terminals include the following. 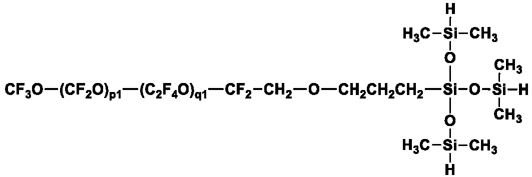 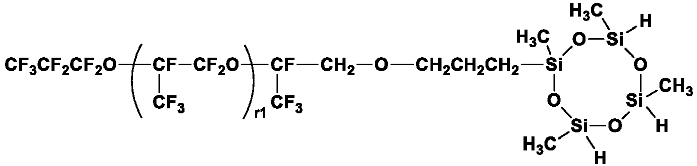 wherein the sum of p1, q1, r1, p1, and q1 is the same as described above, and individual repeating units within the parentheses with p1 and q1 may be randomly bonded.

In another method of the method for preparing the fluoropolyether group-containing polymer having a hydroxyl group or hydrolyzable group and a polyether group, represented by the formula (1), examples of the polyether compound having an olefin site in the molecule include a polyalkylene oxide compound blocked at one molecular chain terminal with an alkenyloxy group such as polyethylene oxide blocked at one molecular chain terminal with an allyloxy group and blocked at the other molecular chain terminal with a methoxy group, shown below. 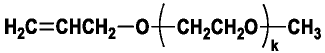 wherein k is the same as described above.

Specific examples of the polyether compound having an olefin site in the molecule such as a polyalkylene oxide compound blocked at one molecular chain terminal with an alkenyloxy group include UNIOX MA-200, UNIOX MA-300, UNIOX MA-350S, and UNIOX MA-500 manufactured by NOF CORPORATION.

In another method of the method for preparing the fluoropolyether group-containing polymer having a hydroxyl group or hydrolyzable group and a polyether group, represented by the formula (1), the amount of the polyether compound having an olefin site in the molecule used can be 1 equivalent when n = 2, and 1/n to 2/n equivalents when n < 2 per n equivalents of the reactive end group (SiH group) of the fluoropolyether group-containing polymer having two or more SiH groups at one molecular chain terminal or both molecular chain terminals.

In another method of the method for preparing the fluoropolyether group-containing polymer having a hydroxyl group or hydrolyzable group and a polyether group, represented by the formula (1), as the organosilicon compound having an olefin site and a hydroxyl group or hydrolyzable end group in the molecule to be reacted with the obtained fluoropolyether group-containing polymer having a SiH group and a polyether group at one molecular chain terminal or both molecular chain terminals, a compound represented by the general formula (12) is preferable. 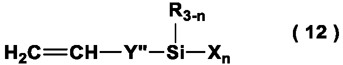 wherein R, X, and n are the same as described above, and Y" is a single bond or a divalent hydrocarbon group which may contain at least one selected from an oxygen atom, a sulfur atom, a silicon atom, and a siloxane bond.

In the formula (12), Y' is a single bond or divalent hydrocarbon group which may contain at least one selected from an oxygen atom, a sulfur atom, a silicon atom, and a siloxane bond, and preferably has 1 to 18 carbon atoms, and specifically, the divalent hydrocarbon group is preferably a group selected from the group consisting of a C₁-C₈ alkylene group, an alkylene group having a C₆-C₈ arylene moiety, a divalent group having alkylene moieties bonded to a diorganosilylene moiety, silalkylene structure, or silarylene structure, and a divalent group having a C₁-C₈ alkylene moiety bonded to the valence bond of a linear organopolysiloxane residue of 2 to 10 silicon atoms, or the valence bond of a branched or cyclic organopolysiloxane residue of 3 to 10 silicon atoms, which may contain an oxygen atom or sulfur atom. Y" is preferably a single bond or C₁-C₆ linear alkylene group.

Examples of such an organosilicon compound having an olefin site and a hydroxyl group or hydrolyzable end group in the molecule include the following. Examples thereof include vinyltrimethoxysilane, allyltrimethoxysilane, hexenyltrimethoxysilane, octenyltrimethoxysilane, vinyltriethoxysilane, allyltriethoxysilane, hexenyltriethoxysilane, octenyltriethoxysilane, vinyltriisopropoxysilane, allyltriisopropoxysilane, vinyltributoxysilane, allyltributoxysilane, vinyltriacetoxysilane, allyltriacetoxysilane, vinyltrichlorosilane, vinyltribromosilane, vinyltriiodosilane, the following silane or siloxane compounds, and (partial) hydrolysates thereof.

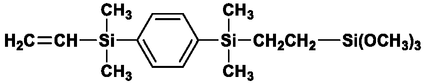

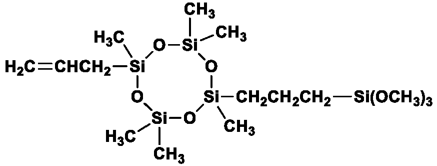

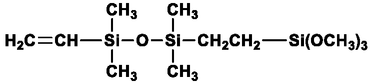

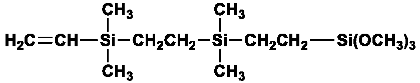

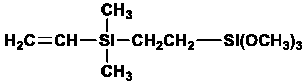

In another method of the method for preparing the fluoropolyether group-containing polymer having a hydroxyl group or hydrolyzable group and a polyether group, represented by the formula (1), the amount of the organosilicon compound having an olefin site and a hydroxyl group or hydrolyzable end group in the molecule used can be 1 to 4 equivalents, more preferably 1.5 to 2.5 equivalents, and still more preferably about 2 equivalents per 1 equivalent of the unreacted SiH group in the reactive end group of the fluoropolyether group-containing polymer having two or more SiH groups at one molecular chain terminal or both molecular chain terminals (that is, the SiH group of the fluoropolyether group-containing polymer having a SiH group and a polyether group at one molecular chain terminal or both molecular chain terminals, which is a reaction product of a fluoropolyether group-containing polymer having two or more SiH groups at one molecular chain terminal or both molecular chain terminals and a polyether compound having an olefin site in the molecule).

Examples of the hydrosilylation catalyst used in another method of the method for preparing the fluoropolyether group-containing polymer having a hydroxyl group or hydrolyzable group and a polyether group, represented by the formula (1) include the same as the hydrosilylation catalyst exemplified in the preparation method, and the compounding amount can be 0.1 to 100 ppm, more preferably 0.3 to 50 ppm in terms of transition metal (weight) per the weight of the fluoropolyether group-containing polymer having a SiH group and a polyether group at one molecular chain terminal or both molecular chain terminals, which is a reaction product of a fluoropolyether group-containing polymer having two or more SiH groups at one molecular chain terminal or both molecular chain terminals or a fluoropolyether group-containing polymer having two or more SiH groups at one molecular chain terminal or both molecular chain terminals and a polyether compound having an olefin site in the molecule.

Examples of the solvent used in another method of the method for preparing the fluoropolyether group-containing polymer having a hydroxyl group or hydrolyzable group and a polyether group, represented by the formula (1) include the same as the solvent exemplified in the preparation method, and the compounding amount can be 10 to 300 parts by weight, preferably 50 to 150 parts by weight, and still more preferably about 100 parts by weight per 100 parts by weight of the fluoropolyether group-containing polymer having a SiH group and a polyether group at one molecular chain terminal or both molecular chain terminals, which is a reaction product of a fluoropolyether group-containing polymer having two or more SiH groups at one molecular chain terminal or both molecular chain terminals or a fluoropolyether group-containing polymer having two or more SiH groups at one molecular chain terminal or both molecular chain terminals and a polyether compound having an olefin site in the molecule.

Examples of the structure of the fluoropolyether group-containing polymer having a hydroxyl group or hydrolyzable group and a polyether group, represented by the formula (1) include the following structures. By changing the combination of Rf, B, V, E, R', U, Z, Y, R, X, α, β, γ, δ, m, and n in the formula (1), several types of a fluoropolyether group-containing polymer having a hydroxyl group or hydrolyzable group and a polyether group are obtained. 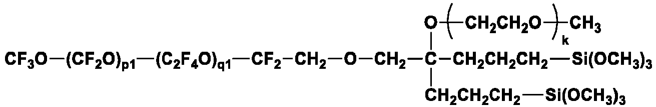 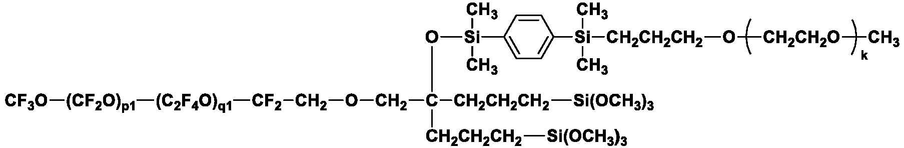 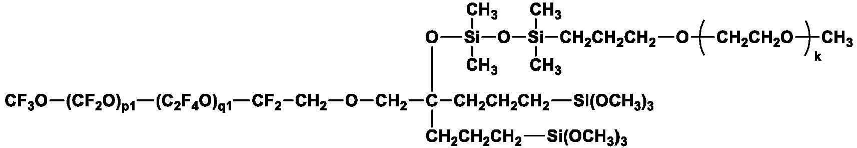 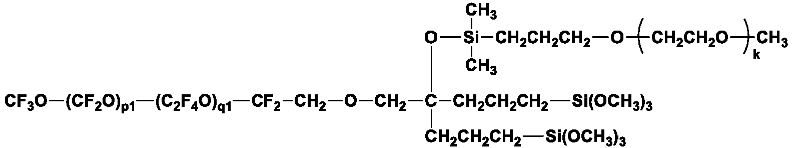 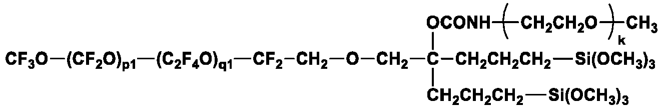 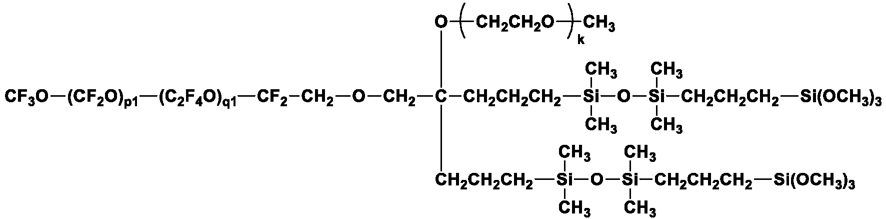 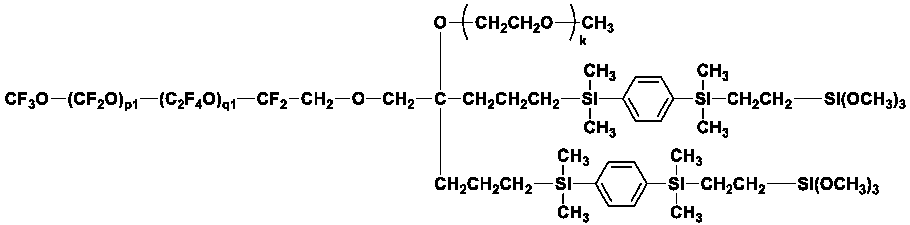 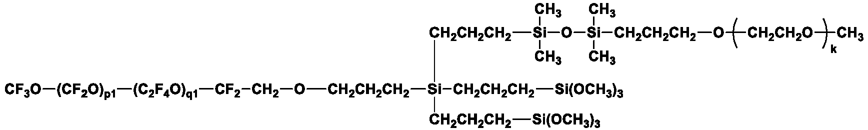 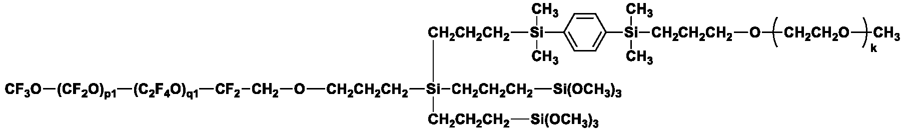 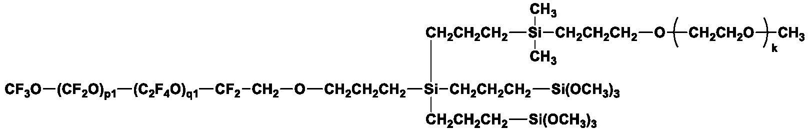 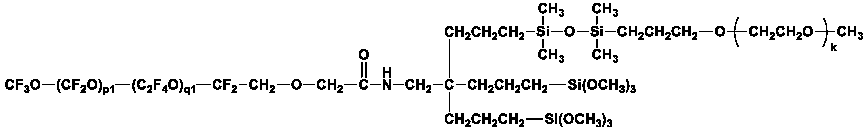 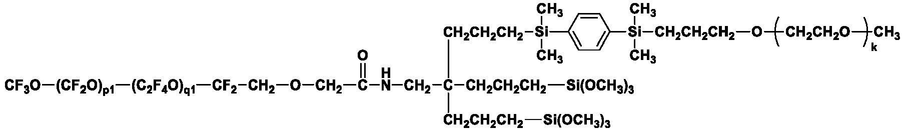 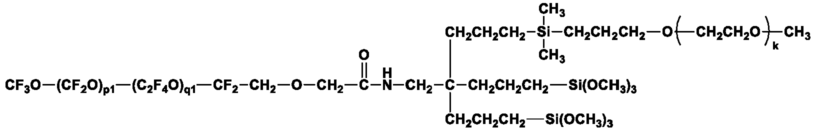 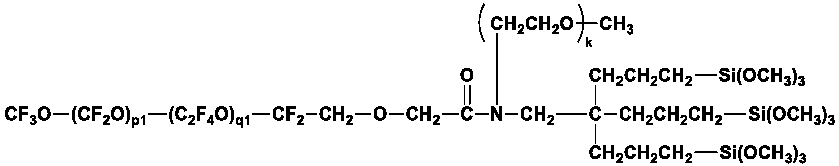 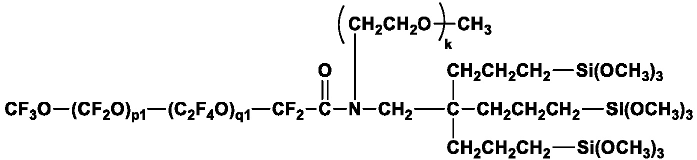 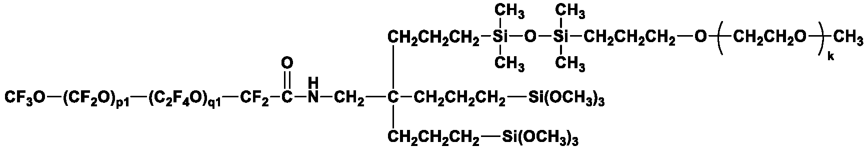 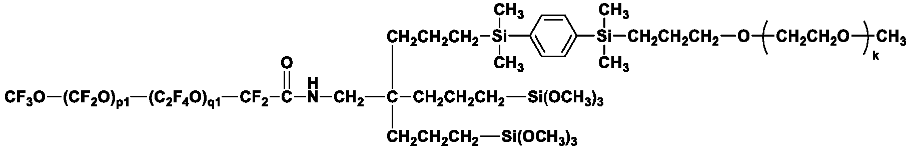 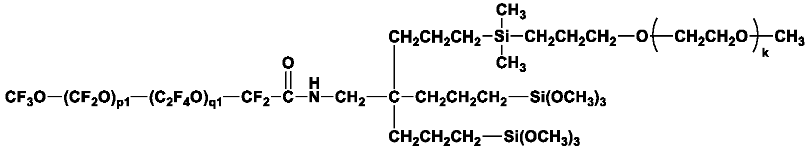 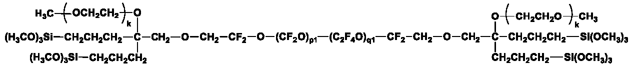 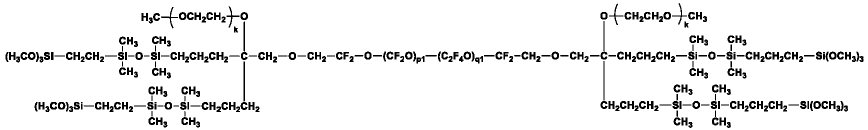 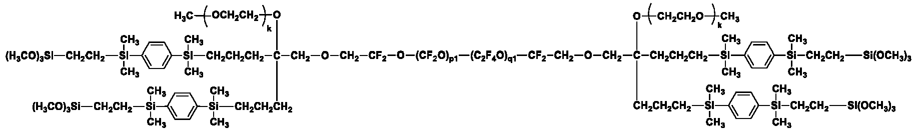 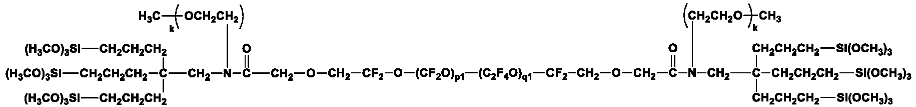 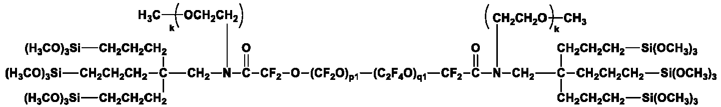 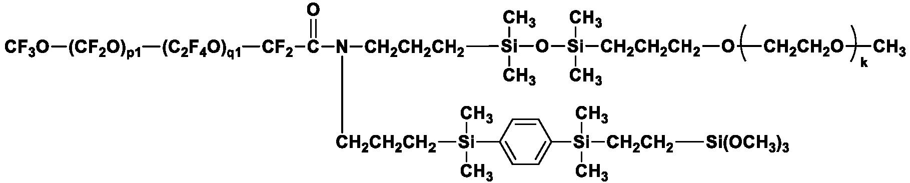 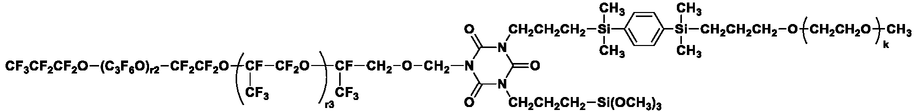 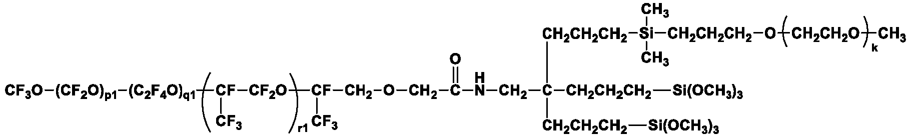 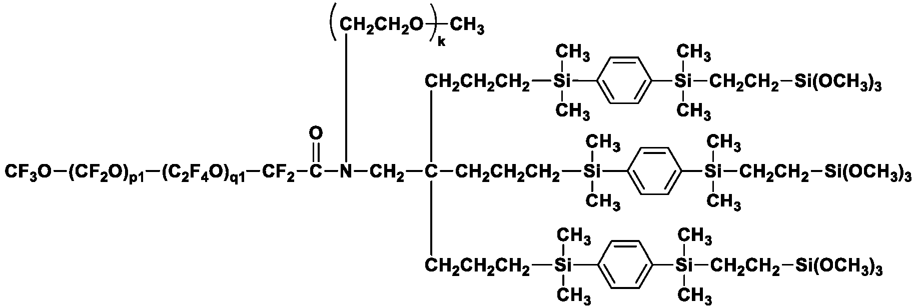 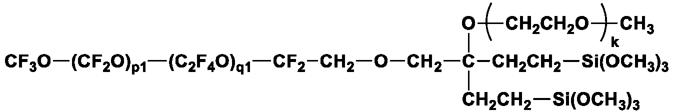 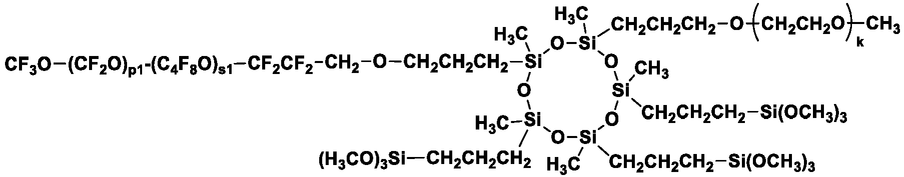 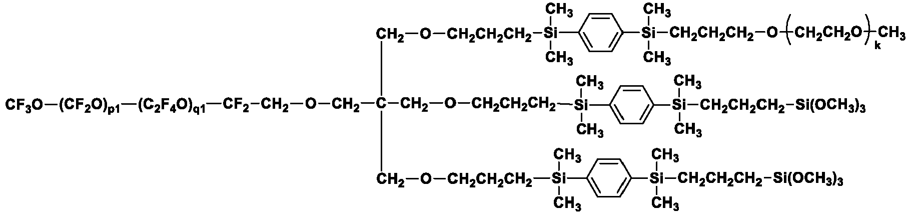 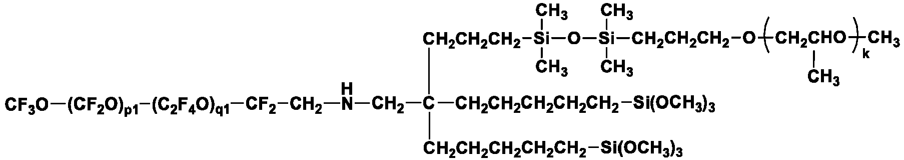 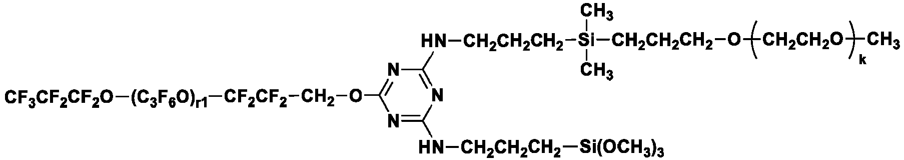 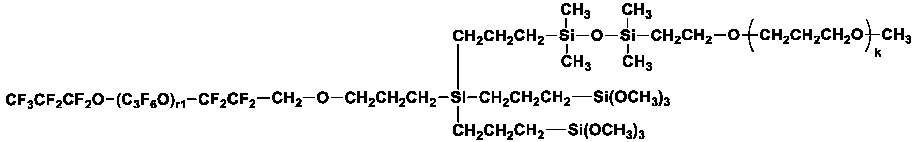 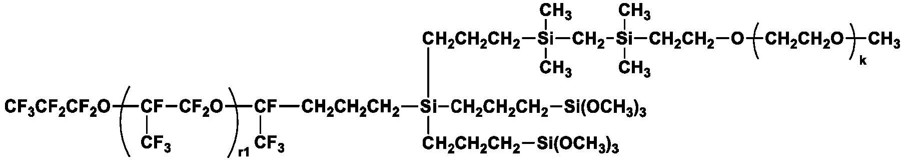 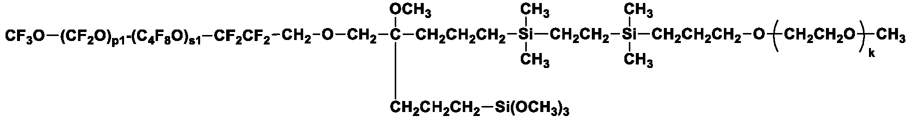 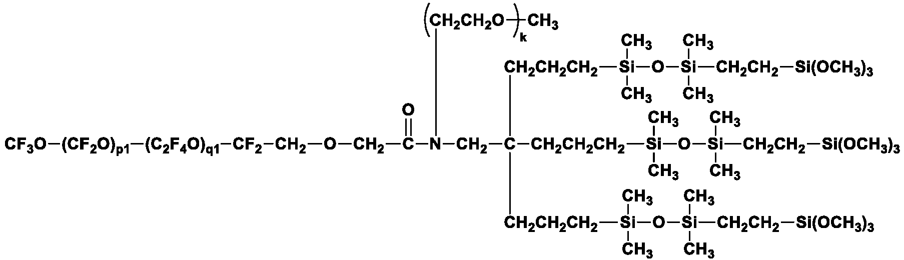 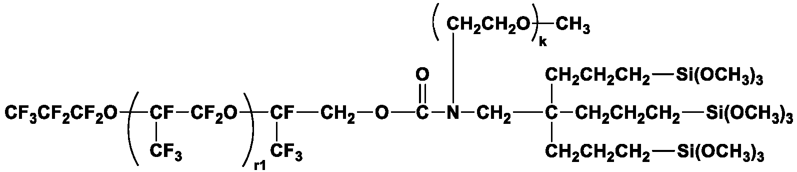 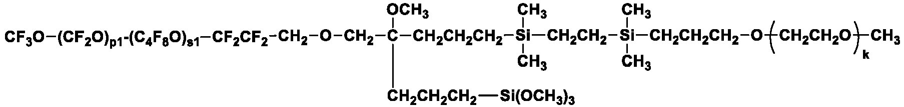 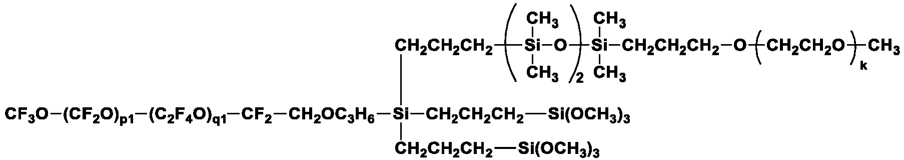 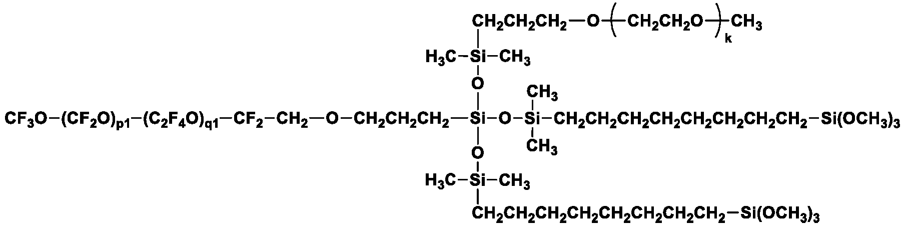 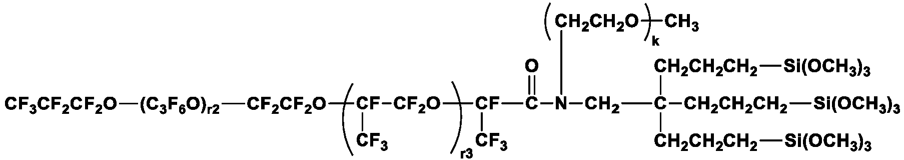 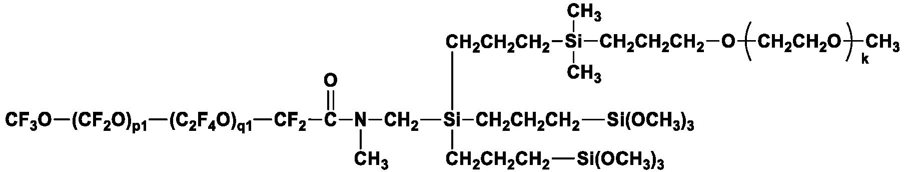 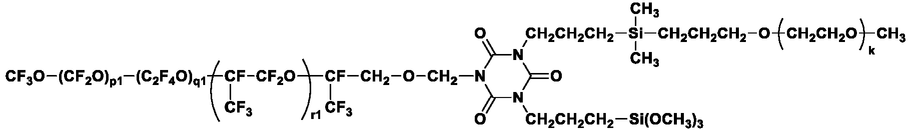 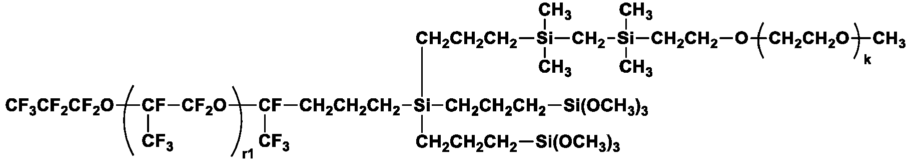 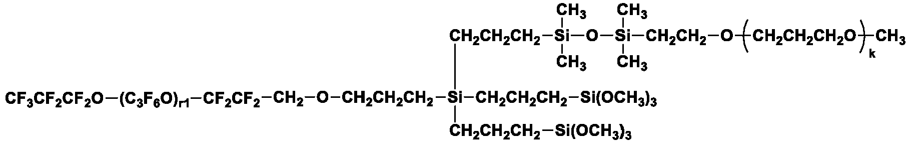 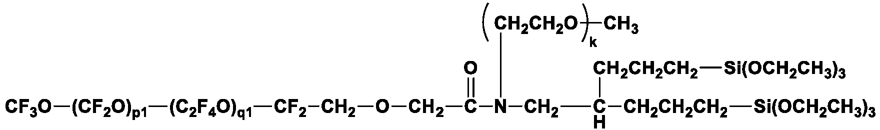 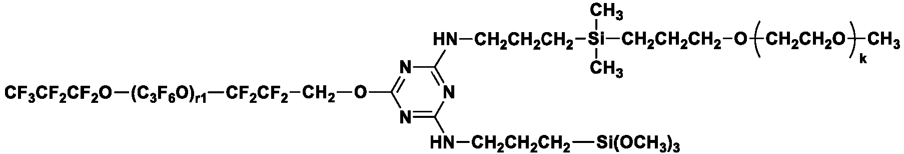 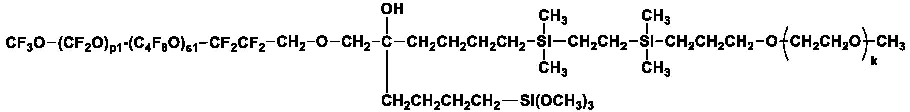 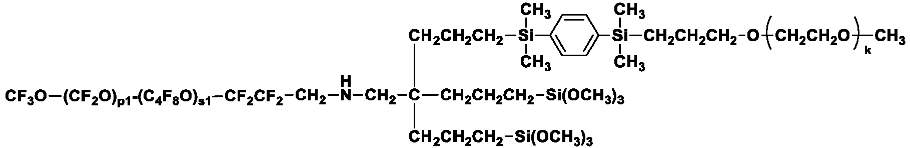 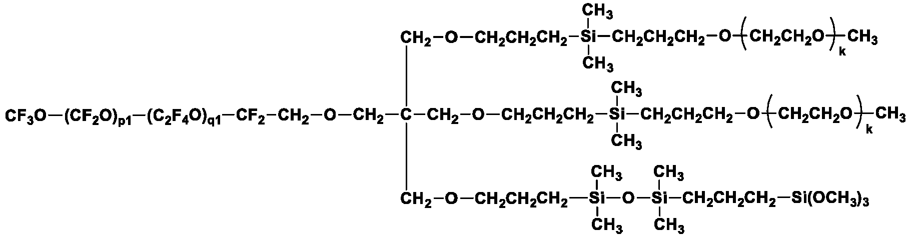 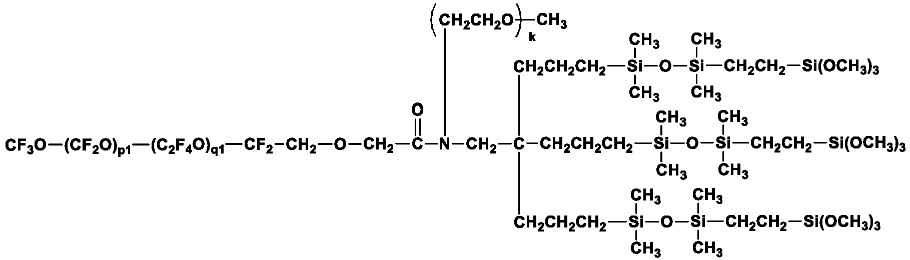 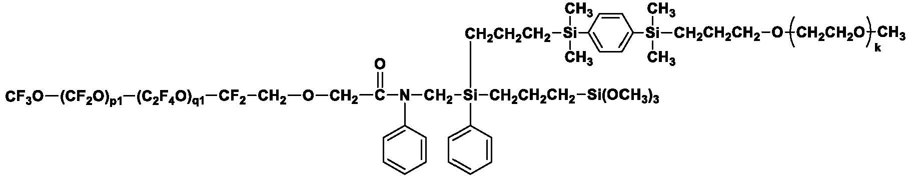 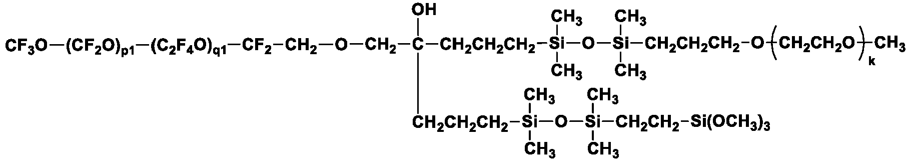 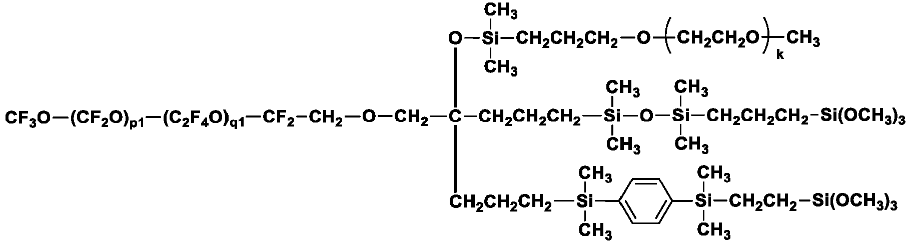 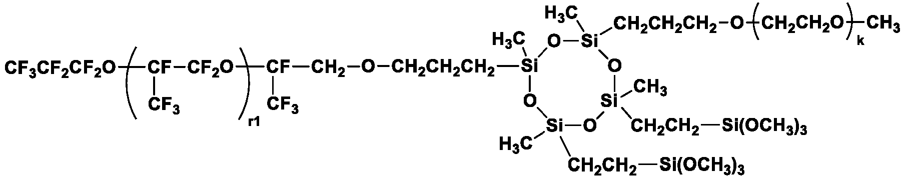 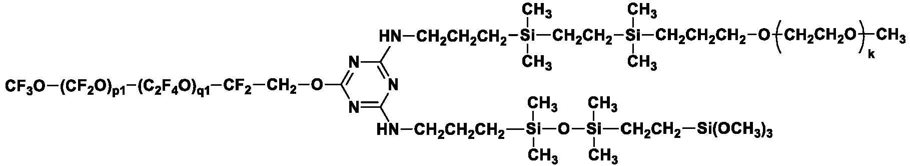 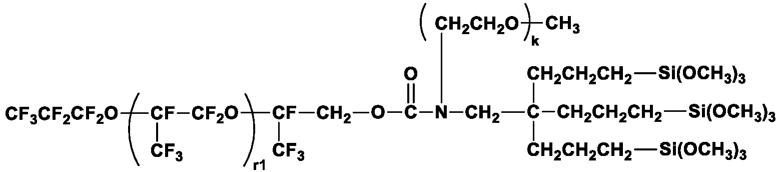 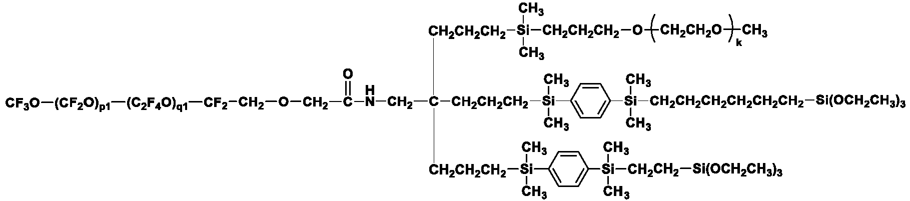 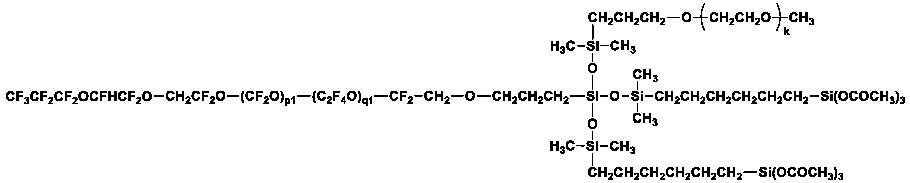 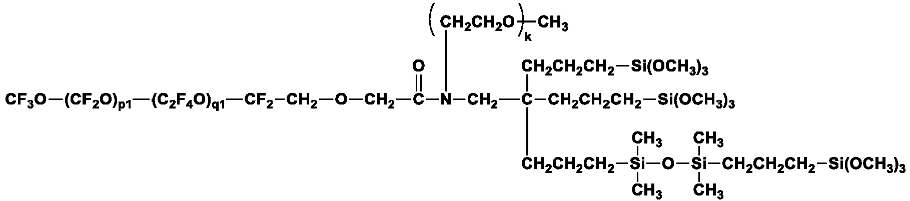 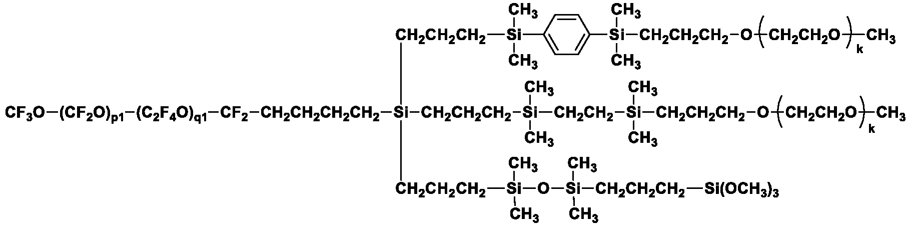 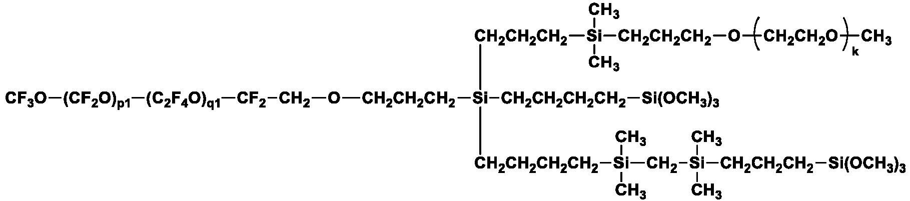 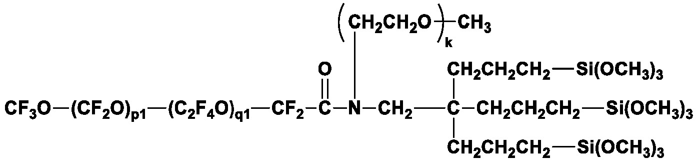 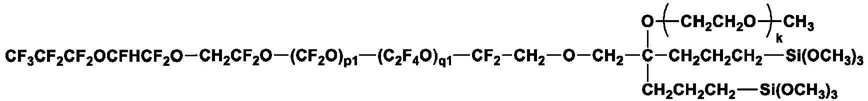 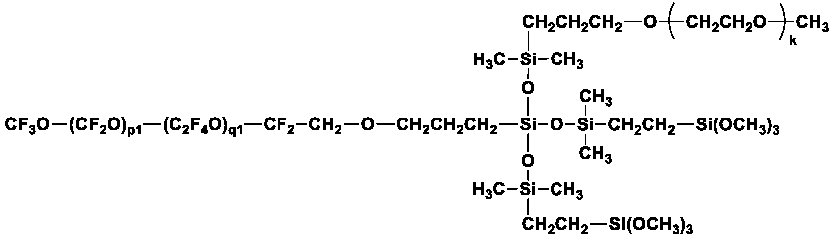 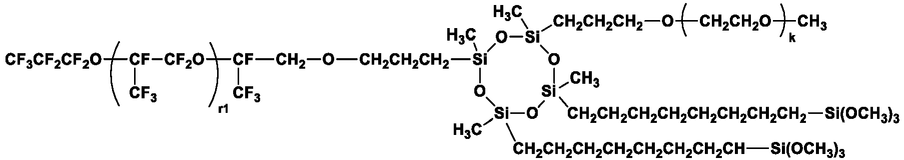 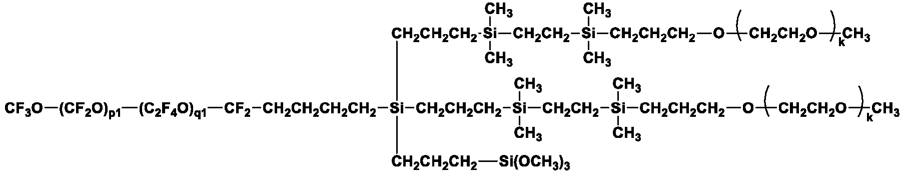 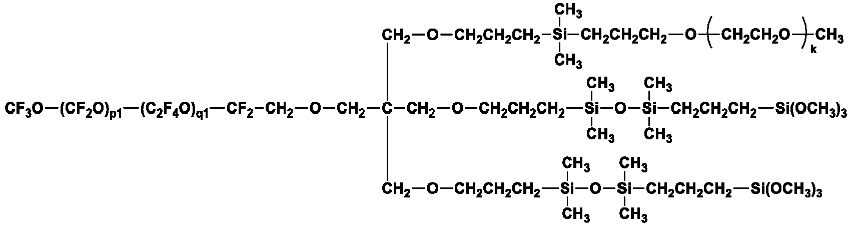 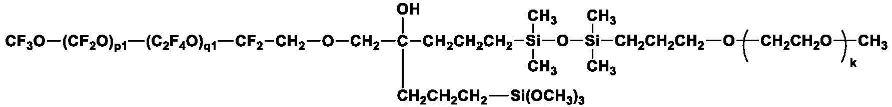 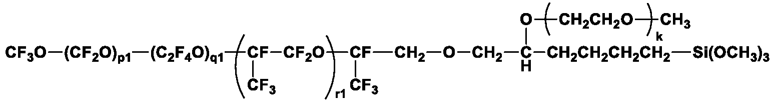 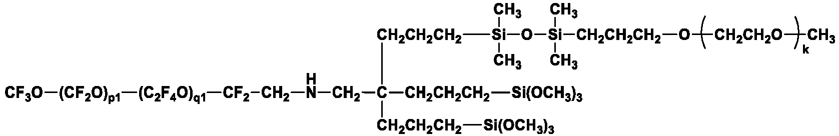 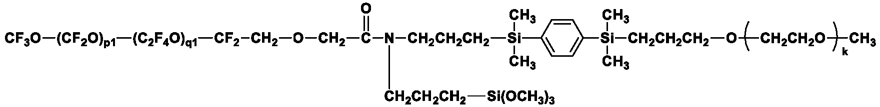 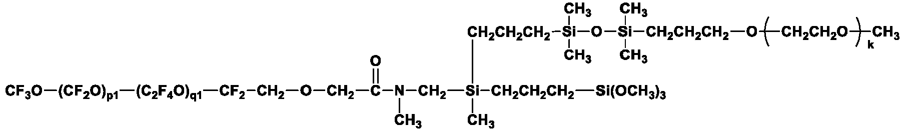 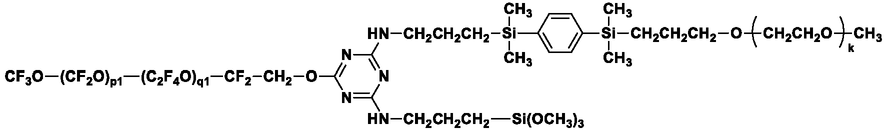 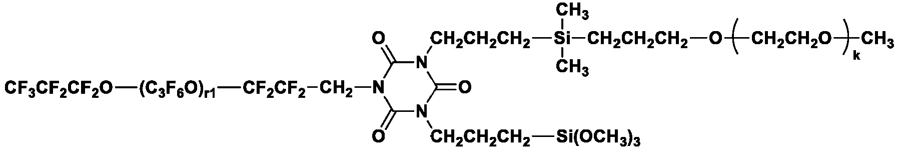 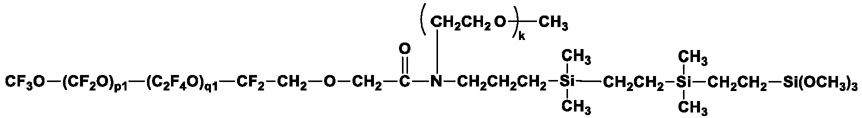 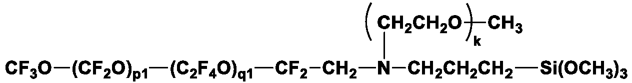 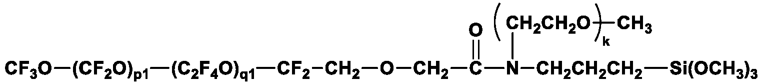 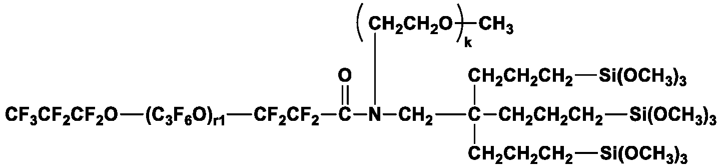 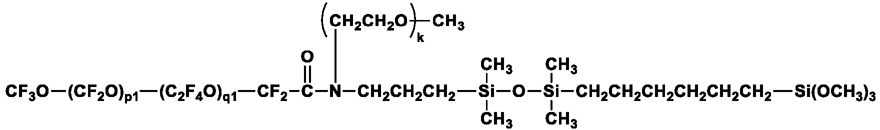 wherein p1, q1, r1, and k are the same as described above, s1 is an integer of at least 1, its upper limit is the same as the upper limit of s above, provided that the sum of p1, q1, r1, and s1 in each formula is 3 to 200, r2 and r3 are each an integer of at least 1, the sum of r2 and r3 is 2 to 199, and individual units within the parentheses with p1, q1, r1, r2, r3, and s1 may be randomly bonded.

For example, when a compound represented by the formula: 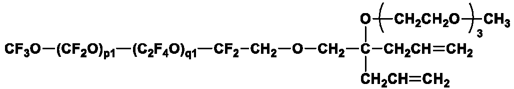 wherein the sum of p1, q1, p1, and q1 is the same as described above, and individual repeating units within the parentheses with p1 and q1 may be randomly bonded,
is used as a fluoropolyether group-containing polymer having two olefin sites at one molecular chain terminal, and trimethoxysilane is used as the organosilicon compound having a SiH group and a hydroxyl group or hydrolyzable end group in the molecule, a compound represented by the formula is obtained. 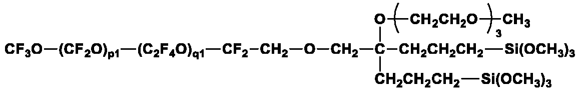 wherein the sum of p1, q1, p1, and q1 is the same as described above, and individual repeating units within the parentheses with p1 and q1 may be randomly bonded.

For example, when a compound represented by the formula: 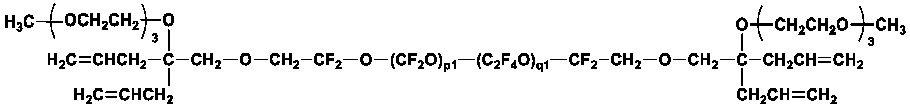 wherein the sum of p1, q1, p1, and q1 is the same as described above, and individual repeating units within the parentheses with p1 and q1 may be randomly bonded,
is used as a fluorooxyalkylene group-containing polymer having two olefin sites at each molecular chain terminal, and trimethoxysilane is used as the organosilicon compound having a SiH group and a hydroxyl group or hydrolyzable end group in the molecule, a compound represented by the formula is obtained. 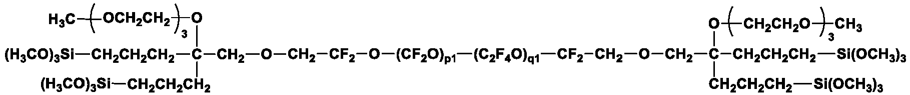 wherein the sum of p1, q1, p1, and q1 is the same as described above, and individual repeating units within the parentheses with p1 and q1 may be randomly bonded.

The present invention further provides a surface treating agent comprising, as a main component, the fluoropolyether group-containing polymer having a hydroxyl group or hydrolyzable group and a polyether group, represented by the formula (1). The surface treating agent may comprise an unreacted raw material or a reaction intermediate before introducing a terminal hydroxyl group or hydrolyzable group of a fluoropolyether group-containing polymer having a hydroxyl group or hydrolyzable group and a polyether group. The surface treating agent may also comprise a partial (hydrolytic) condensate which is obtained by condensing the hydroxy group on the fluoropolyether group-containing polymer, or a hydroxy group resulting from partial hydrolysis of the hydrolyzable group on the fluoropolyether group-containing polymer in a well-known manner.

To the surface treating agent, a hydrolytic condensation catalyst may be added if necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst may be added in a catalytic amount, typically 0.01 to 5 parts, more preferably 0.1 to 1 part by weight per 100 parts by weight of the fluoropolyether group-containing polymer and/or its partial (hydrolytic) condensate.

The surface treating agent may further comprise a solvent. Suitable solvents include fluorine-modified aliphatic hydrocarbon solvents such as perfluoroheptane, perfluorooctane, and tridecafluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, and perfluoro(2-butyltetrahydrofuran), methyl perfluoroheptenyl ether, tetrafluoroethyl trifluoroethyl ether; fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, with 1,3-bis(trifluoromethyl)benzene, perfluoro(2-butyltetrahydrofuran), perfluorotributylamine, ethyl perfluorobutyl ether, tridecafluorooctane, and tetrafluoroethyl trifluoroethyl ether being more desirable.

The solvents may be used in admixture of two or more while it is preferable that the fluoropolyether group-containing polymer and its partial (hydrolytic) condensate be uniformly dissolved in the solvent. An optimum concentration of the fluoropolyether group-containing polymer and its partial (hydrolytic) condensate in the solvent varies with a particular treating mode. The amount which is easy to weigh may be chosen. In the case of direct coating, the concentration may preferably be 0.01 to 10 parts by weight, more preferably 0.05 to 5 parts by weight per 100 parts by weight of the sum of the solvent and the fluoropolyether group-containing polymer (and its partial (hydrolytic) condensate) combined. In the case of evaporation treatment, the concentration may preferably be 1 to 100 parts by weight, more preferably 3 to 30 parts by weight per 100 parts by weight of the sum of the solvent and the fluoropolyether group-containing polymer (and its partial (hydrolytic) condensate) combined.

The surface treating agent of the present invention can be applied to a substrate by any well-known techniques such as brush coating, dipping, spraying, and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 150°C for 30 minutes to 36 hours, especially 1 to 24 hours. When the agent is applied by evaporation, the curing temperature is desirably in a range of 20 to 200°C for 1 to 24 hours. Humid curing conditions are also useful. The cured film typically has a film thickness of 0.1 to 100 nm, desirably 1 to 20 nm although the thickness depends on the type of substrate. Also, in the case of spray coating, for example, a procedure involving diluting the agent with a fluorine solvent having water previously added thereto, for thereby effecting hydrolysis to generate Si-OH, and thereafter, spraying the dilution is recommended because the coating rapidly cures.

The substrate to be treated with the surface treating agent of the present invention is not particularly limited, and may be made of any desired materials including paper, fabric, metals, metal oxides, glass, plastics, ceramics, and quartz. The surface treating agent of the present invention is effective for endowing the substrate with water/oil repellency. In particular, the surface treating agent is advantageously used for the treatment of SiO₂-deposited glass and film.

Preferable articles which may be treated with the surface treating agent of the present invention include car navigation systems, mobile phones, smart phones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. The surface treating agent of the present invention is effective for preventing fingerprints and sebum from adhering to the articles and also for imparting scratch resistance. Therefore, it is particularly useful as a water/oil-repellent layer on touch panel displays and antireflective films.

The surface treating agent of the present invention is also used for anti-staining coatings on sanitary ware such as bathtubs and washbowls; anti-staining coatings on glazing or strengthened glass and head lamp covers in transport vehicles such as automobiles, trains and aircraft; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers, and for improving the lubricity of tape and film.

### EXAMPLES

Hereinafter, the present invention is described in more detail with reference to Synthesis Examples, Examples, and Comparative Examples. In the following Examples, the molar amount of the compound is a value calculated by dividing the measured weight of the target compound by the molecular weight of the polymer calculated from the values of p1 and q1 obtained by analysis.

### [Synthesis Example 1]

In a reactor, 100 g (2.4×10⁻² mol) of a compound having the following formula (A):

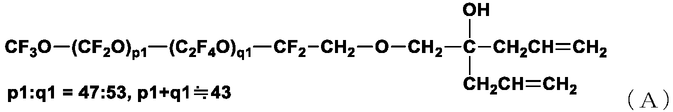

33 g (1.4×10⁻¹ mol) of diethylene glycol 2-bromoethyl methyl ether, and 0.17 g (4.8× 10⁻⁴ mol) of tetrabutylammonium iodide were mixed. Subsequently, 7.8 g (1.4×10⁻¹ mol) of potassium hydroxide was added, and then the mixture was heated at 60°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, obtaining 89 g of a fluoropolyether group-containing polymer having the following formula (B):

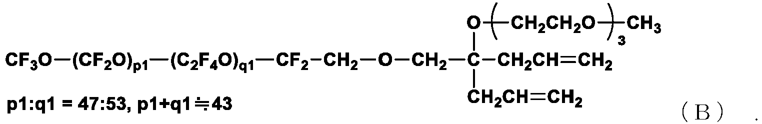

In a reactor, 50 g (1.1×10⁻² mol) of a compound having the following formula (B) obtained above:

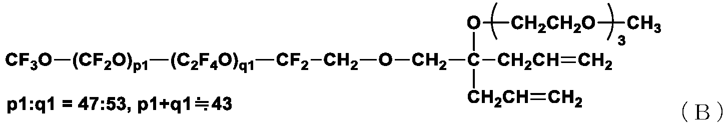

25 g of 1,3-bis(trifluoromethyl)benzene, 5.4 g (4.4×10⁻² mol) of trimethoxysilane, and 4.2×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum, obtaining 51 g of a liquid product.

On ¹H-NMR analysis, the compound was identified to have a structure of the following formula (C):

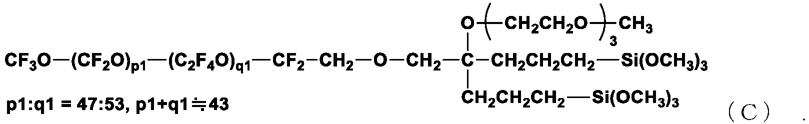

### [Synthesis Example 2]

In a reactor, 50 g (1.2×10⁻² mol) of a compound having the following formula (D):

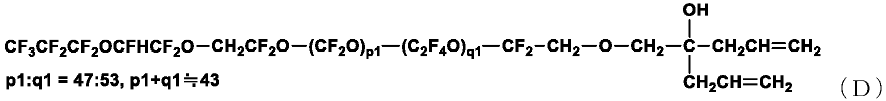

19.4 g (7.2×10⁻² mol) of triethylene glycol 2-bromoethyl methyl ether, and 0.09 g (2.4×10⁻⁴ mol) of tetrabutylammonium iodide were mixed. Subsequently, 4.0 g (7.2× 10⁻² mol) of potassium hydroxide was added, and then the mixture was heated at 60°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, obtaining 47 g of a fluoropolyether group-containing polymer having the following formula (E):

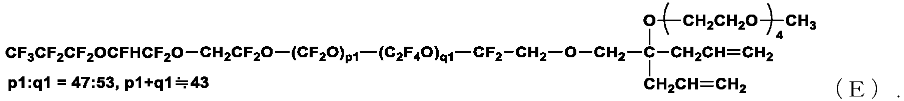

In a reactor, 25 g (5.7×10⁻³ mol) of a compound having the following formula (E) obtained above:

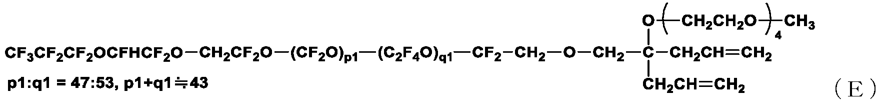

13 g of 1,3-bis(trifluoromethyl)benzene, 2.8 g (2.3×10⁻² mol) of trimethoxysilane, and 2.2×10⁻² g of chloroplatinic acid/vinylsiloxane complex in toluene (containing 5.6×10⁻⁷ mol of Pt) were mixed, and the mixture was aged at 80°C for 24 hours. Thereafter, the solvent and unreacted reactants were distilled off in vacuum, obtaining 47 g of a liquid product.

On ¹H-NMR analysis, the compound was identified to have a structure of the following formula (F):

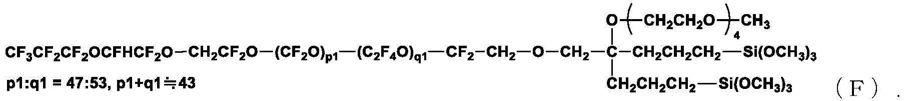

### [Synthesis Example 3]

In a reactor, 50 g of 1,3-bis(trifluoromethyl)benzene, 0.014 g (2.6×10⁻⁵ mol) of tris(pentafluorophenyl)borane, 50 g (1.3×10⁻² mol) of a compound having the following formula (A): 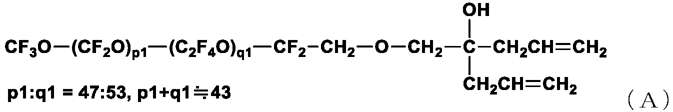 were mixed, 25 g (1.3×10⁻¹ mol) of a siloxane having the following formula (G): 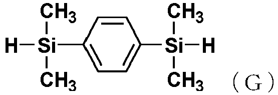 was slowly added dropwise, and then the mixture was heated at 25°C for 1 hour. Thereafter, water was added dropwise, and the lower layer or fluoro compound layer was recovered by separatory operation and washed with acetone. The lower layer or fluoro compound layer after washing was recovered again. The residual solvent was distilled off in vacuum, obtaining 46 g of a fluoropolyether group-containing polymer having the following formula (H):

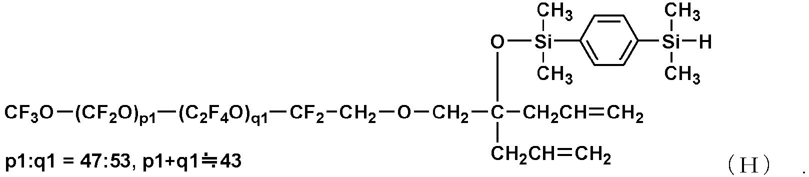

In a reactor, 20 g (4.5×10⁻³ mol) of a compound having the following formula (H) obtained above:

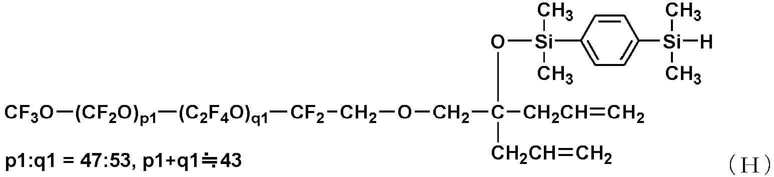

20 g of 1,3-bis(trifluoromethyl)benzene, 2.8 g (1.4×10⁻² mol) of a polyether compound having the following formula (I): 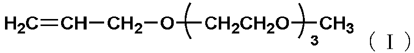 and 2.0×10⁻² g of chloroplatinic acid/vinylsiloxane complex in toluene (containing 5.1×10⁻⁷ mol of Pt) were mixed, and the mixture was aged at 80°C for 24 hours. Thereafter, the solvent and unreacted reactants were distilled off in vacuum. Thereafter, acetone was added, and then the fluoro compound was washed by separatory operation. The lower layer or fluoro compound layer after washing was recovered again. The residual solvent was distilled off in vacuum, obtaining 21 g of a fluoropolyether group-containing polymer having the following formula (J):

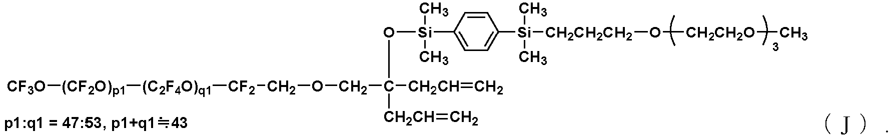

In a reactor, 20 g (4.3×10⁻³ mol) of a compound having the following formula (J) obtained above:

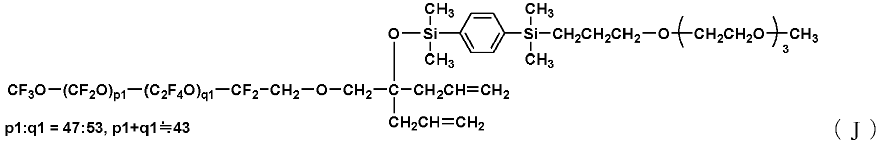

10 g of 1,3-bis(trifluoromethyl)benzene, 2.1 g (1.7×10⁻² mol) of trimethoxysilane, and 1.9×10⁻² g of chloroplatinic acid/vinylsiloxane complex in toluene (containing 4.9×10⁻⁷ mol of Pt) were mixed, and the mixture was aged at 80°C for 24 hours. Thereafter, the solvent and unreacted reactants were distilled off in vacuum, obtaining 19 g of a liquid product.

On ¹H-NMR analysis, the compound was identified to have a structure of the following formula (K):

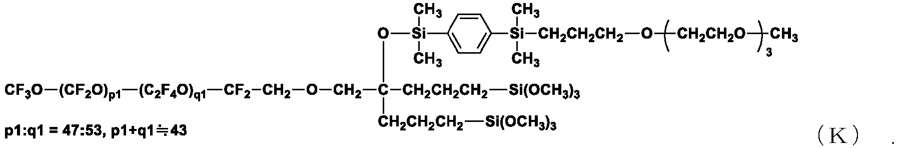

### [Synthesis Example 4]

In a reactor, 50 g of 1,3-bis(trifluoromethyl)benzene, 0.014 g (2.6×10⁻⁵ mol) of tris(pentafluorophenyl)borane, 50 g (1.3×10⁻² mol) of a compound having the following formula (A): 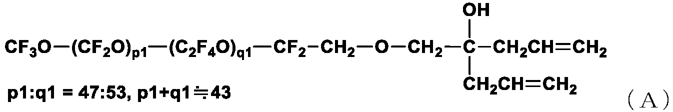 were mixed, 10 g (2.6× 10⁻² mol) of a polyethersilane having the following formula (L): 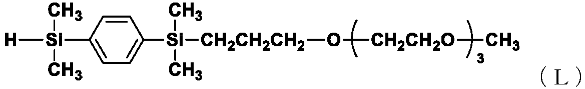 was slowly added dropwise, and then the mixture was heated at 25°C for 1 hour. Thereafter, water was added dropwise, and the lower layer or fluoro compound layer was recovered by separatory operation and washed with acetone. The lower layer or fluoro compound layer after washing was recovered again. The residual solvent was distilled off in vacuum, obtaining 52 g of a fluoropolyether group-containing polymer having the following formula (J):

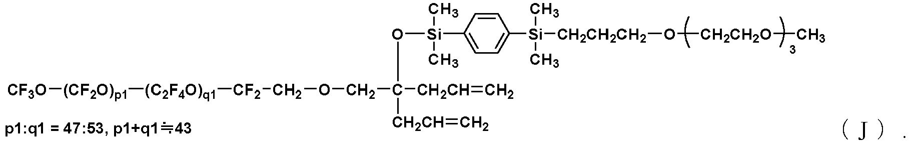

The compound is the same as the intermediate of Synthesis Example 3.

Using 20 g (4.3×10⁻³ mol) of the fluoropolyether group-containing polymer having the formula (J) obtained above, 19 g of a liquid product having a structure having the formula (K) was obtained in the same manner as in Synthesis Example 3.

### [Synthesis Example 5]

In a reactor, 25 g (1.2×10⁻² mol) of a compound having the following formula (M):

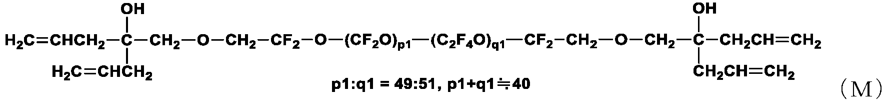

17 g (7.4×10⁻² mol) of diethylene glycol 2-bromoethyl methyl ether, and 0.09 g (2.4×10⁻⁴ mol) of tetrabutylammonium iodide were mixed. Subsequently, 4.1 g (7.4×10⁻² mol) of potassium hydroxide was added, and then the mixture was heated at 60°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, obtaining 21 g of a fluoropolyether group-containing polymer having the following formula (N):

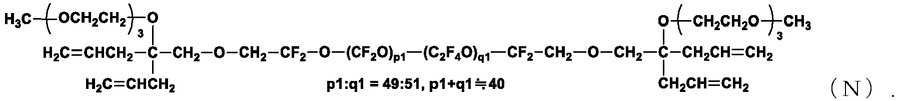

In a reactor, 20 g (9.2×10⁻³ mol) of a compound having the following formula (N) obtained above:

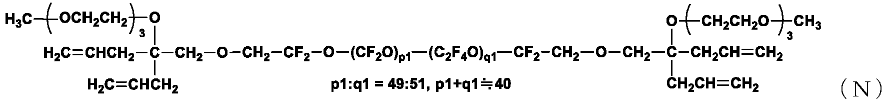

20 g of 1,3-bis(trifluoromethyl)benzene, 4.5 g (3.7×10⁻² mol) of trimethoxysilane, and 3.7×10⁻² g of chloroplatinic acid/vinylsiloxane complex in toluene (containing 9.5×10⁻⁷ mol of Pt) were mixed, and the mixture was aged at 80°C for 24 hours. Thereafter, the solvent and unreacted reactants were distilled off in vacuum, obtaining 21 g of a liquid product.

On ¹H-NMR analysis, the compound was identified to have a structure of the following formula (O):

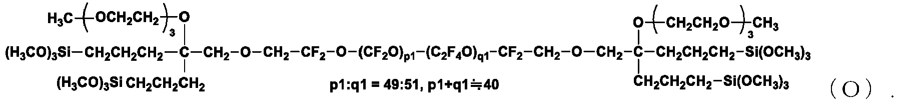

### [Synthesis Example 6]

In a reactor, 50 g (9.5×10⁻³ mol) of a compound having the following formula (P):

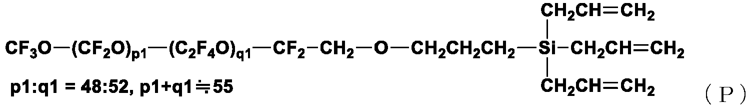

50 g of 1,3-bis(trifluoromethyl)benzene, 5.1 g (9.5× 10⁻³ mol) of a polyethersilane having the following formula (Q): 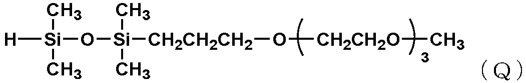 and 4.2×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 48 g of a fluoropolyether group-containing polymer having the following formula (R):

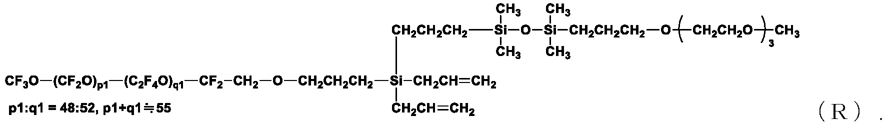

In a reactor, 40 g (7.1×10⁻³ mol) of a compound having the following formula (R) obtained above:

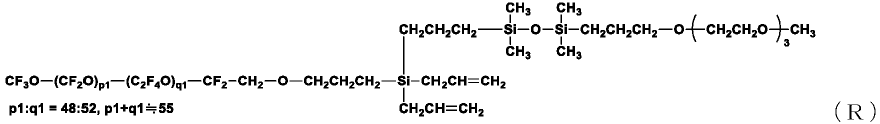

20 g of 1,3-bis(trifluoromethyl)benzene, 3.4 g (2.8× 10⁻² mol) of trimethoxysilane, and 3.2×10⁻² g of chloroplatinic acid/vinylsiloxane complex in toluene (containing 8.2×10⁻⁷ mol of Pt) were mixed, and the mixture was aged at 80°C for 24 hours. Thereafter, the solvent and unreacted reactants were distilled off in vacuum, obtaining 41 g of a liquid product.

On ¹H-NMR analysis, the compound was identified to have a structure of the following formula (S):

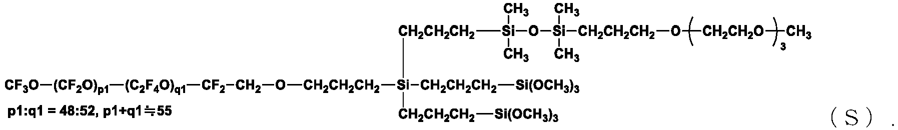

### [Synthesis Example 7]

In a reactor, 50 g (7.7×10⁻³ mol) of a compound having the following formula (T):

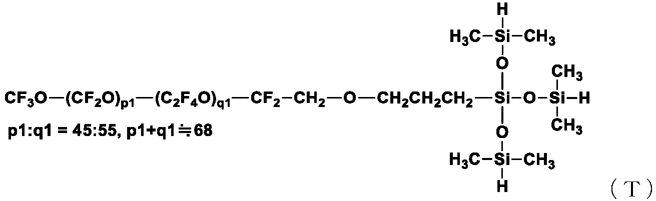

50 g of 1,3-bis(trifluoromethyl)benzene, 5.1 g (7.7×10⁻³ mol) of a polyether compound having the following formula (U): 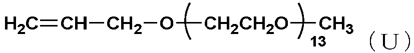 and 3.4×10⁻² g of chloroplatinic acid/vinylsiloxane complex in toluene (containing 8.7×10⁻⁷ mol of Pt) were mixed, and the mixture was aged at 80°C for 24 hours. Thereafter, the solvent and unreacted reactants were distilled off in vacuum. Thereafter, dibutyl ether was added, and the fluoro compound was washed by separatory operation. The lower layer or fluoro compound layer after washing was recovered again. The residual solvent was distilled off in vacuum, obtaining 45 g of a fluoropolyether group-containing polymer having the following formula (V):

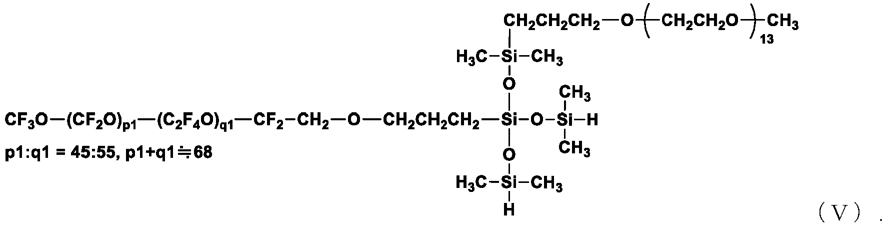

In a reactor, 30 g (4.3×10⁻³ mol) of a compound having the following formula (V) obtained above:

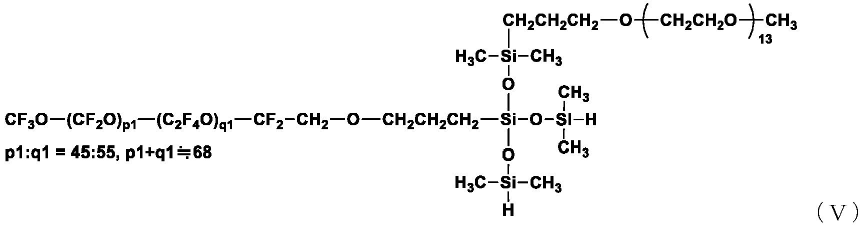

30 g of 1,3-bis(trifluoromethyl)benzene, 2.6 g (1.7×10⁻² mol) of vinyltrimethoxysilane, and 1.9×10⁻² g of chloroplatinic acid/vinylsiloxane complex in toluene (containing 4.8×10⁻⁷ mol of Pt) were mixed, and the mixture was aged at 80°C for 24 hours. Thereafter, the solvent and unreacted reactants were distilled off in vacuum, obtaining 29 g of a liquid product.

On ¹H-NMR analysis, the compound was identified to have a structure of the following formula (W):

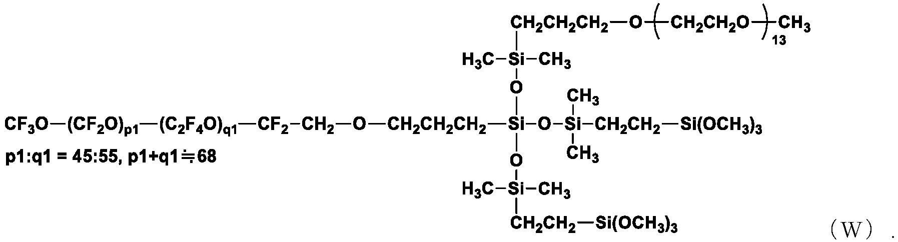

### [Synthesis Example 8]

In a reactor, 50 g (1.1×10⁻² mol) of a compound having the following formula (X):

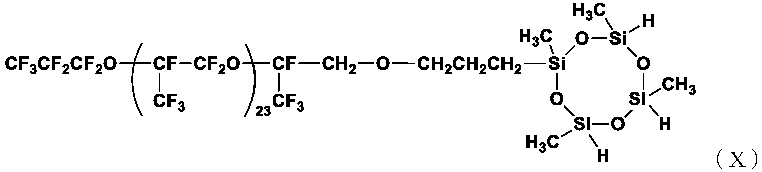

50 g of 1,3-bis(trifluoromethyl)benzene, 4.8 g (1.1×10⁻² mol) of a polyether compound having the following formula (Y): 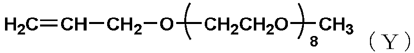 and 4.8×10⁻² g of chloroplatinic acid/vinylsiloxane complex in toluene (containing 1.2×10⁻⁶ mol of Pt) were mixed, and the mixture was aged at 80°C for 24 hours. Thereafter, the solvent and unreacted reactants were distilled off in vacuum. Thereafter, dibutyl ether was added, and the fluoro compound was washed by separatory operation. The lower layer or fluoro compound layer after washing was recovered again. The residual solvent was distilled off in vacuum, obtaining 47 g of a fluoropolyether group-containing polymer having the following formula (Z):

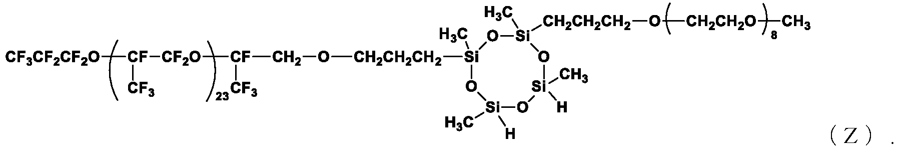

In a reactor, 40 g (8.3×10⁻³ mol) of a compound having the following formula (Z) obtained above:

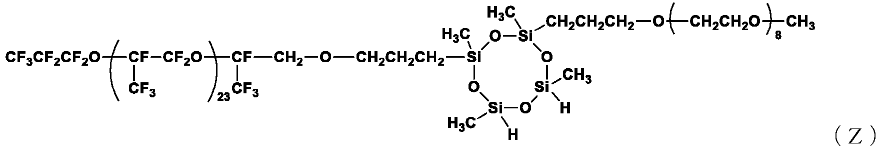

40 g of 1,3-bis(trifluoromethyl)benzene, 7.7 g (3.3×10⁻² mol) of octenyltrimethoxysilanetrimethoxysilane, and 3.7×10⁻² g of chloroplatinic acid/vinylsiloxane complex in toluene (containing 9.5×10⁻⁷ mol of Pt) were mixed, and the mixture was aged at 80°C for 24 hours. Thereafter, the solvent and unreacted reactants were distilled off in vacuum, obtaining 41 g of a liquid product.

On ¹H-NMR analysis, the compound was identified to have a structure of the following formula (AA):

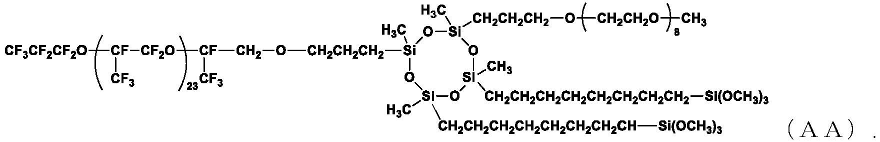

### [Synthesis Example 9]

In a reactor, 50 g (1.1×10⁻² mol) of a compound having the following formula (AB):

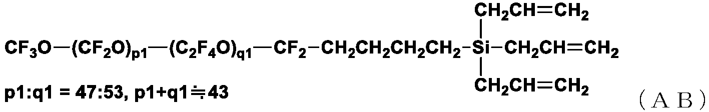

50 g of 1,3-bis(trifluoromethyl)benzene, 8.7 g (2.2×10⁻² mol) of a polyethersilane having the following formula (AC): 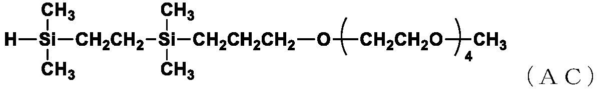 and 4.9×10⁻² g of chloroplatinic acid/vinylsiloxane complex in toluene (containing 1.3×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 53 g of a fluoropolyether group-containing polymer having the following formula (AD):

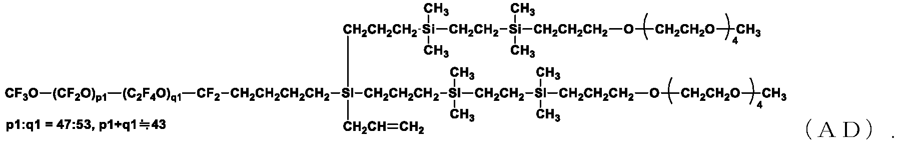

In a reactor, 50 g (9.9×10⁻³ mol) of a compound having the following formula (AD) obtained above:

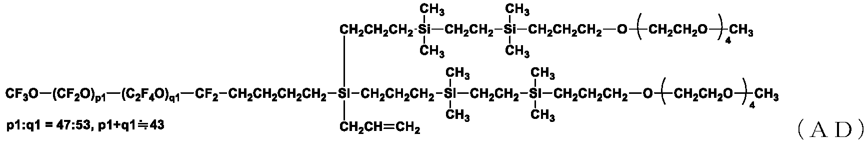

50 g of 1,3-bis(trifluoromethyl)benzene, 2.4 g (2.8×10⁻² mol) of trimethoxysilane, and 4.4×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum, obtaining 50 g of a liquid product.

On ¹H-NMR analysis, the compound was identified to have a structure of the following formula (AE):

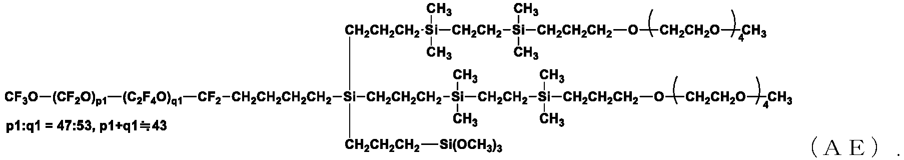

### [Synthesis Example 10]

In a reactor, 50 g (1.2×10⁻² mol) of a compound having the following formula (AF):

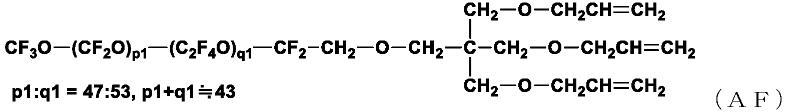

50 g of 1,3-bis(trifluoromethyl)benzene, 3.3 g (1.2×10⁻² mol) of a polyethersilane having the following formula (AG): 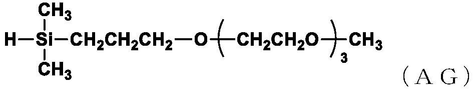 and 5.3×10⁻² g of chloroplatinic acid/vinylsiloxane complex in toluene (containing 1.4×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 51 g of a fluoropolyether group-containing polymer having the following formula (AH):

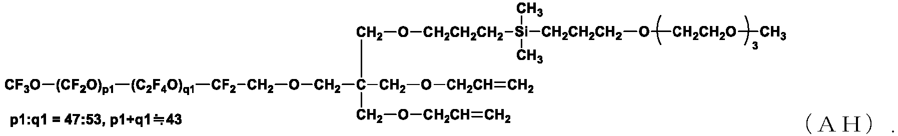

In a reactor, 40 g (8.7×10⁻³ mol) of a compound having the following formula (AH) obtained above:

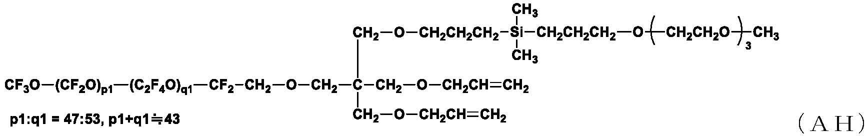

40 g of 1,3-bis(trifluoromethyl)benzene, 10 g (3.5×10⁻² mol) of a siloxane compound having a trimethoxysilyl group, represented by the following formula (10A): 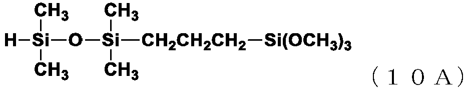 and 3.9×10⁻² g of chloroplatinic acid/vinylsiloxane complex in toluene (containing 1.0×10⁻⁶ mol of Pt) were mixed, and the mixture was aged at 80°C for 24 hours. Thereafter, the solvent and unreacted reactants were distilled off in vacuum, obtaining 41 g of a liquid product.

On ¹H-NMR analysis, the compound was identified to have a structure of the following formula (AI):

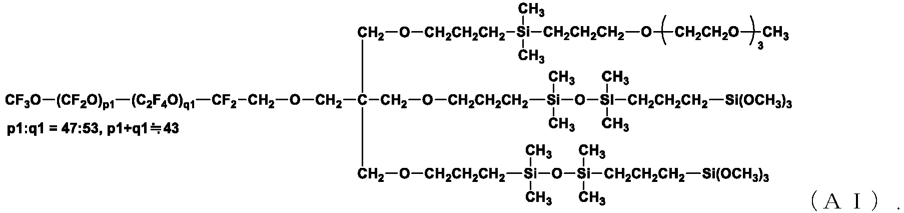

### [Synthesis Example 11]

In a reactor, 100 g (4.3×10⁻² mol) of a compound having the following formula (AJ):

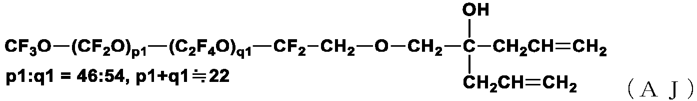

100 g of 1,3-bis(trifluoromethyl)benzene, 14 g (4.3×10⁻² mol) of a polyethersilane having the following formula (Q): 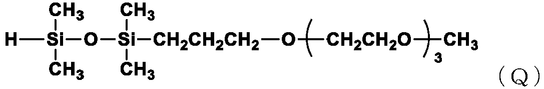 and 2.6×10⁻¹ g of chloroplatinic acid/vinylsiloxane complex in toluene (containing 2.1×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 104 g of a fluoropolyether group-containing polymer having the following formula (AK):

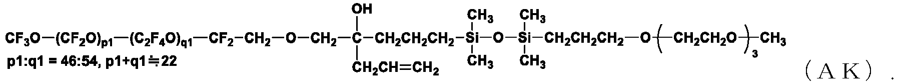

In a reactor, 50 g (1.9×10⁻² mol) of a compound having the following formula (AK) obtained above:

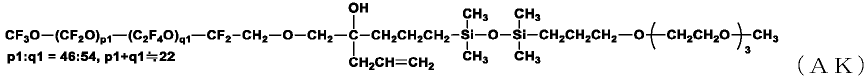

25 g of 1,3-bis(trifluoromethyl)benzene, 4.6 g (3.7×10⁻² mol) of trimethoxysilane, and 4.2×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum, obtaining 50 g of a liquid product.

On ¹H-NMR analysis, the compound was identified to have a structure of the following formula (AL):

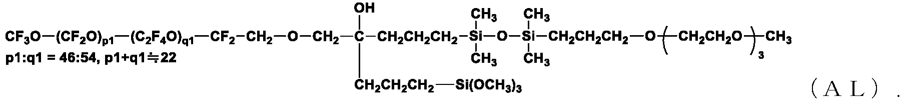

### [Synthesis Example 12]

In a reactor, 50 g (1.0×10⁻² mol) of a compound having the following formula (AM):

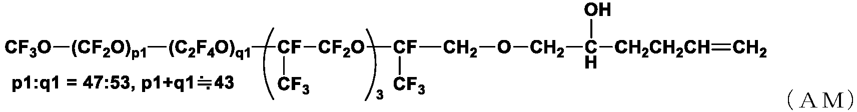

14 g (6.2×10⁻² mol) of diethylene glycol 2-bromoethyl methyl ether, and 0.08 g (2.1×10⁻⁴ mol) of tetrabutylammonium iodide were mixed. Subsequently, 3.4 g (6.2× 10⁻² mol) of potassium hydroxide was added, and then the mixture was heated at 60°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, obtaining 48 g of a fluoropolyether group-containing polymer having the following formula (AN):

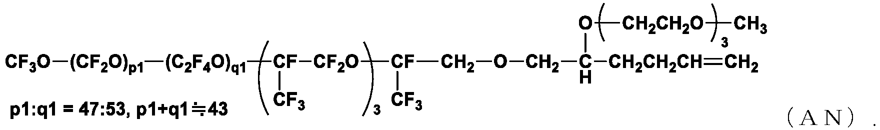

In a reactor, 40 g (8.0×10⁻³ mol) of a compound having the following formula (AN) obtained above:

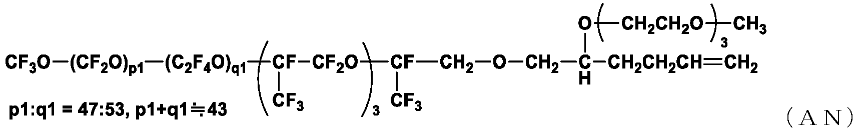

20 g of 1,3-bis(trifluoromethyl)benzene, 2.0 g (1.6×10⁻² mol) of trimethoxysilane, and 3.1×10⁻² g of chloroplatinic acid/vinylsiloxane complex in toluene (containing 7.9×10⁻⁷ mol of Pt) were mixed, and the mixture was aged at 80°C for 24 hours. Thereafter, the solvent and unreacted reactants were distilled off in vacuum, obtaining 40 g of a liquid product.

On ¹H-NMR analysis, the compound was identified to have a structure of the following formula (AO):

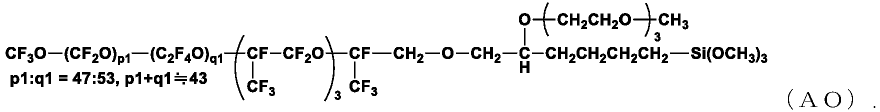

### [Synthesis Example 13]

In a reactor, 100 g (2.4×10⁻² mol) of a compound having the following formula (AP):

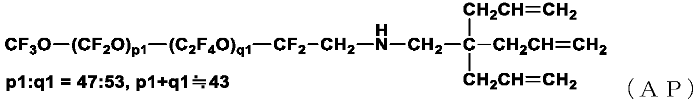

100 g of 1,3-bis(trifluoromethyl)benzene, 8.1 g (2.4×10⁻² mol) of a polyethersilane having the following formula (Q): 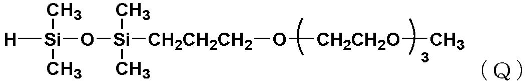 and 4.0×10⁻² g of chloroplatinic acid/vinylsiloxane complex in toluene (containing 1.0×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 96 g of a fluoropolyether group-containing polymer having the following formula (AQ):

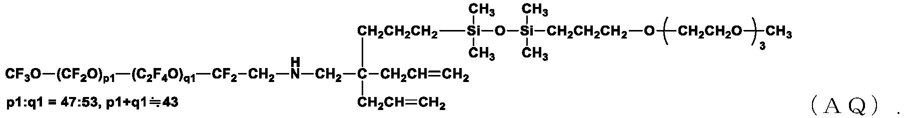

In a reactor, 50 g (1.1×10⁻² mol) of a compound having the following formula (AQ) obtained above:

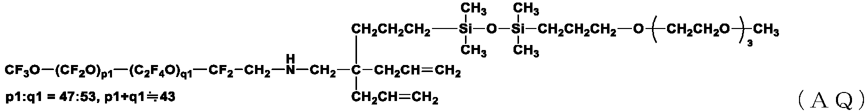

25 g of 1,3-bis(trifluoromethyl)benzene, 3.4 g (4.4×10⁻² mol) of trimethoxysilane, and 1.9×10⁻² g of chloroplatinic acid/vinylsiloxane complex in toluene (containing 4.8×10⁻⁷ mol of Pt) were mixed, and the mixture was aged at 80°C for 24 hours. Thereafter, the solvent and unreacted reactants were distilled off in vacuum, obtaining 49 g of a liquid product.

On ¹H-NMR analysis, the compound was identified to have a structure of the following formula (AR):

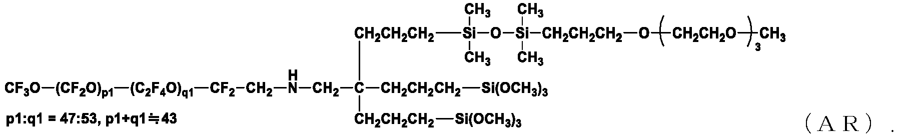

### [Synthesis Example 14]

In a reactor, 50 g (1.1×10⁻² mol) of a compound having the following formula (B):

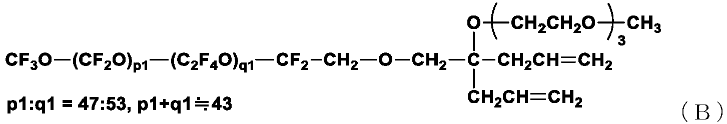

25 g of 1,3-bis(trifluoromethyl)benzene, 2.6 g (2.1×10⁻² mol) of trimethoxysilane, and 4.2×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum, obtaining 51 g of a liquid product.

On ¹H-NMR analysis, the compound was identified to be a mixture of structures of the following formula (C) and formula (AS): The mixing ratio was (C) : (AS) = 96 : 4.

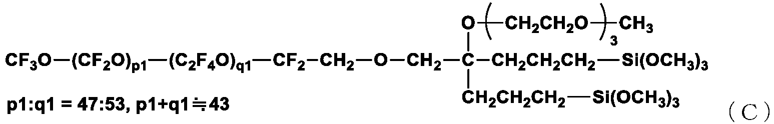

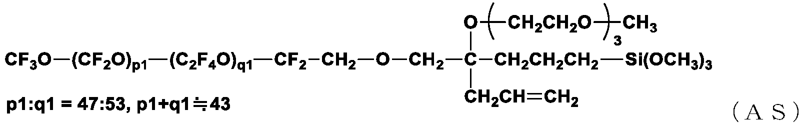

### [Synthesis Example 15]

In a reactor, 50 g (7.7×10⁻³ mol) of a compound having the following formula (AT):

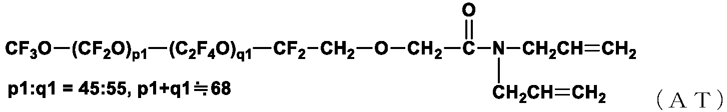

50 g of 1,3-bis(trifluoromethyl)benzene, 3.0 g (7.7×10⁻³ mol) of a polyethersilane having the following formula (L): 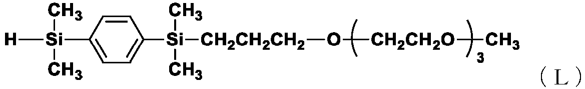 and 4.7×10⁻² g of chloroplatinic acid/vinylsiloxane complex in toluene (containing 1.2×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 49 g of a fluoropolyether group-containing polymer having the following formula (AU):

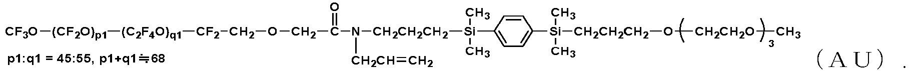

In a reactor, 40 g (5.8×10⁻³ mol) of a compound having the following formula (AU) obtained above:

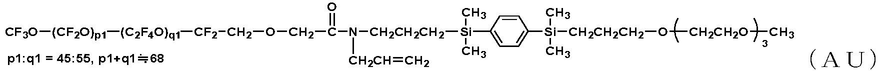

20 g of 1,3-bis(trifluoromethyl)benzene, 1.4 g (1.2×10⁻² mol) of trimethoxysilane, and 3.3×10⁻² g of chloroplatinic acid/vinylsiloxane complex in toluene (containing 8.5×10⁻⁷ mol of Pt) were mixed, and the mixture was aged at 80°C for 24 hours. Thereafter, the solvent and unreacted reactants were distilled off in vacuum, obtaining 39 g of a liquid product.

On ¹H-NMR analysis, the compound was identified to have a structure of the following formula (AV):

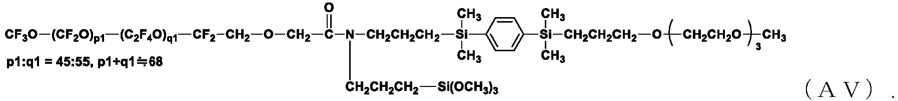

### [Synthesis Example 16]

In a reactor, 50 g (1.2×10⁻² mol) of a compound having the following formula (AW):

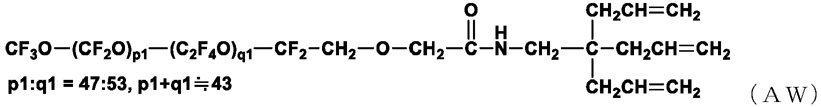

50 g of 1,3-bis(trifluoromethyl)benzene, 3.1 g (1.2×10⁻² mol) of a polyethersilane having the following formula (AG): 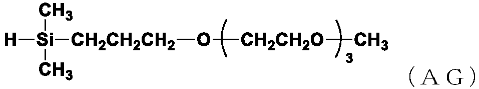 and 5.1×10⁻² g of chloroplatinic acid/vinylsiloxane complex in toluene (containing 1.3×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 48 g of a fluoropolyether group-containing polymer having the following formula (AX):

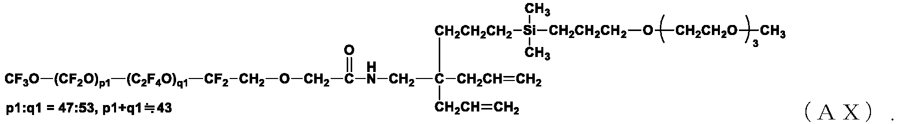

In a reactor, 40 g (8.7×10⁻³ mol) of a compound having the following formula (AX) obtained above:

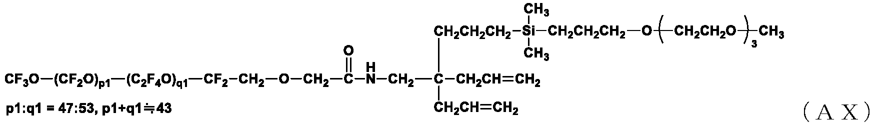

20 g of 1,3-bis(trifluoromethyl)benzene, 4.3 g (3.5× 10⁻² mol) of trimethoxysilane, and 3.9×10⁻² g of chloroplatinic acid/vinylsiloxane complex in toluene (containing 1.0×10⁻⁶ mol of Pt) were mixed, and the mixture was aged at 80°C for 24 hours. Thereafter, the solvent and unreacted reactants were distilled off in vacuum, obtaining 40 g of a liquid product.

On ¹H-NMR analysis, the compound was identified to have a structure of the following formula (AY):

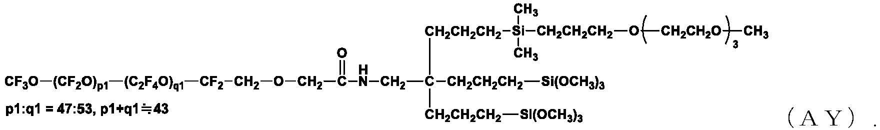

### [Synthesis Example 17]

In a reactor, 50 g (9.5×10⁻³ mol) of a compound having the following formula (AZ):

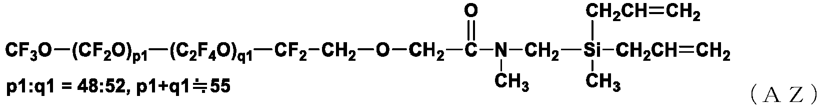

50 g of 1,3-bis(trifluoromethyl)benzene, 3.2 g (9.5× 10⁻³ mol) of a polyethersilane having the following formula (Q): 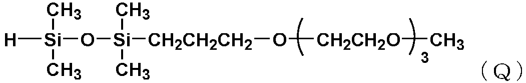 and 5.8×10⁻² g of chloroplatinic acid/vinylsiloxane complex in toluene (containing 1.5×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 51 g of a fluoropolyether group-containing polymer having the following formula (BA):

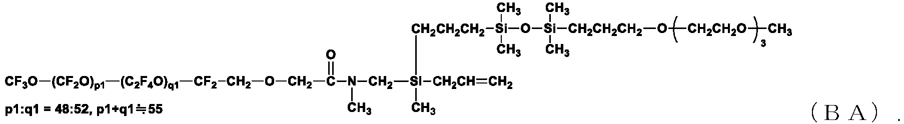

In a reactor, 50 g (8.9×10⁻³ mol) of a compound having the following formula (BA) obtained above:

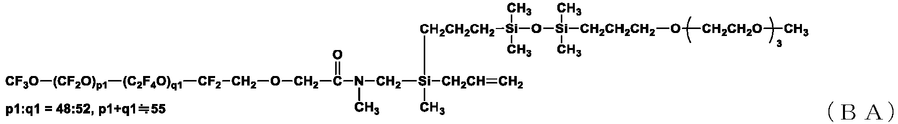

25 g of 1,3-bis(trifluoromethyl)benzene, 2.2 g (1.7×10⁻² mol) of trimethoxysilane, and 5.4×10⁻² g of chloroplatinic acid/vinylsiloxane complex in toluene (containing 1.4×10⁻⁶ mol of Pt) were mixed, and the mixture was aged at 80°C for 24 hours. Thereafter, the solvent and unreacted reactants were distilled off in vacuum, obtaining 50 g of a liquid product.

On ¹H-NMR analysis, the compound was identified to have a structure of the following formula (BB):

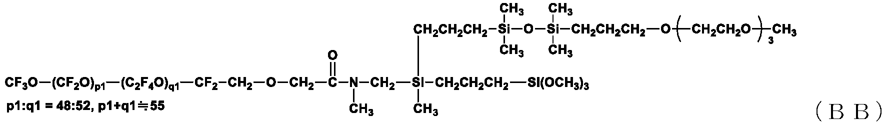

### [Synthesis Example 18]

In a reactor, 30 g (7.0×10⁻³ mol) of a compound having the following formula (BC):

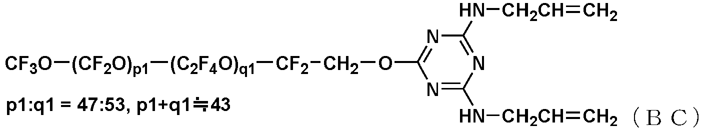

30 g of 1,3-bis(trifluoromethyl)benzene, 2.8 g (7.0×10⁻³ mol) of a polyethersilane having the following formula (L): 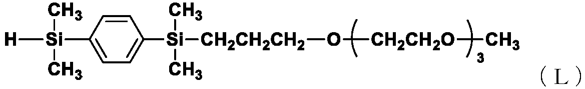 and 4.3×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 29 g of a fluoropolyether group-containing polymer having the following formula (BD):

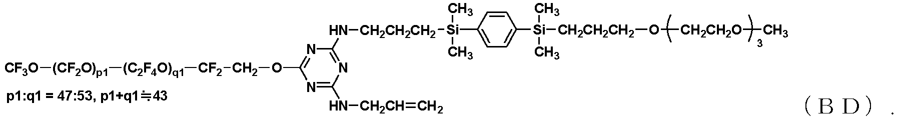

In a reactor, 25 g (5.3×10⁻³ mol) of a compound having the following formula (BD) obtained above:

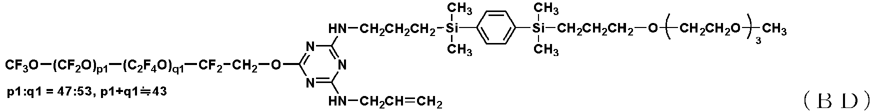

13 g of 1,3-bis(trifluoromethyl)benzene, 1.3 g (1.0×10⁻² mol) of trimethoxysilane, and 3.0×10⁻² g of chloroplatinic acid/vinylsiloxane complex in toluene (containing 7.7×10⁻⁷ mol of Pt) were mixed, and the mixture was aged at 80°C for 24 hours. Thereafter, the solvent and unreacted reactants were distilled off in vacuum, obtaining 24 g of a liquid product.

On ¹H-NMR analysis, the compound was identified to have a structure of the following formula (BE):

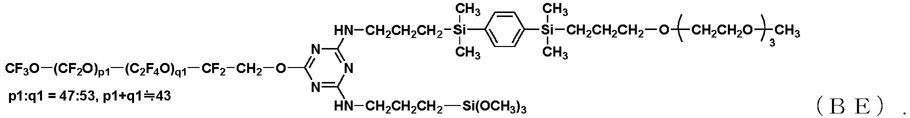

### [Synthesis Example 19]

In a reactor, 20 g (5.2×10⁻³ mol) of a compound having the following formula (BF):

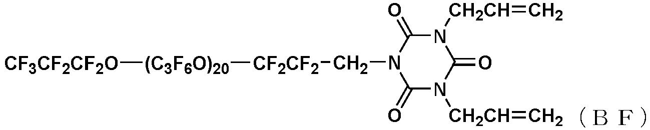

20 g of 1,3-bis(trifluoromethyl)benzene, 3.7 g (5.2×10⁻³ mol) of a polyethersilane having the following formula (BG): 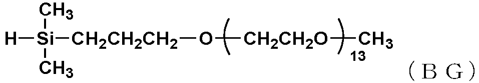 and 2.0×10⁻² g of chloroplatinic acid/vinylsiloxane complex in toluene (containing 5.1×10⁻⁷ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 17 g of a fluoropolyether group-containing polymer having the following formula (BH):

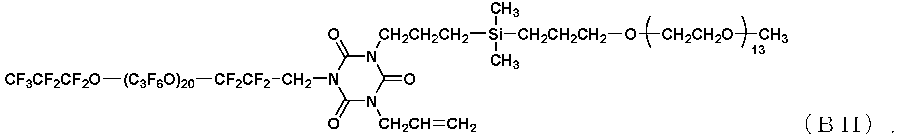

In a reactor, 15 g (3.3×10⁻³ mol) of a compound having the following formula (BH) obtained above:

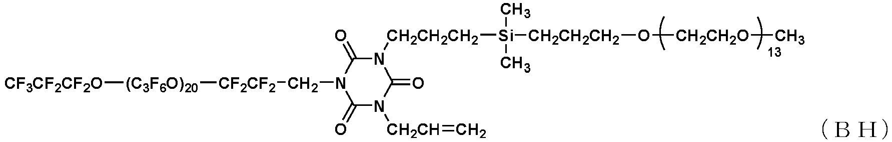

8 g of 1,3-bis(trifluoromethyl)benzene, 0.81 g (6.6×10⁻³ mol) of trimethoxysilane, and 1.3×10⁻² g of chloroplatinic acid/vinylsiloxane complex in toluene (containing 3.3×10⁻⁷ mol of Pt) were mixed, and the mixture was aged at 80°C for 24 hours. Thereafter, the solvent and unreacted reactants were distilled off in vacuum, obtaining 15 g of a liquid product.

On ¹H-NMR analysis, the compound was identified to have a structure of the following formula (BI):

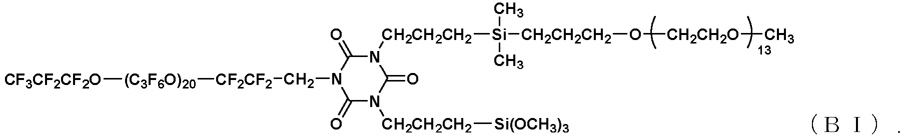

### [Synthesis Example 20]

In a reactor, 100 g (2.4×10⁻² mol) of a compound having the following formula (BJ):

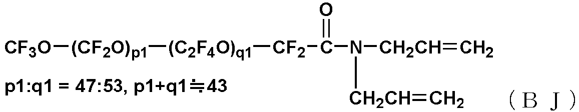

100 g of 1,3-bis(trifluoromethyl)benzene, 14 g (2.4×10⁻² mol) of a polyethersilane having the following formula (BK): 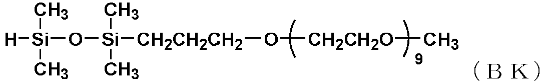 and 9.0×10⁻² g of chloroplatinic acid/vinylsiloxane complex in toluene (containing 2.3×10⁻⁶ mol of Pt) were mixed, and the mixture was aged at 80°C for 24 hours. Thereafter, the solvent and unreacted reactants were distilled off in vacuum. Thereafter, acetone was added, and the fluoro compound was washed by separatory operation. The lower layer or fluoro compound layer after washing was recovered again. The residual solvent was distilled off in vacuum, obtaining 106 g of a fluoropolyether group-containing polymer having the following formula (BL):

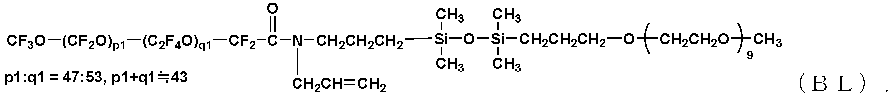

In a reactor, 100 g (2.1×10⁻² mol) of a compound having the following formula (BL) obtained above:

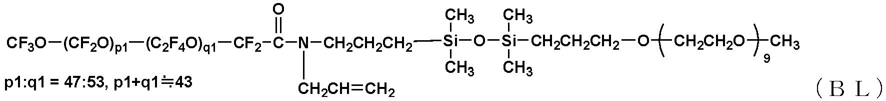

50 g of 1,3-bis(trifluoromethyl)benzene, 14 g (4.2×10⁻² mol) of a silane compound having a trimethoxysilyl group, represented by the following formula (BM): 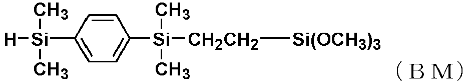 and 7.9×10⁻² g of chloroplatinic acid/vinylsiloxane complex in toluene (containing 2.0×10⁻⁶ mol of Pt) were mixed, and the mixture was aged at 80°C for 24 hours. Thereafter, the solvent and unreacted reactants were distilled off in vacuum, obtaining 105 g of a liquid product.

On ¹H-NMR analysis, the compound was identified to have a structure of the following formula (BN):

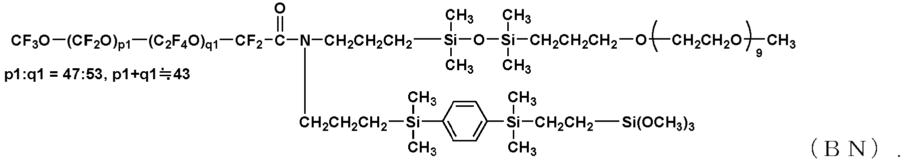

### [Synthesis Example 21]

In a reactor, 50 g (1.1×10⁻² mol) of a compound having the following formula (BO):

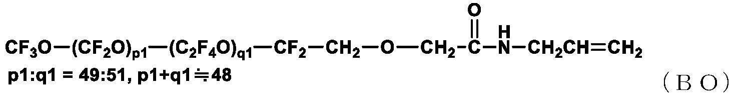

15 g (6.5×10⁻² mol) of diethylene glycol 2-bromoethyl methyl ether, and 0.08 g (2.2× 10⁻⁴ mol) of tetrabutylammonium iodide were mixed. Subsequently, 3.6 g (6.5×10⁻² mol) of potassium hydroxide was added, and then the mixture was heated at 60°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, obtaining 48 g of a fluoropolyether group-containing polymer having the following formula (BP):

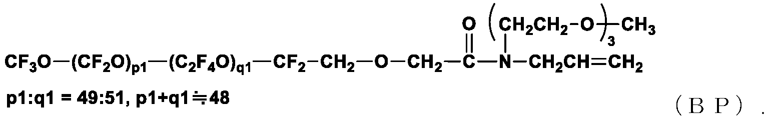

In a reactor, 45 g (9.5×10⁻³ mol) of a compound having the following formula (BP) obtained above:

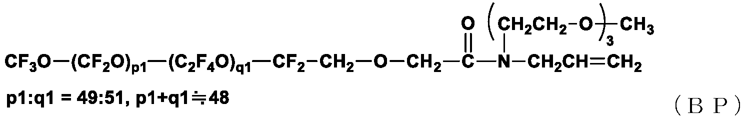

23 g of 1,3-bis(trifluoromethyl)benzene, 5.6 g (1.9×10⁻² mol) of a silane compound having a trimethoxysilyl group, represented by the following formula (BQ): 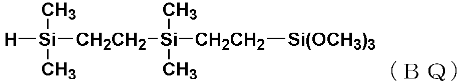 and 3.6×10⁻² g of chloroplatinic acid/vinylsiloxane complex in toluene (containing 9.2×10⁻⁷ mol of Pt) were mixed, and the mixture was aged at 80°C for 24 hours. Thereafter, the solvent and unreacted reactants were distilled off in vacuum, obtaining 45 g of a liquid product.

On ¹H-NMR analysis, the compound was identified to have a structure of the following formula (BR):

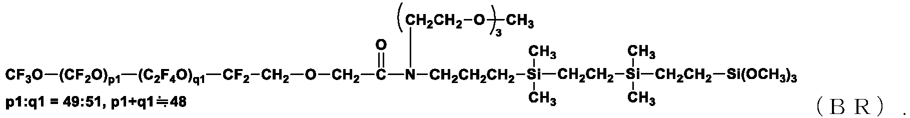

### [Synthesis Example 22]

In a reactor, 100 g (1.5×10⁻² mol) of a compound having the following formula (BS):

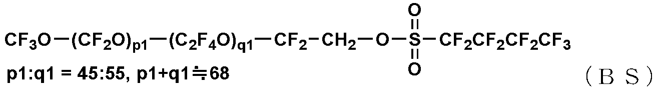

100 g of 1,3-bis(trifluoromethyl)benzene, 12 g (6.0×10⁻² mol) of a polyether compound having the following formula (BT): 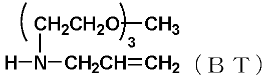 and 6.1 g (6.0×10⁻² mol) of triethylamine were mixed, and then the mixture was heated at 90°C for 18 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 101 g of a fluoropolyether group-containing polymer having the following formula (BU):

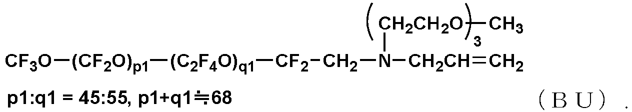

In a reactor, 80 g (1.2×10⁻² mol) of a compound having the following formula (BU) obtained above:

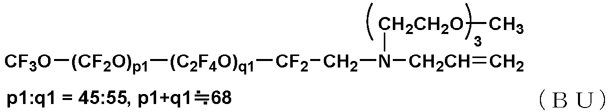

40 g of 1,3-bis(trifluoromethyl)benzene, 5.7 g (4.7×10⁻² mol) of trimethoxysilane, and 4.5×10⁻² g of chloroplatinic acid/vinylsiloxane complex in toluene (containing 1.2×10⁻⁶ mol of Pt) were mixed, and the mixture was aged at 80°C for 24 hours. Thereafter, the solvent and unreacted reactants were distilled off in vacuum, obtaining 79 g of a liquid product.

On ¹H-NMR analysis, the compound was identified to have a structure of the following formula (BV):

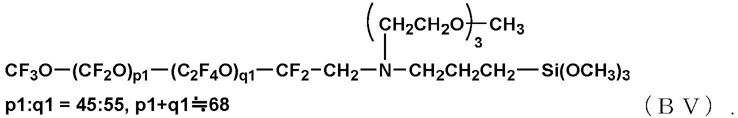

### [Synthesis Example 23]

In a reactor, 50 g (1.6×10⁻² mol) of a compound having the following formula (BW):

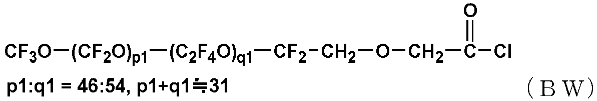

25 g of 1,3-bis(trifluoromethyl)benzene, 13 g (6.4×10⁻² mol) of a polyether compound having the following formula (BT): 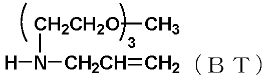 and 6.5 g (6.4×10⁻² mol) of triethylamine were mixed, and then the mixture was heated at 60°C for 15 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 47 g of a fluoropolyether group-containing polymer having the following formula (BX):

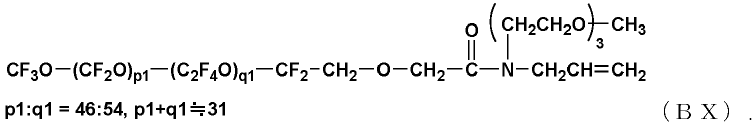

In a reactor, 40 g (1.3×10⁻² mol) of a compound having the following formula (BX) obtained above:

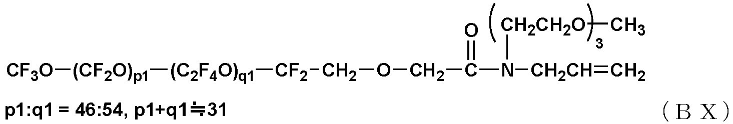

20 g of 1,3-bis(trifluoromethyl)benzene, 3.1 g (2.5× 10⁻² mol) of trimethoxysilane, and 4.8×10⁻² g of chloroplatinic acid/vinylsiloxane complex in toluene (containing 1.2×10⁻⁶ mol of Pt) were mixed, and the mixture was aged at 80°C for 24 hours. Thereafter, the solvent and unreacted reactants were distilled off in vacuum, obtaining 41 g of a liquid product.

On ¹H-NMR analysis, the compound was identified to have a structure of the following formula (BY):

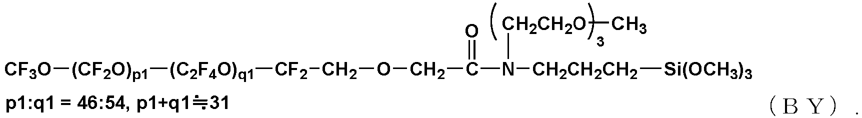

### [Synthesis Example 24]

In a reactor, 100 g (2.4×10⁻² mol) of a compound having the following formula (BZ):

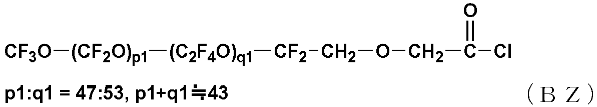

50 g of 1,3-bis(trifluoromethyl)benzene, 30 g (9.6×10⁻² mol) of a polyether compound having the following formula (CA): 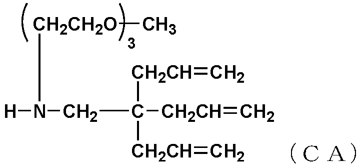 and 6.5 g (9.6×10⁻² mol) of triethylamine were mixed, and then the mixture was heated at 60°C for 15 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 96 g of a fluoropolyether group-containing polymer having the following formula (CB):

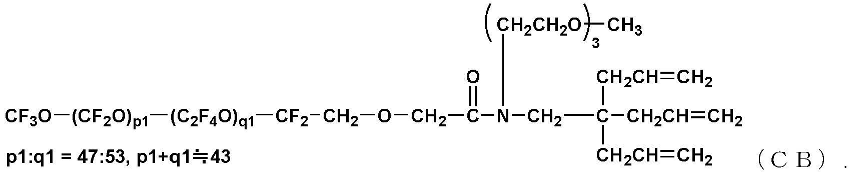

In a reactor, 50 g (1.1×10⁻² mol) of a compound having the following formula (CB) obtained above:

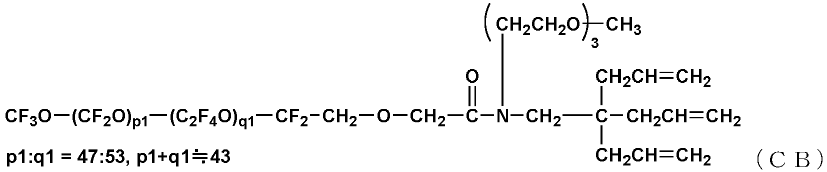

25 g of 1,3-bis(trifluoromethyl)benzene, 8.2 g (6.7×10⁻² mol) of trimethoxysilane, and 4.2×10⁻² g of chloroplatinic acid/vinylsiloxane complex in toluene (containing 1.1×10⁻⁶ mol of Pt) were mixed, and the mixture was aged at 80°C for 24 hours. Thereafter, the solvent and unreacted reactants were distilled off in vacuum, obtaining 50 g of a liquid product.

On ¹H-NMR analysis, the compound was identified to have a structure of the following formula (CC):

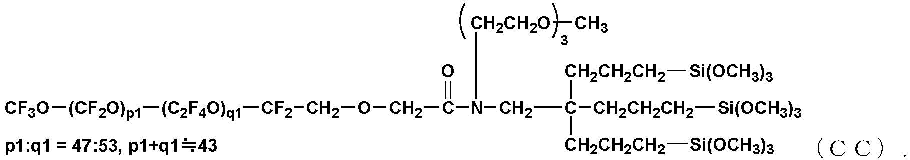

### [Synthesis Example 25]

In a reactor, 40 g (9.0×10⁻³ mol) of a compound having the following formula (CB) obtained in the same manner as in Synthesis Example 24:

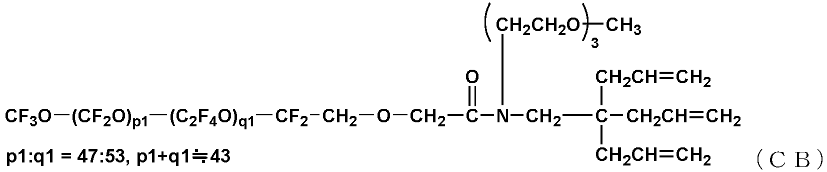

40 g of 1,3-bis(trifluoromethyl)benzene, 15 g (5.4×10⁻² mol) of a silane compound having a trimethoxysilyl group, represented by the following formula (CD): 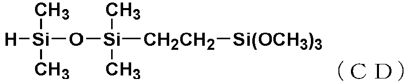 and 3.4×10⁻² g of chloroplatinic acid/vinylsiloxane complex in toluene (containing 8.7×10⁻⁷ mol of Pt) were mixed, and the mixture was aged at 80°C for 24 hours. Thereafter, the solvent and unreacted reactants were distilled off in vacuum, obtaining 44 g of a liquid product.

On ¹H-NMR analysis, the compound was identified to have a structure of the following formula (CE):

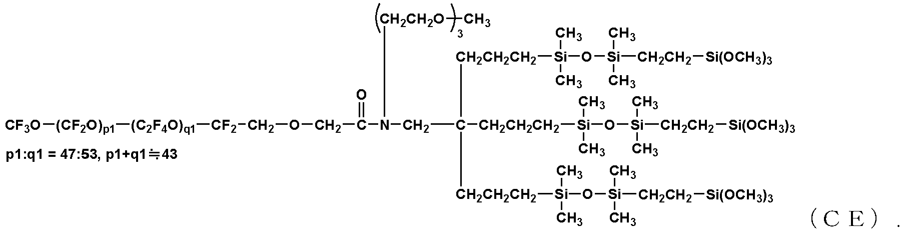

### [Synthesis Example 26]

In a reactor, 50 g (9.8×10⁻³ mol) of a compound having the following formula (CF):

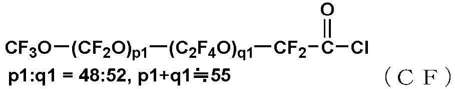

25 g of 1,3-bis(trifluoromethyl)benzene, 12 g (3.9×10⁻² mol) of a polyether compound having the following formula (CA): 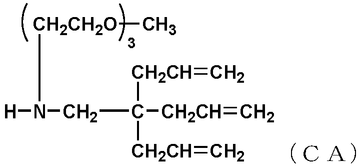 and 4.0 g (3.9×10⁻² mol) of triethylamine were mixed, and then the mixture was heated at 60°C for 15 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 51 g of a fluoropolyether group-containing polymer having the following formula (CG):

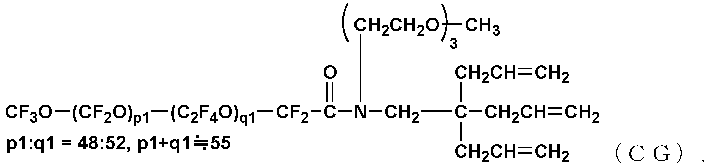

In a reactor, 50 g (9.3×10⁻³ mol) of a compound having the following formula (CG) obtained above:

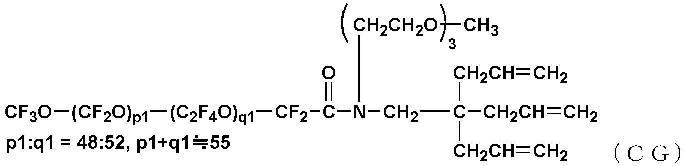

25 g of 1,3-bis(trifluoromethyl)benzene, 6.8 g (5.5× 10⁻² mol) of trimethoxysilane, and 3.6×10⁻² g of chloroplatinic acid/vinylsiloxane complex in toluene (containing 9.2×10⁻⁷ mol of Pt) were mixed, and the mixture was aged at 80°C for 24 hours. Thereafter, the solvent and unreacted reactants were distilled off in vacuum, obtaining 50 g of a liquid product.

On ¹H-NMR analysis, the compound was identified to have a structure of the following formula (CH):

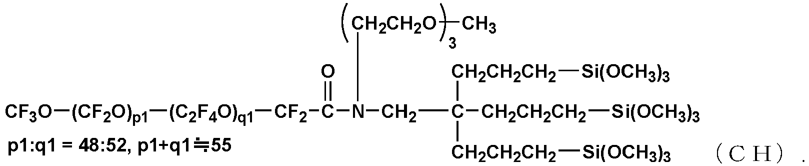

### [Synthesis Example 27]

In a reactor, 50 g (1.4×10⁻² mol) of a compound having the following formula (CI):

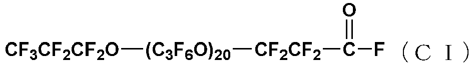

50 g of 1,3-bis(trifluoromethyl)benzene, 20 g (5.5×10⁻² mol) of a polyether compound having the following formula (CJ): 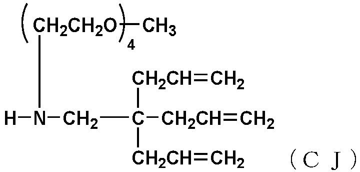 and 5.6 g (5.5×10⁻² mol) of triethylamine were mixed, and then the mixture was heated at 60°C for 15 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 52 g of a fluoropolyether group-containing polymer having the following formula (CK):

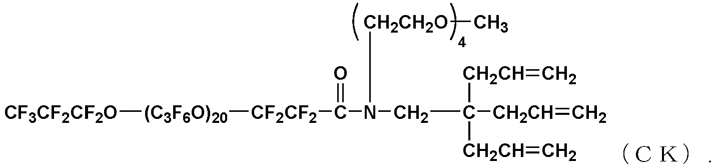

In a reactor, 50 g (1.3×10⁻² mol) of a compound having the following formula (CK) obtained above:

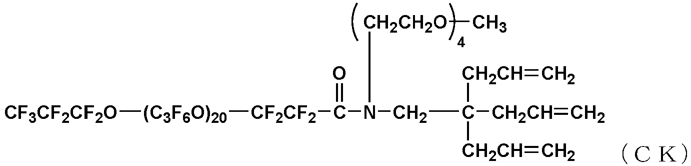

25 g of 1,3-bis(trifluoromethyl)benzene, 9.2 g (7.5× 10⁻² mol) of trimethoxysilane, and 5.0×10⁻² g of chloroplatinic acid/vinylsiloxane complex in toluene (containing 1.3×10⁻⁶ mol of Pt) were mixed, and the mixture was aged at 80°C for 24 hours. Thereafter, the solvent and unreacted reactants were distilled off in vacuum, obtaining 51 g of a liquid product.

On ¹H-NMR analysis, the compound was identified to have a structure of the following formula (CL):

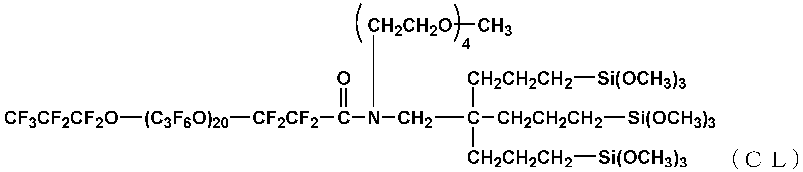

### [Synthesis Example 28]

In a reactor, 50 g (1.2×10⁻² mol) of a compound having the following formula (CM):

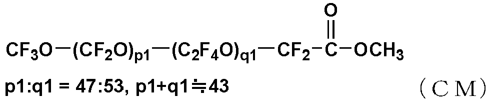

25 g of 1,3-bis(trifluoromethyl)benzene, 9.8 g (4.8×10⁻² mol) of a polyether compound having the following formula (BT): 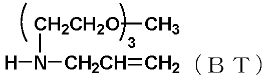 and 4.9 g (4.8×10⁻² mol) of triethylamine were mixed, and then the mixture was heated at 80°C for 24 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 49 g of a fluoropolyether group-containing polymer having the following formula (CN):

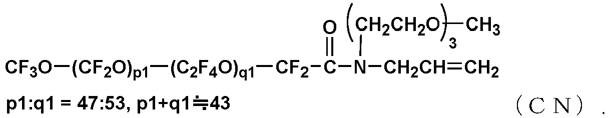

In a reactor, 40 g (9.3×10⁻³ mol) of a compound having the following formula (CN) obtained above:

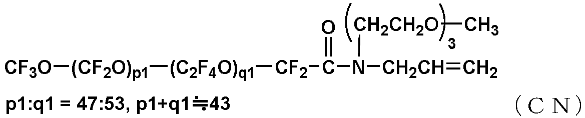

20 g of 1,3-bis(trifluoromethyl)benzene, 7.1 g (1.9×10⁻² mol) of a silane compound having a trimethoxysilyl group, represented by the following formula (CO): 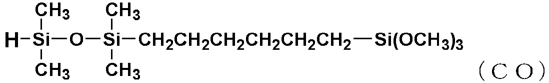 and 3.5×10⁻² g of chloroplatinic acid/vinylsiloxane complex in toluene (containing 9.0×10⁻⁷ mol of Pt) were mixed, and the mixture was aged at 80°C for 24 hours. Thereafter, the solvent and unreacted reactants were distilled off in vacuum, obtaining 53 g of a liquid product.

On ¹H-NMR analysis, the compound was identified to have a structure of the following formula (CP):

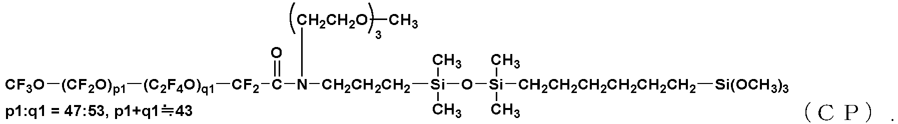

### [Synthesis Example 29]

In a reactor, 50 g (9.7×10⁻³ mol) of a compound having the following formula (CQ):

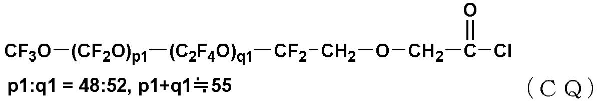

25 g of 1,3-bis(trifluoromethyl)benzene, 19 g (3.9×10⁻² mol) of a polyether compound having the following formula (CR): 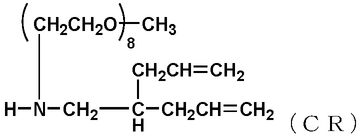 and 3.9 g (3.9×10⁻² mol) of triethylamine were mixed, and then the mixture was heated at 60°C for 15 hours. At the end of heating, the solution was cooled to room temperature, and water was added dropwise. The lower layer or fluoro compound layer was recovered by separatory operation and washed with acetone. The lower layer or fluoro compound layer after washing was recovered again. The residual solvent was distilled off in vacuum, obtaining 48 g of a fluoropolyether group-containing polymer having the following formula (CS):

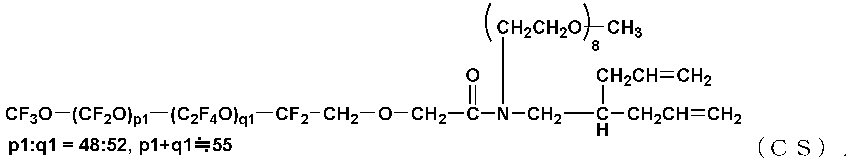

In a reactor, 40 g (7.2×10⁻³ mol) of a compound having the following formula (CS) obtained above:

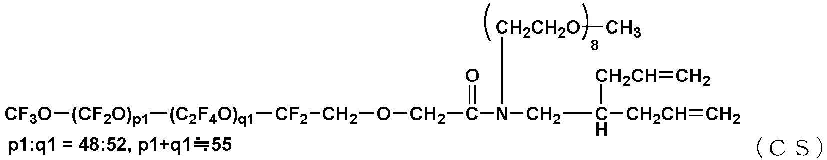

20 g of 1,3-bis(trifluoromethyl)benzene, 4.7 g (2.9×10⁻² mol) of triethoxysilane, and 2.7×10⁻² g of chloroplatinic acid/vinylsiloxane complex in toluene (containing 6.9×10⁻⁷ mol of Pt) were mixed, and the mixture was aged at 80°C for 24 hours. Thereafter, the solvent and unreacted reactants were distilled off in vacuum, obtaining 41 g of a liquid product.

On ¹H-NMR analysis, the compound was identified to have a structure of the following formula (CT):

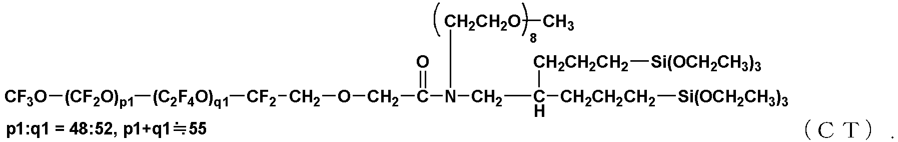

### [Example 1]

The final compound obtained in Synthesis Example 1 was dissolved in Novec 7200 (Ethyl perfluorobutyl ether manufactured by 3M) so as to have a concentration of 20% by weight, thereby a surface treating agent was prepared.

### [Example 2]

The final compound obtained in Synthesis Example 2 was dissolved in Opteon SF 10 (Methyl perfluoroheptenyl ether manufactured by Chemours-Mitsui Fluoroproducts Co., Ltd.) so as to have a concentration of 20% by weight, thereby a surface treating agent was prepared.

### [Example 3]

The final compound obtained in Synthesis Example 3 was dissolved in Novec 7200 (Ethyl perfluorobutyl ether manufactured by 3M) so as to have a concentration of 20% by weight, thereby a surface treating agent was prepared.

### [Example 4]

The final compound obtained in Synthesis Example 6 was dissolved in ASAHIKLIN AC-6000 (Tridecafluorooctane manufactured by AGC Inc.) so as to have a concentration of 20% by weight, thereby a surface treating agent was prepared.

### [Example 5]

The final compound obtained in Synthesis Example 7 was dissolved in Novec 7200 (Ethyl perfluorobutyl ether manufactured by 3M) so as to have a concentration of 20% by weight, thereby a surface treating agent was prepared.

### [Example 6]

The final compound obtained in Synthesis Example 10 was dissolved in Novec 7200 (Ethyl perfluorobutyl ether manufactured by 3M) so as to have a concentration of 20% by weight, thereby a surface treating agent was prepared.

### [Example 7]

The final compound obtained in Synthesis Example 11 was dissolved in ASAHIKLIN AE-3000 (Tetrafluoroethyl trifluoroethyl ether manufactured by AGC Inc.) so as to have a concentration of 20% by weight, thereby a surface treating agent was prepared.

### [Example 8]

The final compound obtained in Synthesis Example 13 was dissolved in Novec 7200 (Ethyl perfluorobutyl ether manufactured by 3M) so as to have a concentration of 20% by weight, thereby a surface treating agent was prepared.

### [Example 9]

The final compound obtained in Synthesis Example 14 was dissolved in Novec 7200 (Ethyl perfluorobutyl ether manufactured by 3M) so as to have a concentration of 20% by weight, thereby a surface treating agent was prepared.

### [Example 10]

The final compound obtained in Synthesis Example 15 was dissolved in Novec 7200 (Ethyl perfluorobutyl ether manufactured by 3M) so as to have a concentration of 20% by weight, thereby a surface treating agent was prepared.

### [Example 11]

The final compound obtained in Synthesis Example 16 was dissolved in Novec 7200 (Ethyl perfluorobutyl ether manufactured by 3M) so as to have a concentration of 20% by weight, thereby a surface treating agent was prepared.

### [Example 12]

The final compound obtained in Synthesis Example 18 was dissolved in Novec 7200 (Ethyl perfluorobutyl ether manufactured by 3M) so as to have a concentration of 20% by weight, thereby a surface treating agent was prepared.

### [Example 13]

The final compound obtained in Synthesis Example 25 was dissolved in Novec 7200 (Ethyl perfluorobutyl ether manufactured by 3M) so as to have a concentration of 20% by weight, thereby a surface treating agent was prepared.

### [Example 14]

The final compound obtained in Synthesis Example 26 was dissolved in Novec 7200 (Ethyl perfluorobutyl ether manufactured by 3M) so as to have a concentration of 20% by weight, thereby a surface treating agent was prepared.

### [Comparative Example 1]

A compound having the following formula (CU) 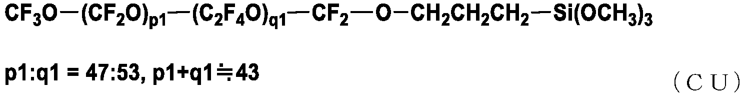 was dissolved in Novec 7200 (Ethyl perfluorobutyl ether manufactured by 3M) so as to have a concentration of 20% by weight, thereby a surface treating agent was prepared.

### [Comparative Example 2]

A compound having the following formula (CV) 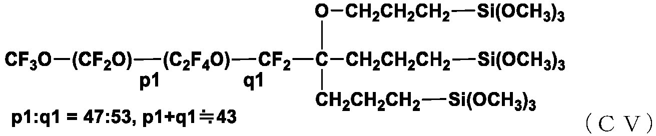 was dissolved in Novec 7200 (Ethyl perfluorobutyl ether manufactured by 3M) so as to have a concentration of 20% by weight, thereby a surface treating agent was prepared.

### [Comparative Example 3]

A compound having the following formula (CW) 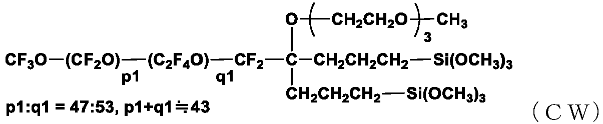 was dissolved in Novec 7200 (Ethyl perfluorobutyl ether manufactured by 3M) so as to have a concentration of 20% by weight, thereby a surface treating agent was prepared.

### Preparation of surface treating agent and formation of cured film

Surface treating agents were prepared as in the Examples and Comparative Examples. Each surface treating agent was vacuum-deposited (treatment conditions were as follows: pressure: 2.0×10⁻² Pa, heating temperature: 700°C) on glass (Gorilla manufactured by Corning Incorporated) whose outermost surface was coated with SiO₂ in a thickness of 10 nm, and cured for 12 hours under an atmosphere of 25°C and a humidity of 50% to form a cured film having a film thickness of 10 nm.

### Evaluation of water/oil repellency

### [Evaluation of initial water/oil repellency]

Using a contact angle meter Drop Master (Kyowa Interface Science Co., Ltd.), the cured film on glass was measured for a contact angle with water as an index of water repellent property (droplet 2 µl, temperature 25°C, humidity 40%). The results (initial contact angle with water) are shown in Table 1.

At the initial, all the films of Examples and Comparative Examples showed excellent water repellent property.

### [Evaluation of abrasion resistance]

Using a friction tester (Shinto Scientific Co., Ltd.), the cured film on glass was rubbed under the conditions shown below. Thereafter, the cured film was similarly measured for a contact angle with water (water repellent property) as an index of abrasion resistance. The test environmental conditions included temperature 25°C and humidity 40%. The results (contact angle with water after abrasion) are shown in Table 1.

### Abrasion resistance against steel wool

| | |
|---|---|
| Steel wool: | Bonster # 0000 |
| Contact area: | 1 cm² |
| Moving distance (one way): | 40 mm |
| Moving speed: | 4,800 mm/min |
| Load: | 1 kg/1 cm² |
| Number of steel wool abrasion: | 15,000 cycles |

### Abrasion resistance against erasers

| | |
|---|---|
| Eraser: | Raber Eraser (manufactured by Minoan) |
| Contact area: | 6 mmφ |
| Moving distance (one way): | 60 mm |
| Moving speed: | 3,600 mm/min |
| Load: | 1 kg/6 mmφ |
| Number of steel wool abrasion: | 5,000 cycles |

In the surface treating agent of Examples 1 to 14, the presence of a polyether group in the molecule of the compound used improved the substrate adhesion and wettability, and exhibited high durability to abrasion against erasers. Because the linking portion between the fluorine chain and the terminal adhesive group branch point was long, molecular mobility could be secured, and high durability to abrasion against steel wool was confirmed. The surface treating agent of Comparative Example 1 has low durability to abrasion against erasers and low durability to abrasion against steel wool, and the surface treating agent of Comparative Example 2 has high durability to abrasion against steel wool, but has low durability to abrasion against erasers. The surface treating agent of Comparative Example 3 has high durability to abrasion against erasers, but has low durability to abrasion against steel wool. As described above, in the surface treating agents of Examples, both the durability to abrasion against erasers and the durability to abrasion against steel wool could be achieved at the high level.

**[Table 1]**

| | Compound | Initial contact angle with water (°) | Contact angle with water after steel wool abrasion (°) | Contact angle with water after eraser abrasion (°) |
|---|---|---|---|---|
| Example 1 | Synthesis Example 1 | 118 | 109 | 106 |
| Example 2 | Synthesis Example 2 | 117 | 108 | 108 |
| Example 3 | Synthesis Example 3 | 116 | 107 | 104 |
| Example 4 | Synthesis Example 6 | 115 | 109 | 104 |
| Example 5 | Synthesis Example 7 | 113 | 108 | 107 |
| Example 6 | Synthesis Example 10 | 112 | 106 | 105 |
| Example 7 | Synthesis Example 11 | 117 | 103 | 101 |
| Example 8 | Synthesis Example 13 | 118 | 104 | 104 |
| Example 9 | Synthesis Example 14 | 116 | 108 | 104 |
| Example 10 | Synthesis Example 15 | 116 | 103 | 101 |
| Example 11 | Synthesis Example 16 | 117 | 105 | 106 |
| Example 12 | Synthesis Example 18 | 114 | 102 | 101 |
| Example 13 | Synthesis Example 25 | 117 | 109 | 107 |
| Example 14 | Synthesis Example 26 | 118 | 110 | 106 |
| Comparative Example 1 | Formula (CU) | 118 | 91 | 71 |
| Comparative Example 2 | Formula (CV) | 116 | 110 | 86 |
| Comparative Example 3 | Formula (CW) | 115 | 99 | 96 |

### [Example 15]

The compound obtained in Synthesis Example 1 was dissolved in Novec 7200 (Ethyl perfluorobutyl ether manufactured by 3M) so as to have a concentration of 0.1% by weight, thereby a surface treating agent was prepared.

### [Example 16]

The compound obtained in Synthesis Example 2 was dissolved in Opteon SF 10 (Methyl perfluoroheptenyl ether manufactured by Chemours-Mitsui Fluoroproducts Co., Ltd.) so as to have a concentration of 0.1% by weight, thereby a surface treating agent was prepared.

### [Example 17]

The compound obtained in Synthesis Example 3 was dissolved in Novec 7200 (Ethyl perfluorobutyl ether manufactured by 3M) so as to have a concentration of 0.1% by weight, thereby a surface treating agent was prepared.

### [Example 18]

The compound obtained in Synthesis Example 6 was dissolved in ASAHIKLIN AC-6000 (Tridecafluorooctane manufactured by AGC Inc.) so as to have a concentration of 0.1% by weight, thereby a surface treating agent was prepared.

### [Example 19]

The compound obtained in Synthesis Example 10 was dissolved in Novec 7200 (Ethyl perfluorobutyl ether manufactured by 3M) so as to have a concentration of 0.1% by weight, thereby a surface treating agent was prepared.

### [Example 20]

The compound obtained in Synthesis Example 16 was dissolved in Novec 7200 (Ethyl perfluorobutyl ether manufactured by 3M) so as to have a concentration of 0.1% by weight, thereby a surface treating agent was prepared.

### [Example 21]

The compound obtained in Synthesis Example 25 was dissolved in Novec 7200 (Ethyl perfluorobutyl ether manufactured by 3M) so as to have a concentration of 0.1% by weight, thereby a surface treating agent was prepared.

### [Example 22]

The compound obtained in Synthesis Example 26 was dissolved in Novec 7200 (Ethyl perfluorobutyl ether manufactured by 3M) so as to have a concentration of 0.1% by weight, thereby a surface treating agent was prepared.

### [Comparative Example 4]

The compound (CU) was dissolved in Novec 7200 (Ethyl perfluorobutyl ether manufactured by 3M) so as to have a concentration of 0.1% by weight, thereby a surface treating agent was prepared.

### [Comparative Example 5]

The compound (CV) was dissolved in Novec 7200 (Ethyl perfluorobutyl ether manufactured by 3M) so as to have a concentration of 0.1% by weight, thereby a surface treating agent was prepared.

### [Comparative Example 6]

The compound (CW) was dissolved in Novec 7200 (Ethyl perfluorobutyl ether manufactured by 3M) so as to have a concentration of 0.1% by weight, thereby a surface treating agent was prepared.

### Preparation of surface treating agent and formation of cured film

Surface treating agents were prepared as in the Examples and Comparative Examples. Each surface treating agent was spray-coated on glass (Gorilla manufactured by Corning Incorporated), and cured under an atmosphere at 120°C for 30 minutes and then under an atmosphere at 25°C and a humidity of 50% for 12 hours to form a cured film having a film thickness of 10 nm.

### Evaluation of water/oil repellency

### [Evaluation of initial water/oil repellency]

Using a contact angle meter Drop Master (Kyowa Interface Science Co., Ltd.), the cured film on glass was measured for a contact angle with water as an index of water repellent property (droplet 2 µl, temperature 25°C, humidity 40%). The results (initial contact angle with water) are shown in Table 2.

At the initial, all the films of Examples and Comparative Examples showed excellent water repellent property.

### [Evaluation of abrasion resistance]

Using a friction tester (Shinto Scientific Co., Ltd.), the cured film on glass was rubbed under the conditions shown below. Thereafter, the cured film was similarly measured for a contact angle with water (water repellent property) as an index of abrasion resistance. The test environmental conditions included temperature 25°C and humidity 40%. The results (contact angle with water after abrasion) are shown in Table 2.

### Abrasion resistance against steel wool

| | |
|---|---|
| Steel wool: | Bonster # 0000 |
| Contact area: | 1 cm² |
| Moving distance (one way): | 40 mm |
| Moving speed: | 4,800 mm/min |
| Load: | 1 kg/1 cm² |
| Number of steel wool abrasion: | 10,000 cycles |

### Abrasion resistance against erasers

| | |
|---|---|
| Eraser: | Raber Eraser (manufactured by Minoan) |
| Contact area: | 6 mmφ |
| Moving distance (one way): | 30 mm |
| Moving speed: | 3,600 mm/min |
| Load: | 1 kg/6 mmφ |
| Number of steel wool abrasion: | 5,000 cycles |

The surface treating agents of Examples 15 to 22 exhibited high durability to abrasion against erasers and high steel wool durability same as at vapor deposition coating. The surface treating agent of Comparative Example 4 has low durability to abrasion against erasers and low durability to abrasion against steel wool, and the surface treating agent of Comparative Example 5 has high durability to abrasion against steel wool, but has low durability to abrasion against erasers. The surface treating agent of Comparative Example 6 has high durability to abrasion against erasers, but has low durability to abrasion against steel wool. As described above, in the surface treating agents of Examples, both the durability to abrasion against erasers and the durability to abrasion against steel wool could be achieved at the high level even when the coating method was changed.

**[Table 2]**

| | Compound | Initial contact angle with water (°) | Contact angle with water after steel wool abrasion (°) | Contact angle with water after eraser abrasion (°) |
|---|---|---|---|---|
| Example 15 | Synthesis Example 1 | 118 | 107 | 108 |
| Example 16 | Synthesis Example 2 | 117 | 107 | 106 |
| Example 17 | Synthesis Example 3 | 116 | 105 | 105 |
| Example 18 | Synthesis Example 6 | 115 | 110 | 103 |
| Example 19 | Synthesis Example 10 | 112 | 104 | 105 |
| Example 20 | Synthesis Example 16 | 117 | 106 | 107 |
| Example 21 | Synthesis Example 25 | 117 | 109 | 105 |
| Example 22 | Synthesis Example 26 | 118 | 107 | 106 |
| Comparative Example 4 | Formula (CU) | 118 | 89 | 64 |
| Comparative Example 5 | Formula (CV) | 116 | 109 | 82 |
| Comparative Example 6 | Formula (CW) | 115 | 96 | 97 |

## Claims

1. A fluoropolyether group-containing polymer having a hydroxyl group or hydrolyzable group and a polyether group, having the general formula (1): 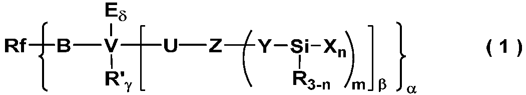
wherein Rf is a mono- or divalent fluoropolyether group,
B is independently a divalent organic group which is selected from the group consisting of a C₁-C₁₀ alkylene group, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms, a carbonyl group, and an amide group, and may contain at least one of an oxygen atom, a sulfur atom, a secondary amine, a tertiary amine, a ketone, an amide, and an ester group,
V is independently a carbon atom, silicon atom, nitrogen atom, or tri- to octavalent organic group,
E is independently a monovalent group represented by -W'(-(LO)ₖ-R")_{f'}, wherein W' is a single bond, oxygen atom, X', or divalent or trivalent group which is a combination of X' and an oxygen atom, X' is a divalent or trivalent group having a C₁-C₂₀ divalent hydrocarbon moiety which may contain a nitrogen atom, silicon atom, siloxane bond, silalkylene bond, or silarylene bond, or amide group, L is independently a C₁-C₄ alkylene group, k is an integer of 1 to 20, R" is a C₁-C₄ alkyl group or a phenyl group, and f' is 1 or 2,
R' is independently a hydrogen atom, hydroxyl group, C₁-C₄ alkyl group, phenyl group, C₁-C₄ alkoxy group, or halogen group,
U is independently a single bond or divalent organic group,
Z is independently a single bond, carbon atom, silicon atom, nitrogen atom, or tri- to octavalent organic group,
Y is independently a divalent hydrocarbon group which may contain at least one selected from an oxygen atom, a sulfur atom, a silicon atom, and a siloxane bond,
R is independently a C₁-C₄ alkyl group or a phenyl group,
X is independently a hydroxyl group or hydrolyzable group,
n is independently an integer of 1 to 3 for each silicon atom to be bonded,
m is independently an integer of 1 to 7,
α is 1 or 2,
β is independently an integer of 1 to 6,
γ is independently 0 or 1,
δ is independently 1 or 2, and
the sum of β, γ, and δ is independently an integer of 2 to 7 for each V to be bonded.

2. The fluoropolyether group-containing polymer of claim 1, wherein in the formula (1), α is 1, and Rf is a group having the general formula (2): 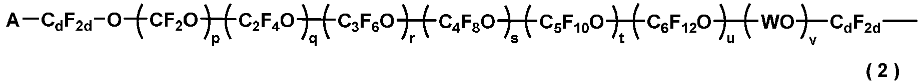
wherein A is a fluorine atom, hydrogen atom, or fluoroalkyl group terminated with a -CF₃ group,
W is a fluoroalkylene group containing at least one hydrogen atom,
d is independently an integer of 1 to 3 for each unit,
p, q, r, s, t, u, and v are each an integer of 0 to 200,
p + q + r + s + t + u + v is 3 to 200,
each of the units may be linear or branched, and
individual repeating units within the parentheses with p, q, r, s, t, u, and v may be randomly bonded.

3. The fluoropolyether group-containing polymer of claim 1, wherein in the formula (1), α is 2, and Rf is a group having the general formula (3): 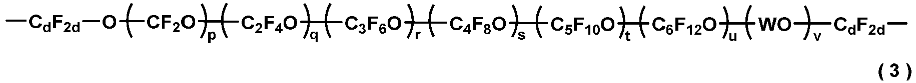
wherein W is a fluoroalkylene group containing at least one hydrogen atom,
d is independently an integer of 1 to 3 for each unit,
p, q, r, s, t, u, and v are each an integer of 0 to 200,
p + q + r + s + t + u + v is 3 to 200,
each of the units may be linear or branched, and
individual repeating units within the parentheses with p, q, r, s, t, u, and v may be randomly bonded.

4. The fluoropolyether group-containing polymer of any one of claims 1 to 3, wherein in the formula (1), B is any one selected from the group represented by the following formulae: 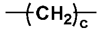 -(CH₂)ₐ-O-(CH₂)_{b}- -(CH₂)ₐ-O- 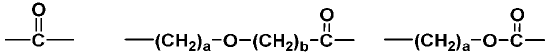 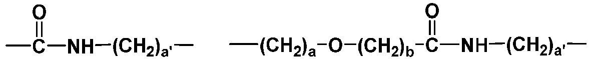 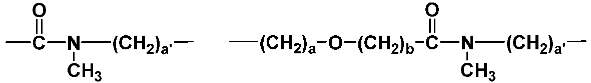 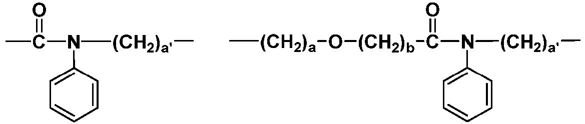 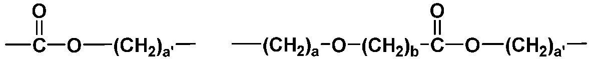 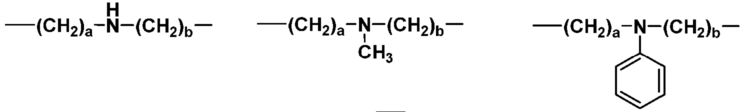 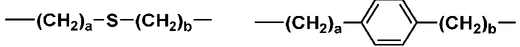 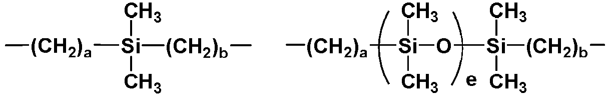 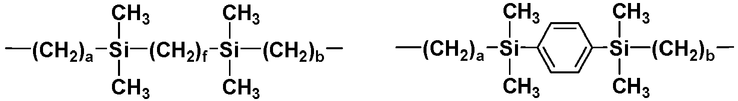 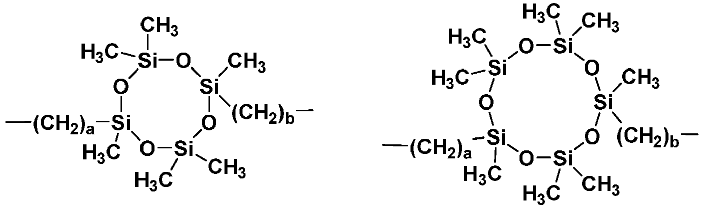 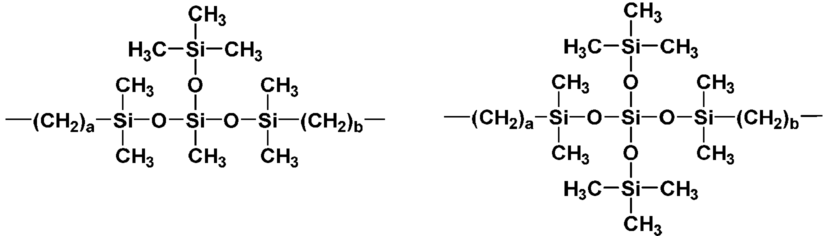 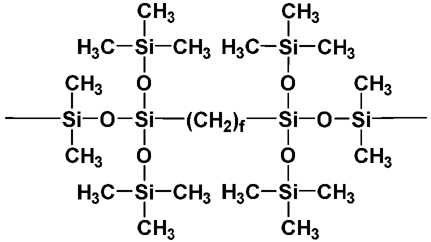
wherein, in the structures, the left valence bond is bonded to Rf and the right valence bond is bonded to V,
f is an integer of 2 to 4,
a, a', and b are each an integer of 1 to 4,
c is an integer of 1 to 10, and
e is an integer of 1 to 9.

5. The fluoropolyether group-containing polymer of any one of claims 1 to 4, wherein in the formula (1), V is a carbon atom, silicon atom, nitrogen atom, linear tri- to hexavalent organopolysiloxane residue of 2 to 10 silicon atoms, branched or cyclic tri- to hexavalent organopolysiloxane residue of 3 to 10 silicon atoms, trivalent isocyanuric group, or trivalent triazine ring-containing group.

6. The fluoropolyether group-containing polymer of any one of claims 1 to 5, wherein in the formula (1), Y is a group selected from the group consisting of a C₁-C₁₀ alkylene group which may contain an oxygen atom or sulfur atom, an alkylene group having a C₆-C₈ arylene group, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms.

7. The fluoropolyether group-containing polymer of any one of claims 1 to 6, wherein in the formula (1), U is a group selected from the group consisting of a single bond, a C₁-C₁₀ alkylene group which may contain an oxygen atom and a sulfur atom, an alkylene group having a C₆-C₈ arylene moiety, a divalent group having alkylene moieties bonded via a diorganosilylene moiety, silalkylene structure, or silarylene structure, and a divalent group having a C₁-C₁₀ alkylene moiety bonded to the valence bond of a linear organopolysiloxane residue of 2 to 10 silicon atoms, or the valence bond of a branched or cyclic organopolysiloxane residue of 3 to 10 silicon atoms.

8. The fluoropolyether group-containing polymer of any one of claims 1 to 7, wherein in the formula (1), Z is any one selected from the group consisting of a single bond, a carbon atom, a silicon atom, a nitrogen atom, -CH=, a linear tri- to hexavalent organopolysiloxane residue of 2 to 10 silicon atoms, and a branched or cyclic tri- to hexavalent organopolysiloxane residue of 3 to 10 silicon atoms.

9. The fluoropolyether group-containing polymer of any one of claims 1 to 8, wherein in the formula (1), X is selected from the group consisting of a hydroxyl group, a C₁-C₁₀ alkoxy group, a C₂-C₁₀ alkoxyalkoxy group, a C₁-C₁₀ acyloxy group, a C₂-C₁₀ alkenyloxy group, and a halogen group.

10. The fluoropolyether group-containing polymer of any one of claims 1 to 9, wherein the fluoropolyether group-containing polymer having the formula (1) has any one of the formulae: 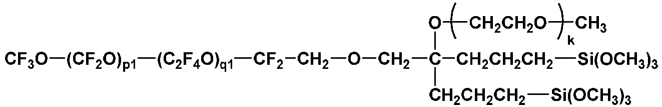 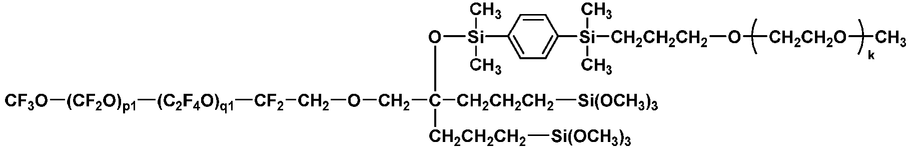 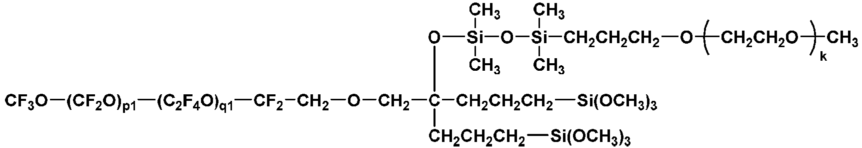 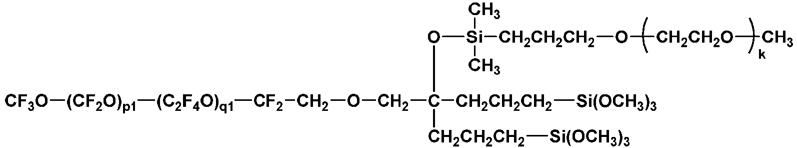 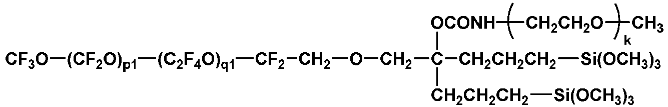 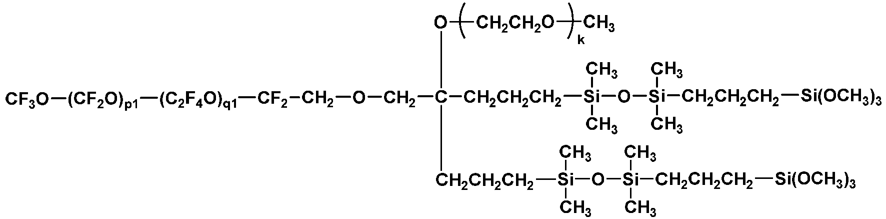 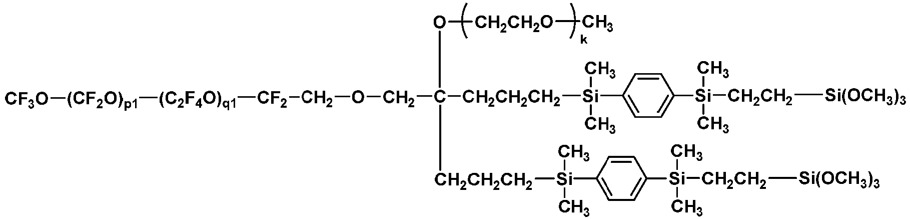 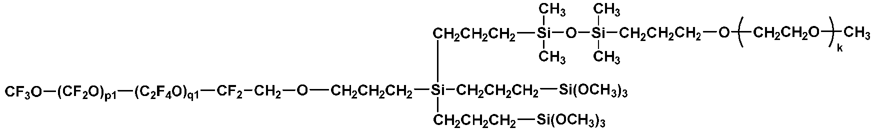 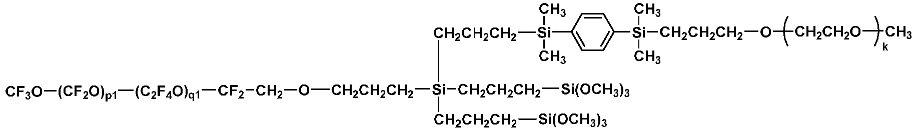 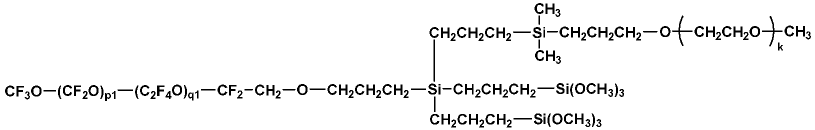 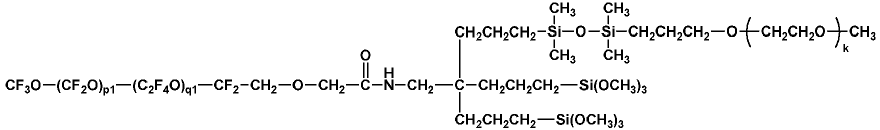 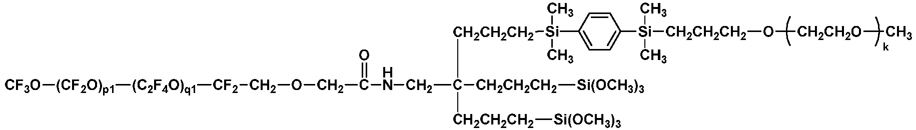 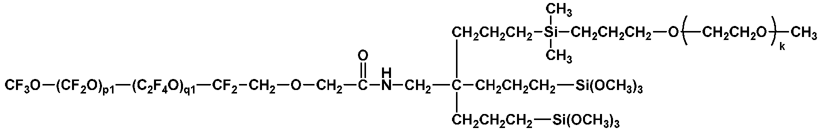 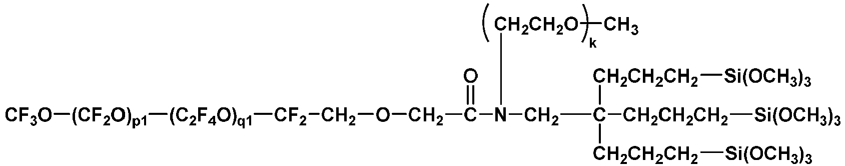 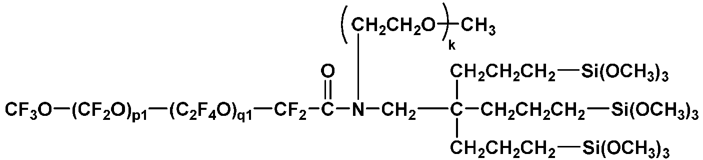 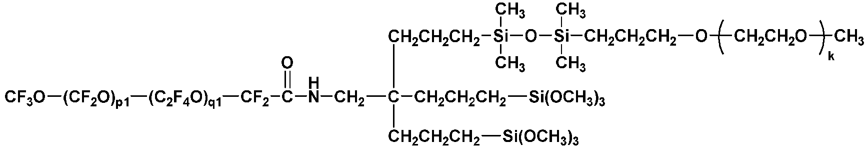 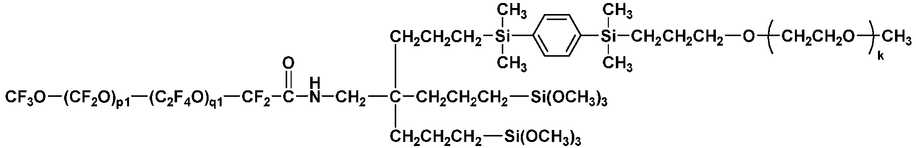 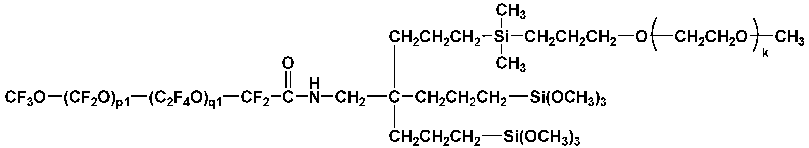 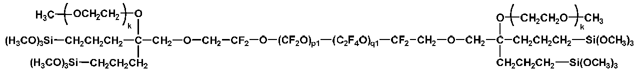 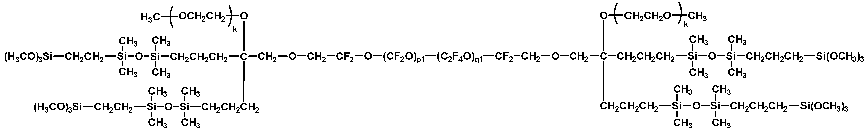 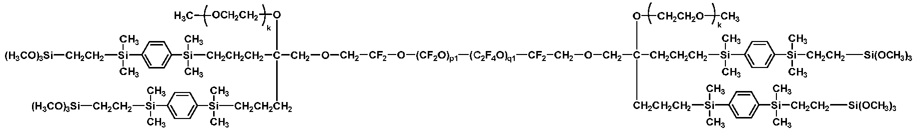 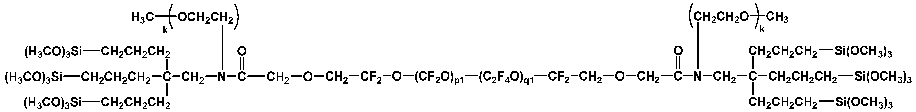 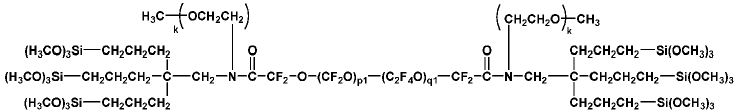 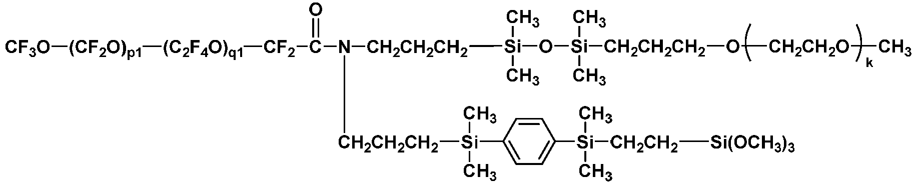 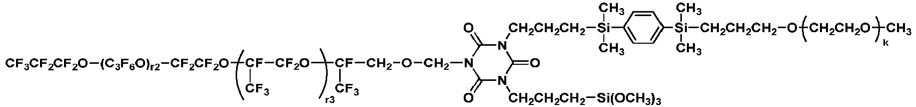 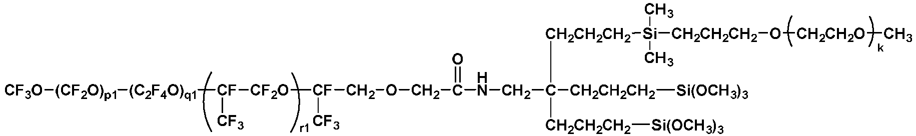 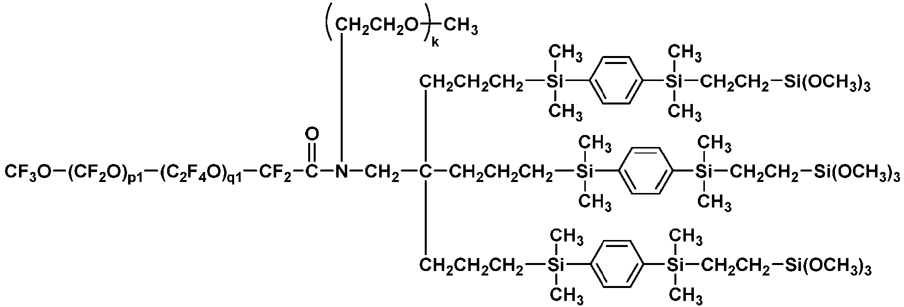 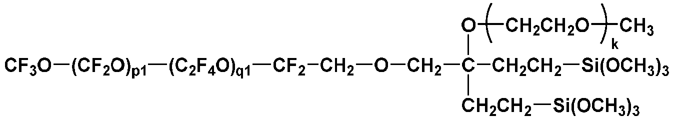 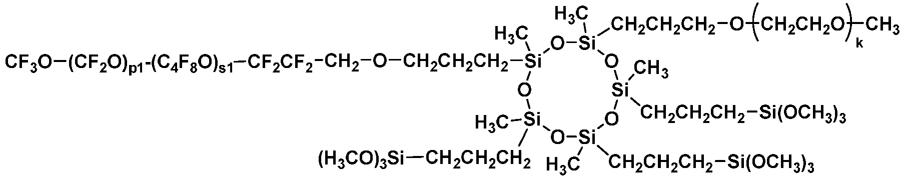 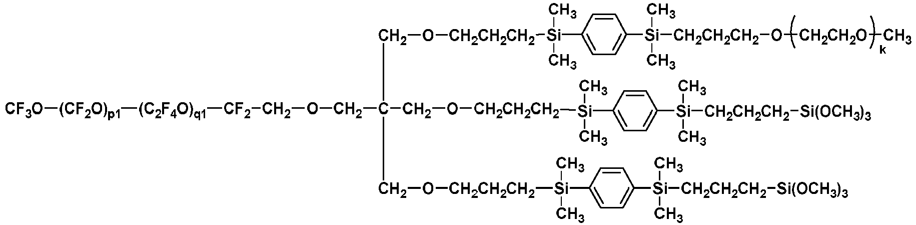 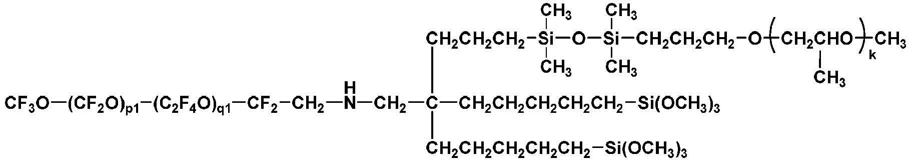 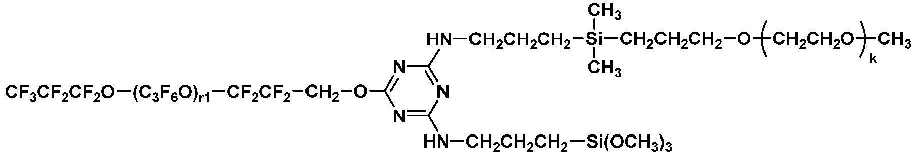 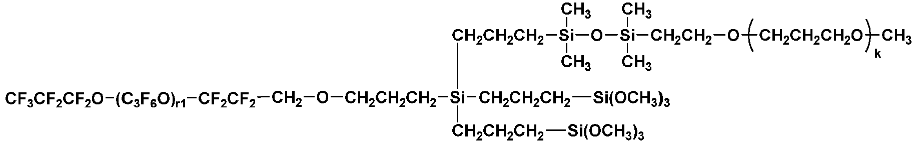 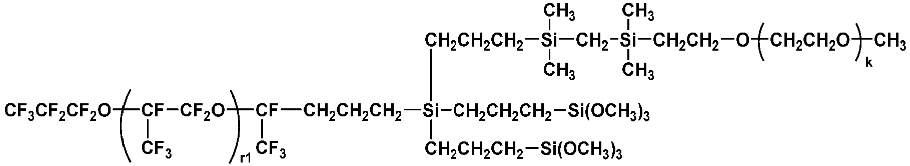 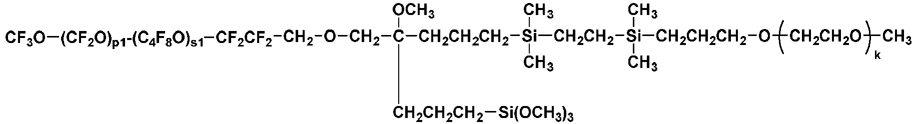 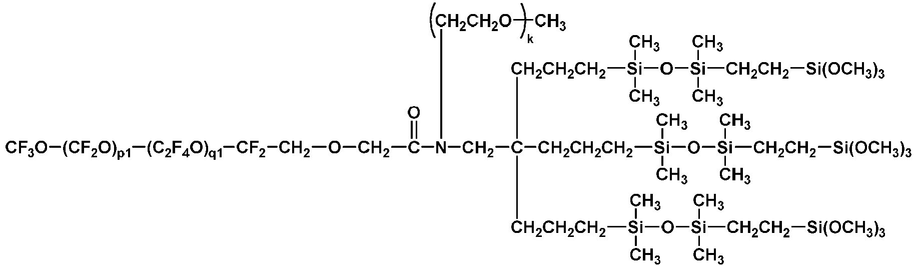 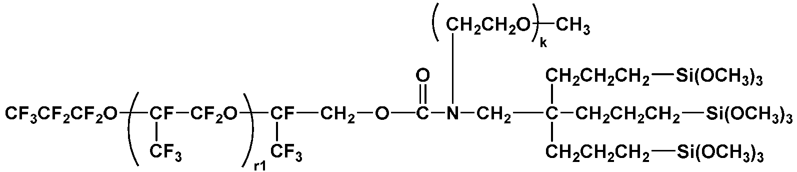 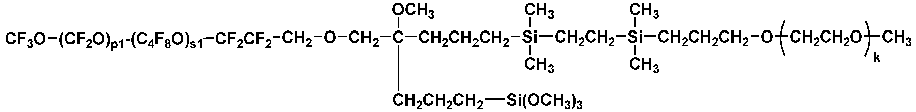 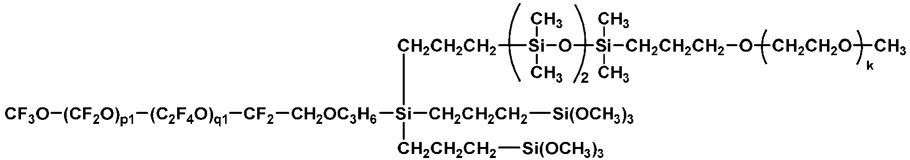 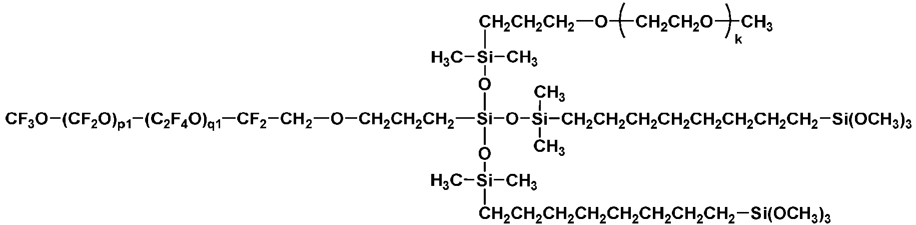 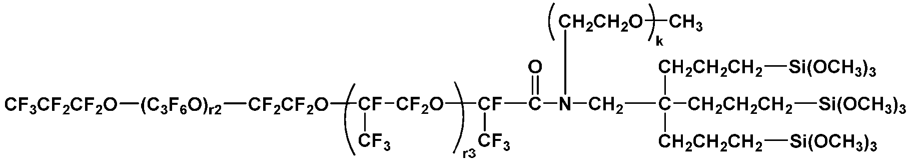 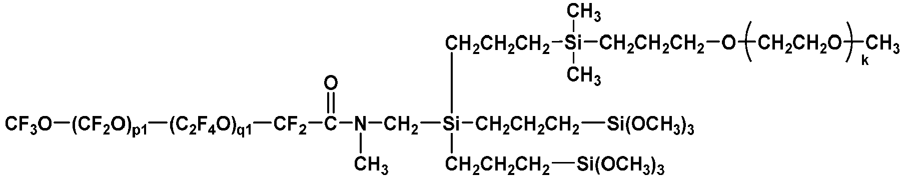 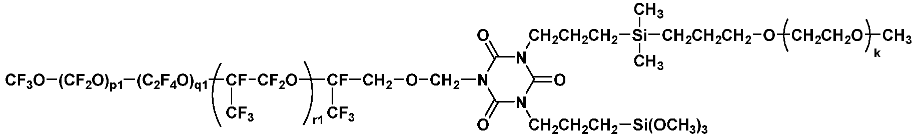 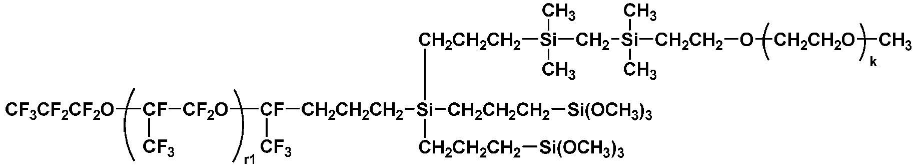 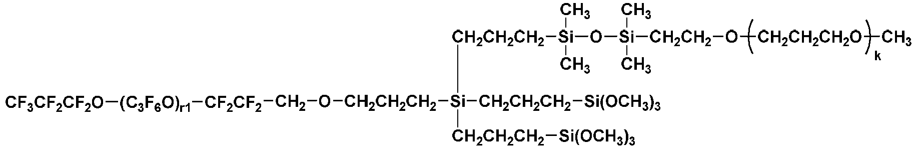 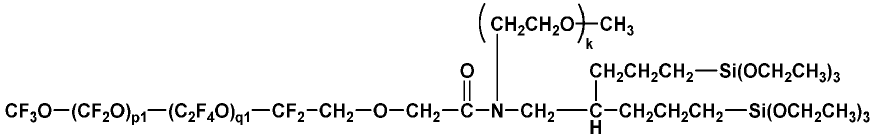 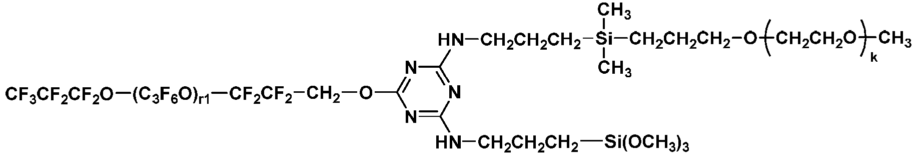 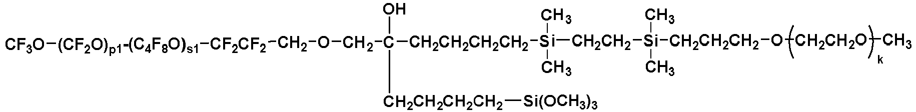 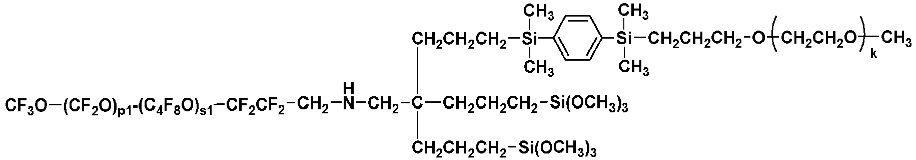 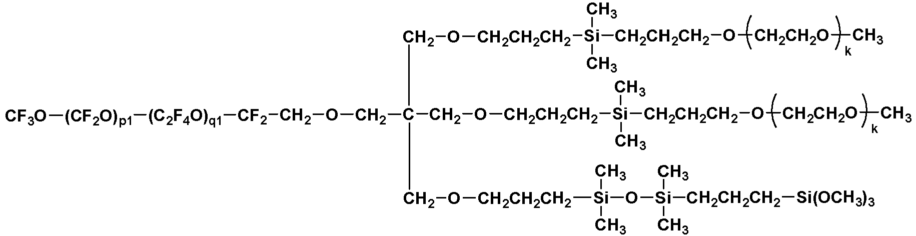 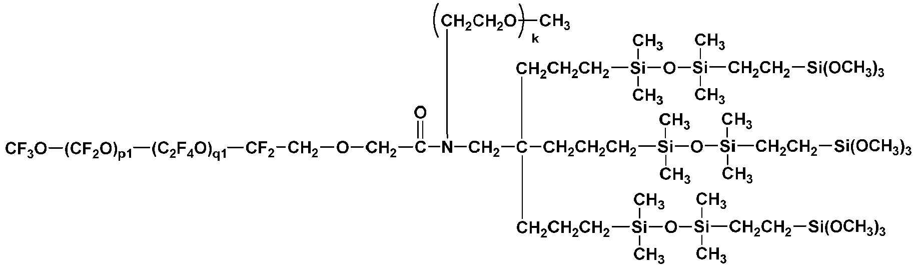 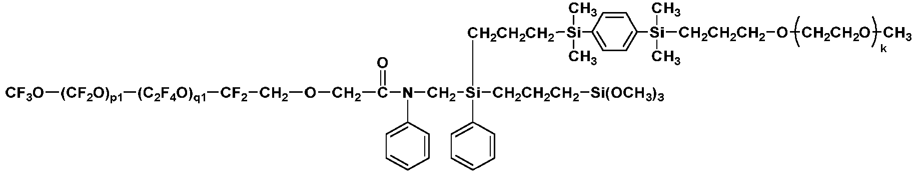 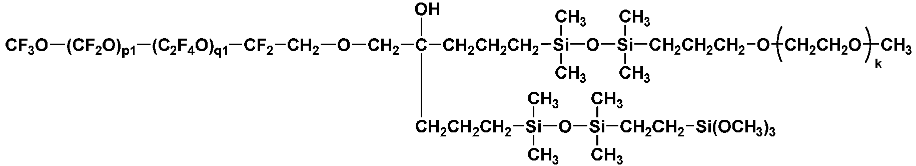 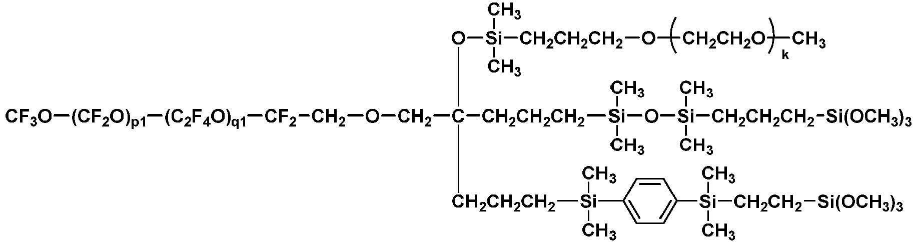 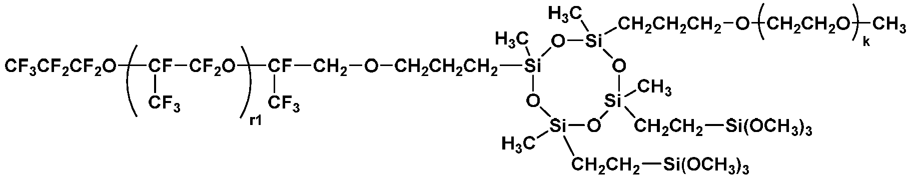 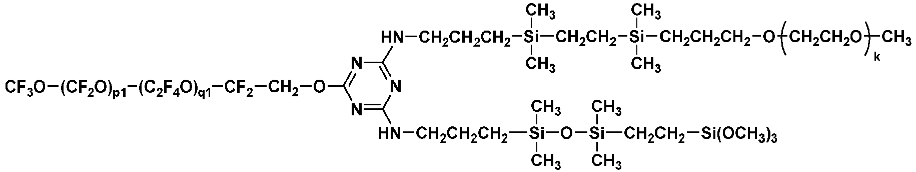 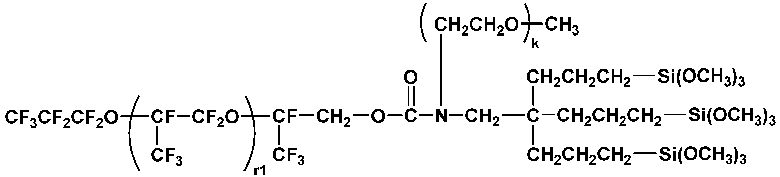 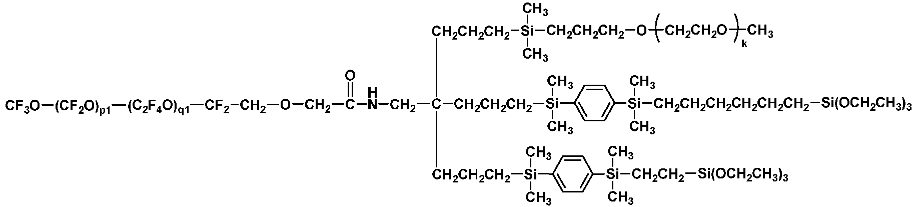 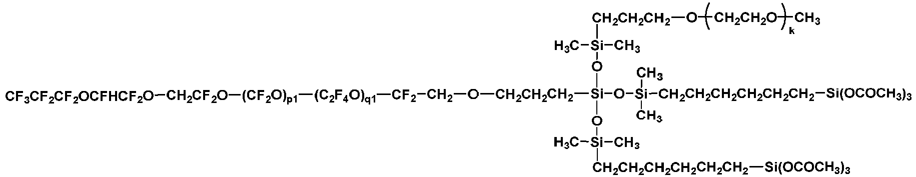 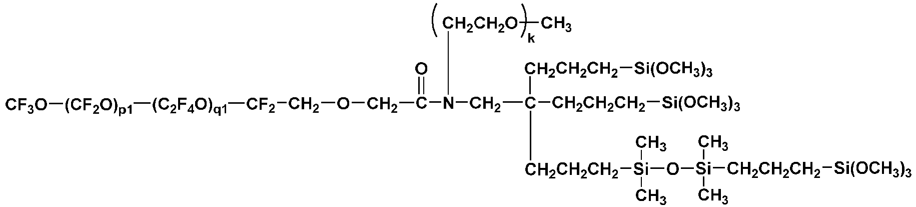 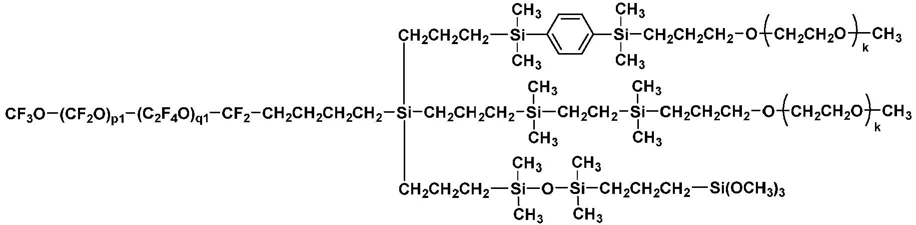 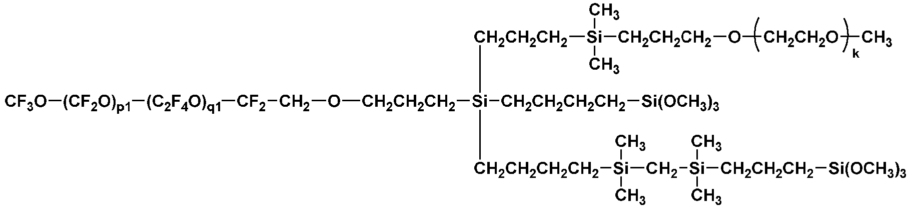 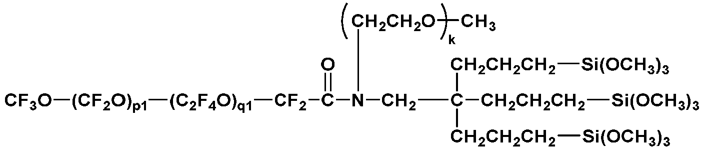 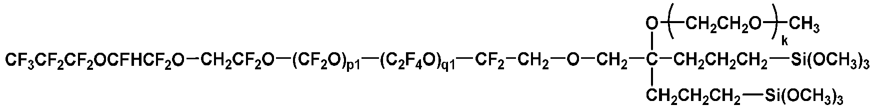 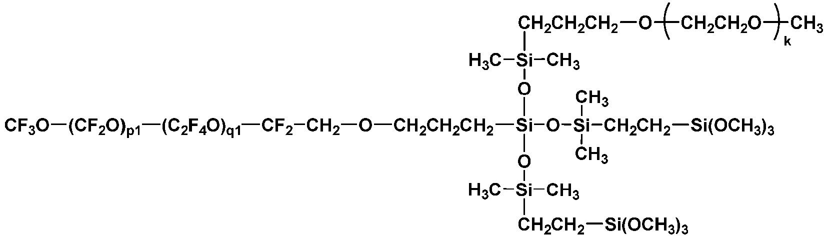 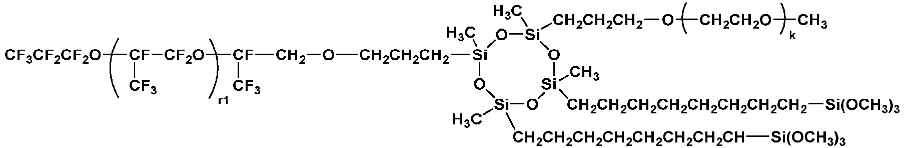 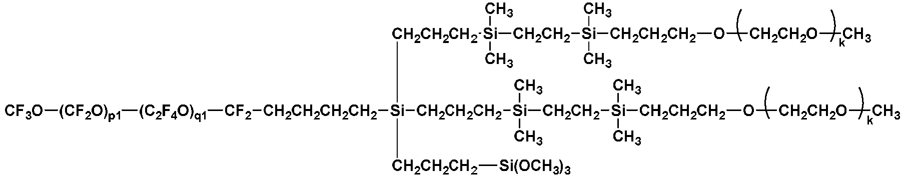 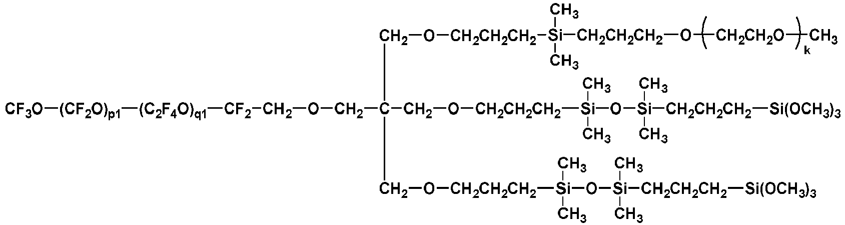 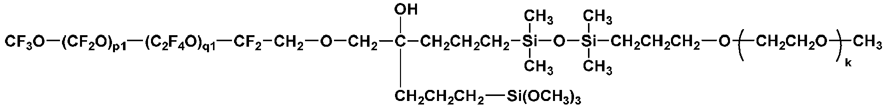 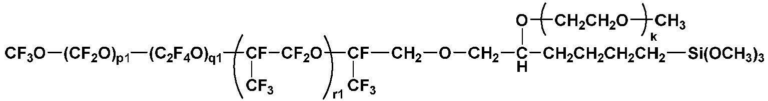 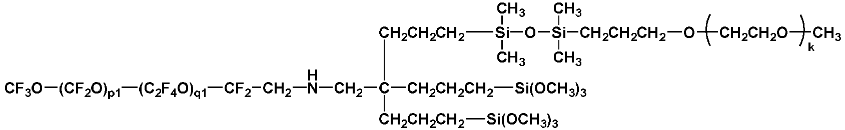 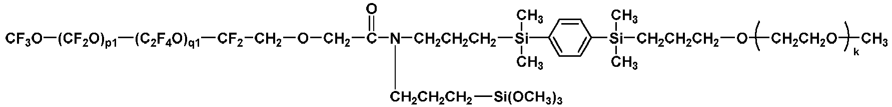 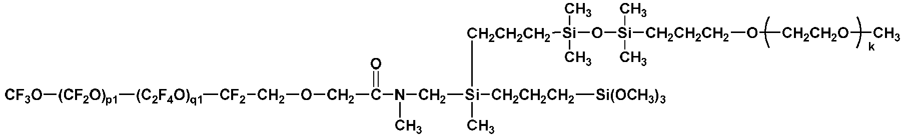 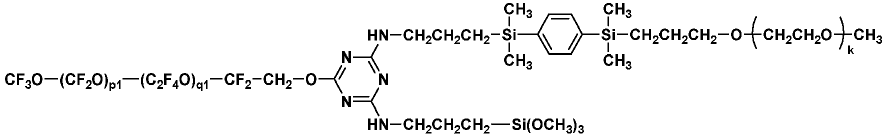 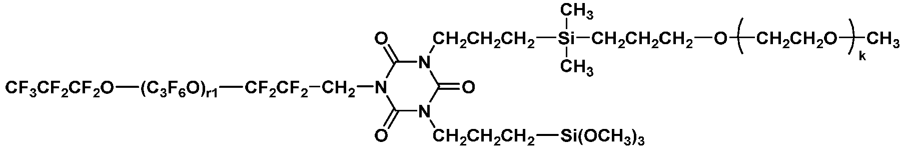 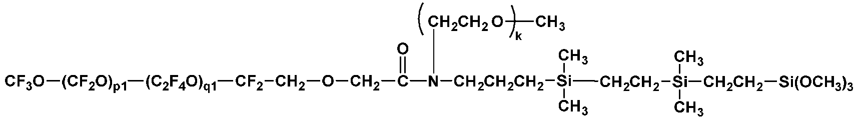 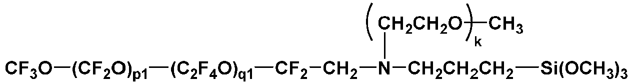 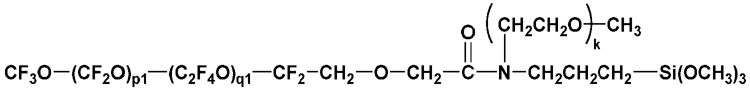 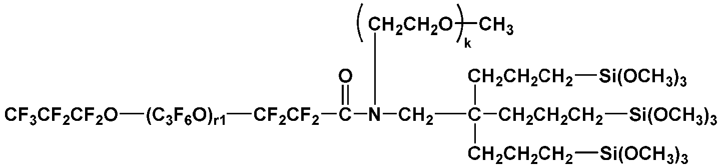 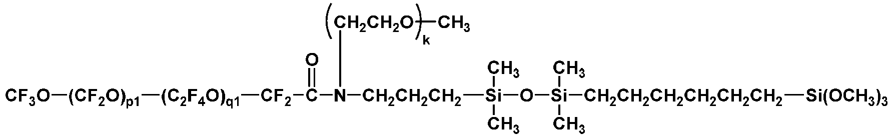 wherein p1, q1, r1, and s1 are each an integer of 1 to 200, provided that the sum of p1, q1, r1, and s1 in each formula is 3 to 200, r2 and r3 are each an integer of at least 1, the sum of r2 and r3 is 2 to 199, individual units within the parentheses with p1, q1, r1, r2, r3, and s1 may be randomly bonded, and k is an integer of 1 to 20.

11. A surface treating agent comprising the fluoropolyether group-containing polymer of any one of claims 1 to 10 and/or a partial (hydrolytic) condensate thereof.

## Patentansprüche

1. Fluorpolyethergruppenhaltiges Polymer mit einer Hydroxylgruppe oder hydrolysierbaren Gruppe und einer Polyethergruppe, mit der allgemeinen Formel (1): 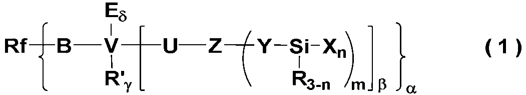
wobei Rf eine ein- oder zweiwertige Fluorpolyethergruppe ist,
B unabhängig eine zweiwertige organische Gruppe ist, die ausgewählt ist aus der Gruppe bestehend aus einer C₁-C₁₀-Alkylengruppe, einer Alkylengruppe mit einer C₆-C₈-Aryleneinheit, einer zweiwertigen Gruppe mit Alkyleneinheiten, gebunden über eine Diorganosilyleneinheit, eine Silalkylenstruktur oder eine Silarylenstruktur, und einer zweiwertigen Gruppe mit einer C₁-C₁₀-Alkyleneinheit, gebunden an die Valenzbindung eines linearen Organopolysiloxanrests mit 2 bis 10 Siliciumatomen oder an die Valenzbindung eines verzweigten oder cyclischen Organopolysiloxanrests mit 3 bis 10 Siliciumatomen, einer Carbonylgruppe und einer Amidgruppe, und die mindestens eines aus einem Sauerstoffatom, einem Schwefelatom, einem sekundären Amin, einem tertiären Amin, einem Keton, einem Amid und einer Estergruppe enthalten kann,
V unabhängig ein Kohlenstoffatom, ein Siliciumatom, ein Stickstoffatom oder eine dreibis achtwertige organische Gruppe ist,
E unabhängig eine einwertige Gruppe, dargestellt durch -W'(-(LO)ₖ-R")_{f'} ist, wobei W' eine Einfachbindung, ein Sauerstoffatom, X' oder eine zweiwertige oder dreiwertige Gruppe ist, die eine Kombination aus X' und einem Sauerstoffatom ist, X' eine zweiwertige oder dreiwertige Gruppe mit einem zweiwertigen C₁-C₂₀-Kohlenwasserstoffrest ist, der enthalten kann: ein Stickstoffatom, ein Siliciumatom, eine Siloxanbindung, eine Silalkylenbindung oder eine Silarylenbindung, oder eine Amidgruppe, L unabhängig eine C₁-C₄-Alkylengruppe ist, k eine ganze Zahl von 1 bis 20 ist, R" eine C₁-C₄-Alkylgruppe oder eine Phenylgruppe ist und f' 1 oder 2 ist,
R' unabhängig ein Wasserstoffatom, eine Hydroxylgruppe, eine C₁-C₄-Alkylgruppe, eine Phenylgruppe, eine C₁-C₄-Alkoxygruppe oder eine Halogengruppe ist,
U unabhängig eine Einfachbindung oder eine zweiwertige organische Gruppe ist,
Z unabhängig eine Einfachbindung, ein Kohlenstoffatom, ein Siliciumatom, ein Stickstoffatom oder eine drei- bis achtwertige organische Gruppe ist,
Y unabhängig eine zweiwertige Kohlenwasserstoffgruppe ist, die mindestens eines, ausgewählt aus einem Sauerstoffatom, einem Schwefelatom, einem Siliciumatom und einer Siloxanbindung, enthalten kann,
R unabhängig eine C₁-C₄-Alkylgruppe oder eine Phenylgruppe ist,
X unabhängig eine Hydroxylgruppe oder eine hydrolysierbare Gruppe ist,
n unabhängig eine ganze Zahl von 1 bis 3 für jedes zu bindende Siliciumatom ist,
m unabhängig eine ganze Zahl von 1 bis 7 ist,
α 1 oder 2 ist,
β unabhängig eine ganze Zahl von 1 bis 6 ist,
γ unabhängig 0 oder 1 ist,
δ unabhängig 1 oder 2 ist, und
die Summe von β, γ und δ unabhängig eine ganze Zahl von 2 bis 7 für jedes zu bindende V ist.

2. Fluorpolyethergruppenhaltiges Polymer nach Anspruch 1, wobei in der Formel (1) α gleich 1 ist und Rf eine Gruppe mit der allgemeinen Formel (2) ist: 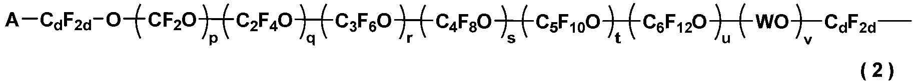
wobei A ein Fluoratom, ein Wasserstoffatom oder eine mit einer -CF₃-Gruppe terminierte Fluoralkylgruppe ist,
W eine Fluoralkylengruppe mit mindestens einem Wasserstoffatom ist,
d für jede Einheit unabhängig eine ganze Zahl von 1 bis 3 ist,
p, q, r, s, t, u und v jeweils ganze Zahlen von 0 bis 200 sind,
p + q + r + s + t + u + v zwischen 3 und 200 liegt,
jede der Einheiten linear oder verzweigt sein kann und
einzelne Wiederholungseinheiten innerhalb der Klammern mit p, q, r, s, t, u und v statistisch gebunden sein können.

3. Fluorpolyethergruppenhaltiges Polymer nach Anspruch 1, wobei in der Formel (1) α 2 ist und Rf eine Gruppe mit der allgemeinen Formel (3) ist: 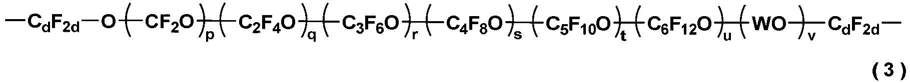
wobei W eine Fluoralkylengruppe mit mindestens einem Wasserstoffatom ist,
d für jede Einheit unabhängig eine ganze Zahl von 1 bis 3 ist,
p, q, r, s, t, u und v jeweils ganze Zahlen von 0 bis 200 sind,
p + q + r + s + t + u + v zwischen 3 und 200 liegt,
jede der Einheiten linear oder verzweigt sein kann und
einzelne Wiederholungseinheiten innerhalb der Klammern mit p, q, r, s, t, u und v statistisch gebunden sein können.

4. Fluorpolyethergruppenhaltiges Polymer nach einem der Ansprüche 1 bis 3, wobei in der Formel (1) B eine beliebige, ausgewählt aus der Gruppe der folgenden Formeln ist: 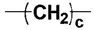 -(CH₂)ₐ-O-(CH₂)_{b}- -(CH₂)ₐ-O- 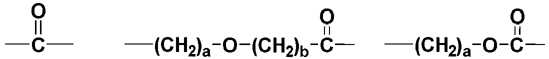 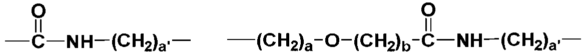 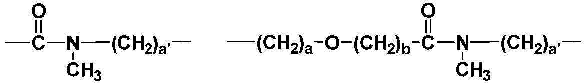 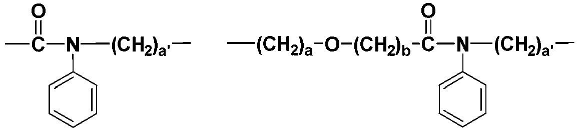 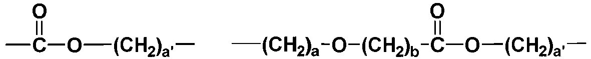 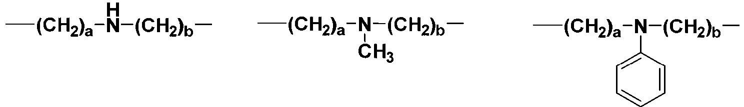 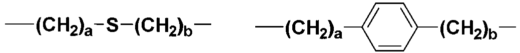 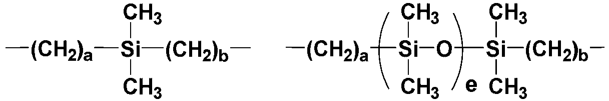 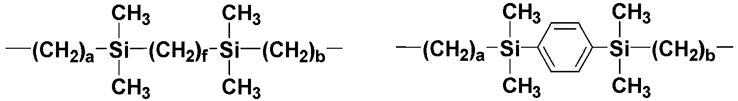 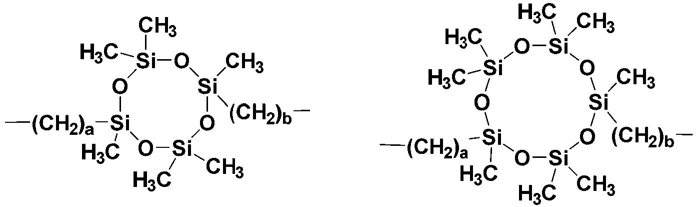 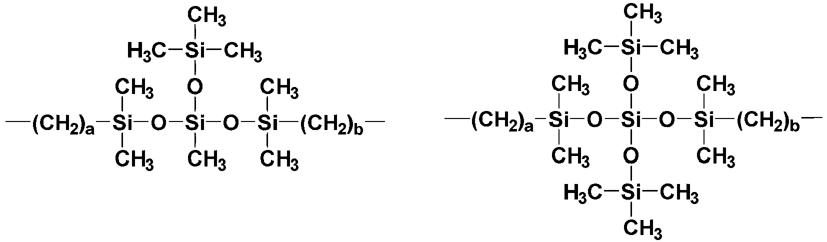 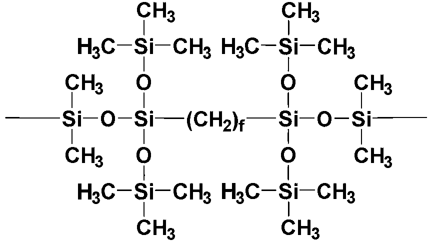
wobei in den Strukturen die linke Valenzbindung an Rf gebunden ist und die rechte Valenzbindung an V gebunden ist,
f eine ganze Zahl von 2 bis 4 ist,
a, a' und b jeweils ganze Zahlen von 1 bis 4 sind,
c eine ganze Zahl von 1 bis 10 ist und
e eine ganze Zahl von 1 bis 9 ist.

5. Fluorpolyethergruppenhaltiges Polymer nach einem der Ansprüche 1 bis 4, wobei in der Formel (1) V ein Kohlenstoffatom, ein Siliciumatom, ein Stickstoffatom, ein linearer dreibis sechswertiger Organopolysiloxanrest mit 2 bis 10 Siliciumatomen, ein verzweigter oder cyclischer drei- bis sechswertiger Organopolysiloxanrest mit 3 bis 10 Siliciumatomen, eine dreiwertige Isocyanurgruppe oder eine dreiwertige Triazinring-haltige Gruppe ist.

6. Fluorpolyethergruppenhaltiges Polymer nach einem der Ansprüche 1 bis 5, wobei in der Formel (1) Y eine Gruppe ist, ausgewählt aus der Gruppe bestehend aus einer C₁-C₁₀-Alkylengruppe, die ein Sauerstoffatom oder ein Schwefelatom enthalten kann, einer Alkylengruppe mit einer C₆-C₈-Arylengruppe, einer zweiwertigen Gruppe mit Alkyleneinheiten, die über eine Diorganosilyleneinheit, eine Silalkylenstruktur oder eine Silarylenstruktur gebunden sind, und einer zweiwertigen Gruppe mit einem C₁-C₁₀-Alkylenrest, der an die Valenzbindung eines linearen Organopolysiloxanrests mit 2 bis 10 Siliciumatomen oder an die Valenzbindung eines verzweigten oder cyclischen Organopolysiloxanrests mit 3 bis 10 Siliciumatomen gebunden ist.

7. Fluorpolyethergruppenhaltiges Polymer nach einem der Ansprüche 1 bis 6, wobei in der Formel (1) U eine Gruppe ist, ausgewählt aus der Gruppe bestehend aus einer Einfachbindung, einer C₁-C₁₀-Alkylengruppe, die ein Sauerstoffatom und ein Schwefelatom enthalten kann, einer Alkylengruppe mit einer C₆-C₈-Aryleneinheit, einer zweiwertigen Gruppe mit Alkyleneinheiten, die über eine Diorganosilyleneinheit, eine Silalkylenstruktur oder eine Silarylenstruktur gebunden sind, und einer zweiwertigen Gruppe mit einem C₁-C₁₀-Alkylenrest, der an die Valenzbindung eines linearen Organopolysiloxanrests mit 2 bis 10 Siliciumatomen oder an die Valenzbindung eines verzweigten oder cyclischen Organopolysiloxanrests mit 3 bis 10 Siliciumatomen gebunden ist.

8. Fluorpolyethergruppenhaltiges Polymer nach einem der Ansprüche 1 bis 7, wobei in der Formel (1) Z irgend eines ist, ausgewählt ist aus der Gruppe bestehend aus einer Einfachbindung, einem Kohlenstoffatom, einem Siliciumatom, einem Stickstoffatom, -CH=, einem linearen drei- bis sechswertigen Organopolysiloxanrest mit 2 bis 10 Siliciumatomen und einem verzweigten oder cyclischen drei- bis sechswertigen Organopolysiloxanrest mit 3 bis 10 Siliciumatomen.

9. Fluorpolyethergruppenhaltiges Polymer nach einem der Ansprüche 1 bis 8, wobei in der Formel (1) X ausgewählt ist aus der Gruppe bestehend aus einer Hydroxylgruppe, einer C₁-C₁₀-Alkoxygruppe, einer C₂-C₁₀-Alkoxyalkoxygruppe, einer C₁-C₁₀-Acyloxygruppe, einer C₂-C₁₀-Alkenyloxygruppe und einer Halogengruppe.

10. Fluorpolyethergruppenhaltiges Polymer nach einem der Ansprüche 1 bis 9, wobei das fluorpolyethergruppenhaltige Polymer mit der Formel (1) eine beliebige der folgenden Formeln aufweist: 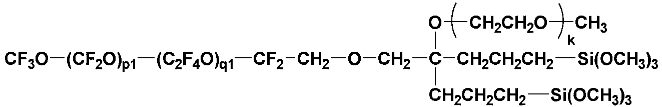 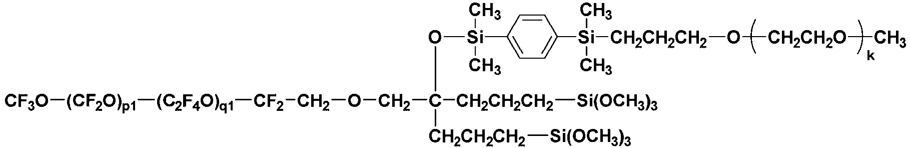 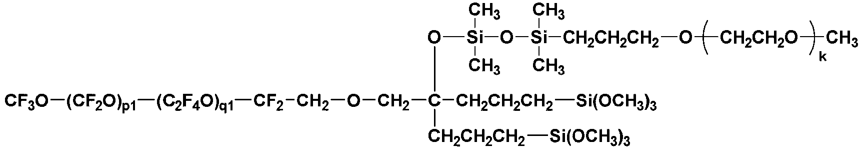 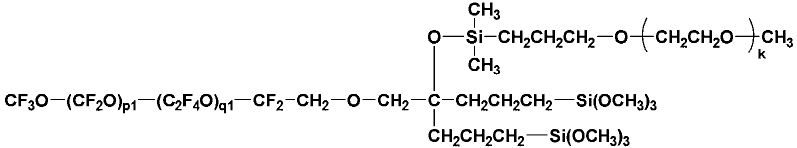 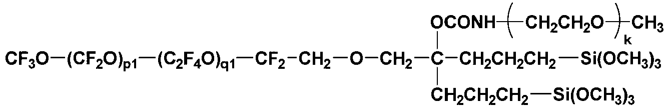 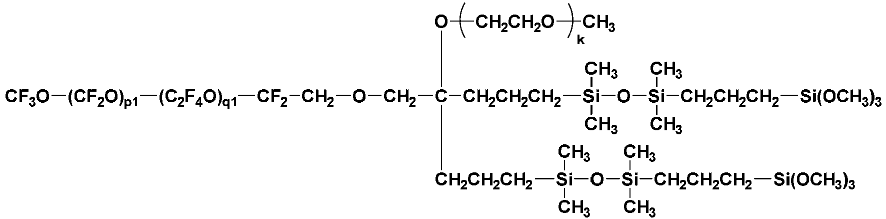 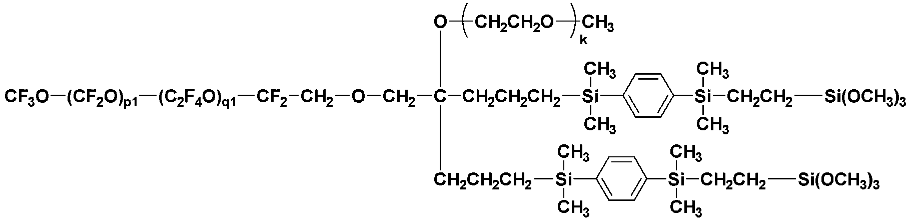 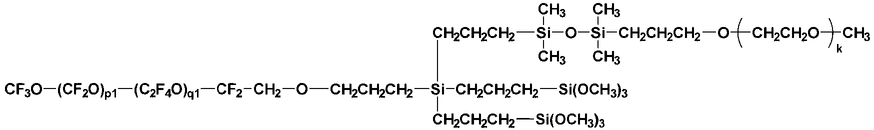 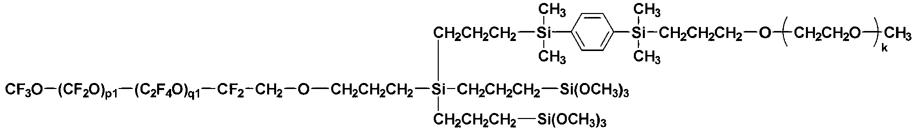 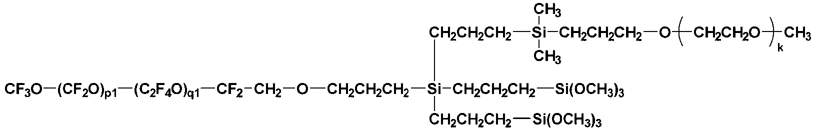 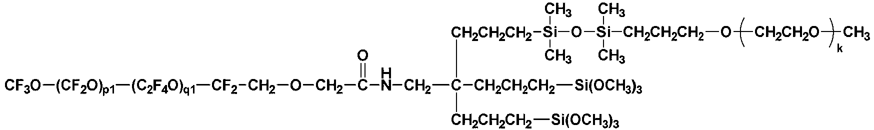 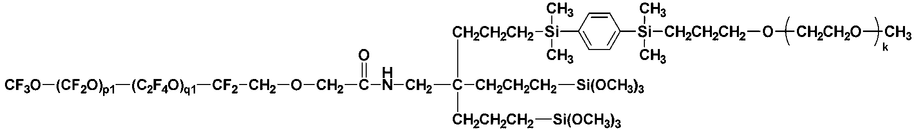 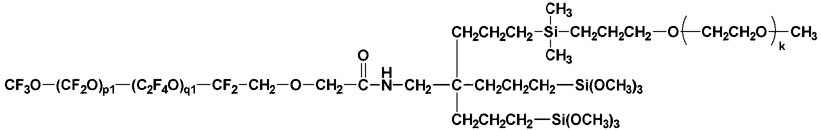 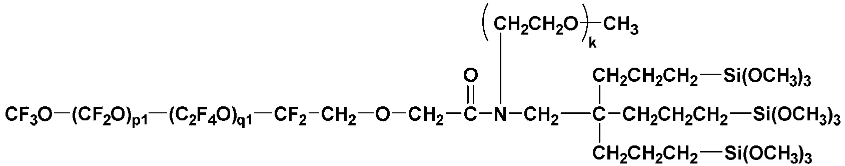 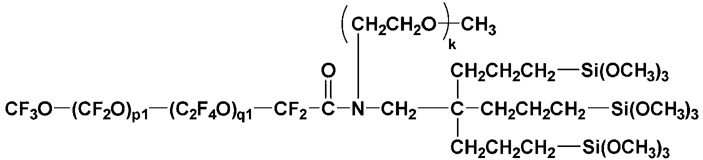 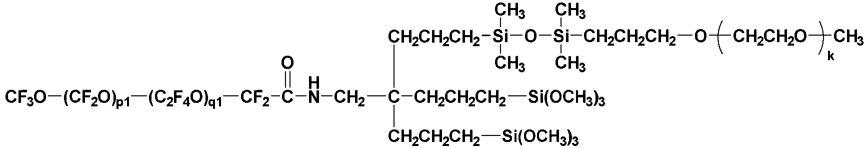 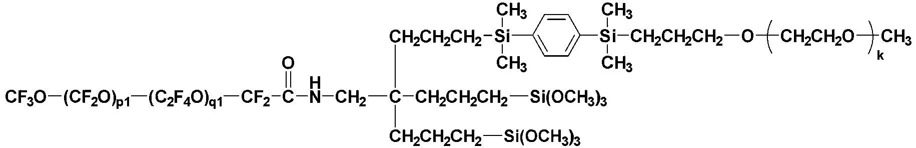 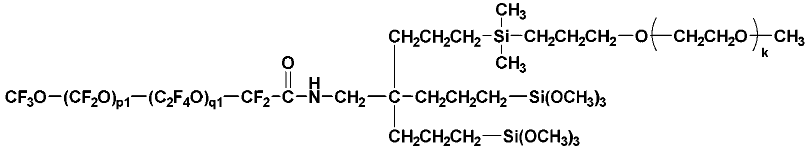 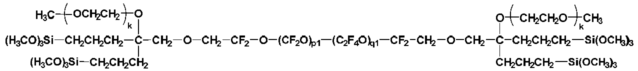 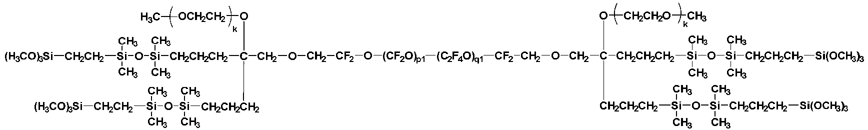 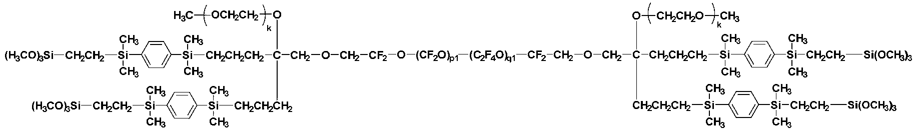 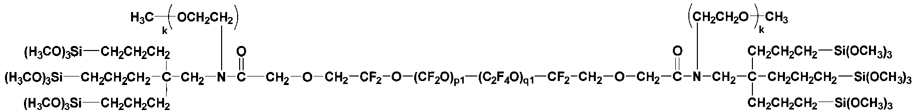 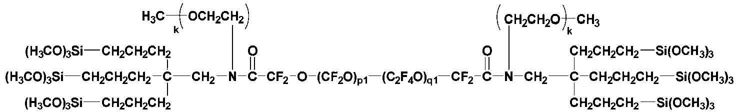 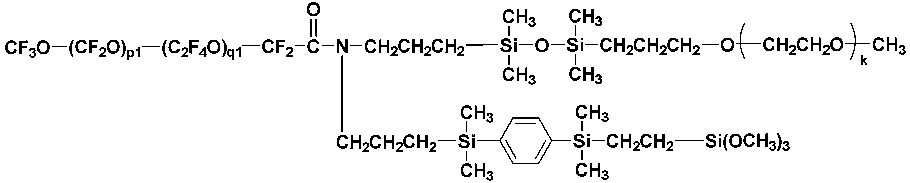 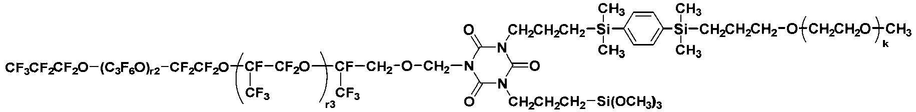 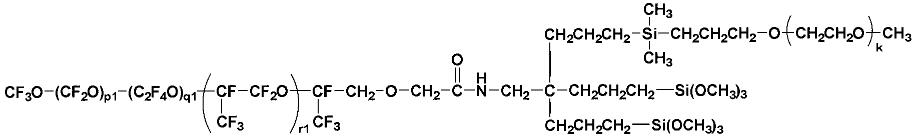 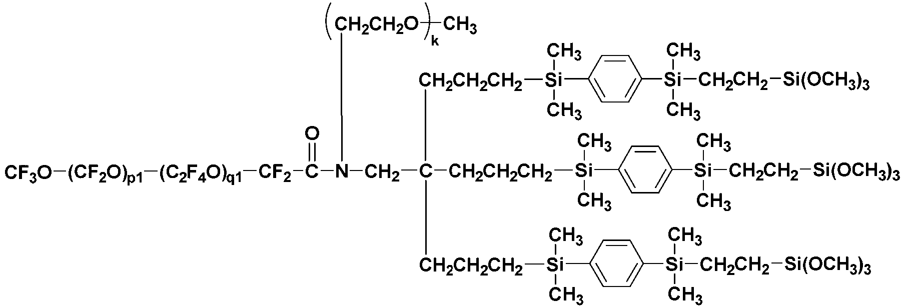 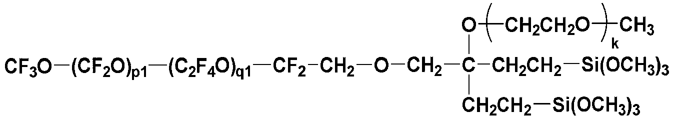 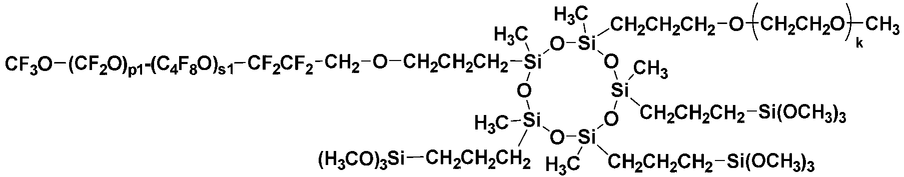 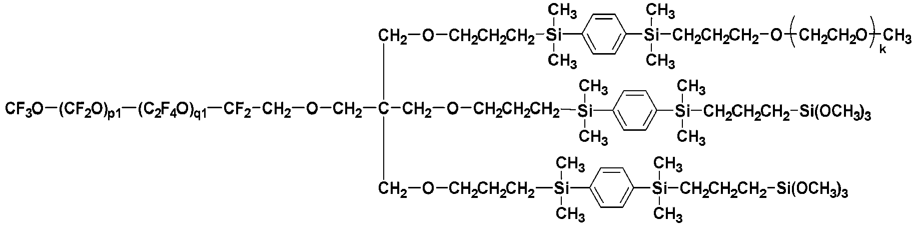 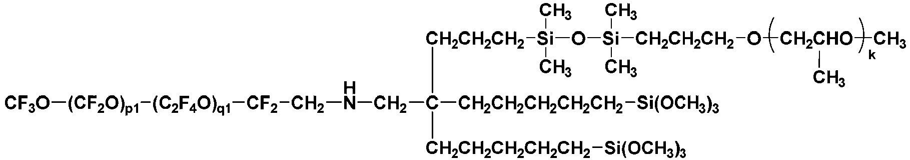 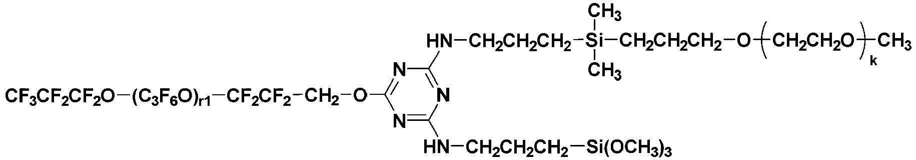 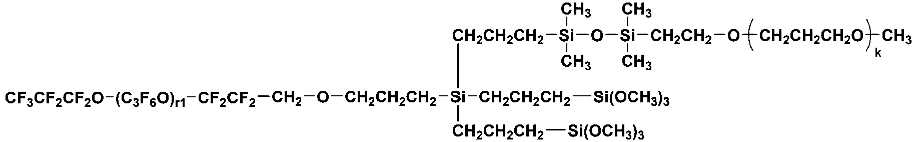 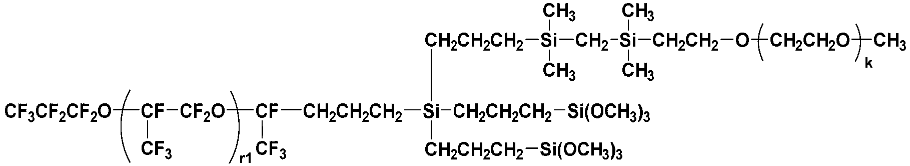 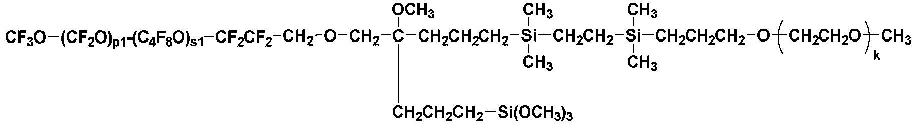 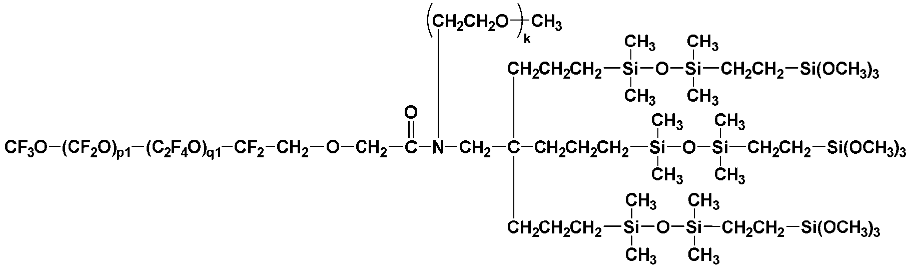 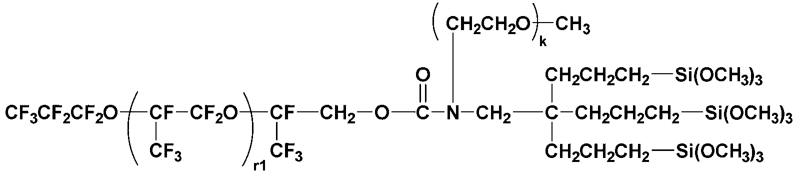 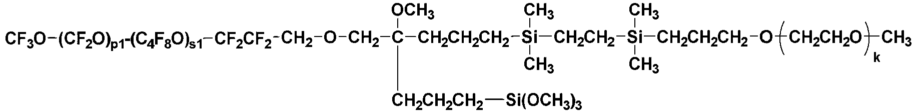 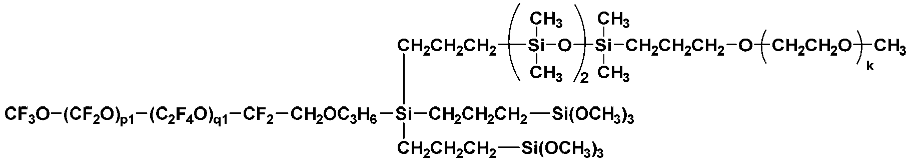 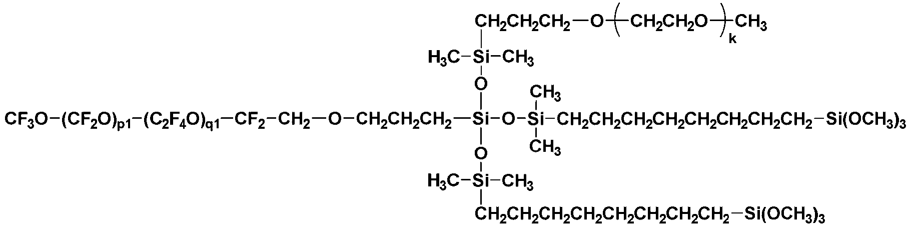 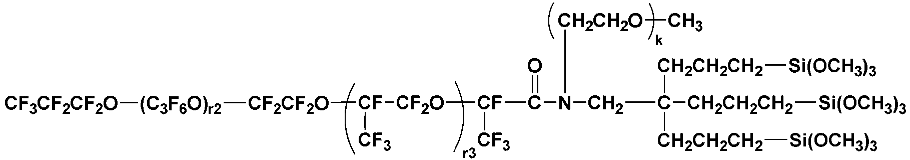 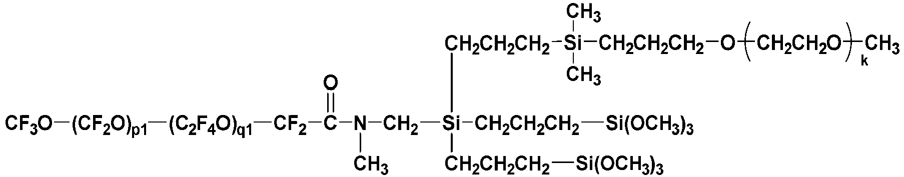 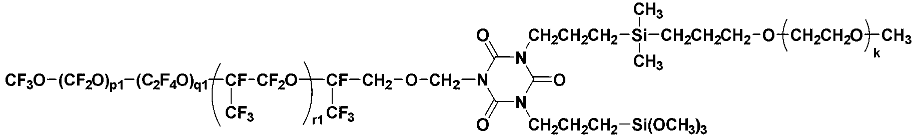 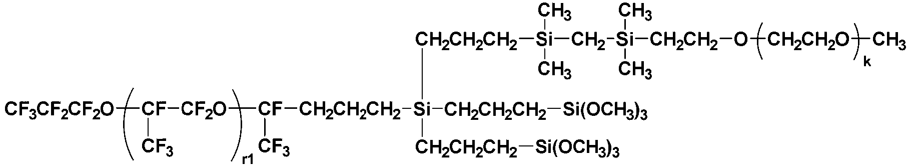 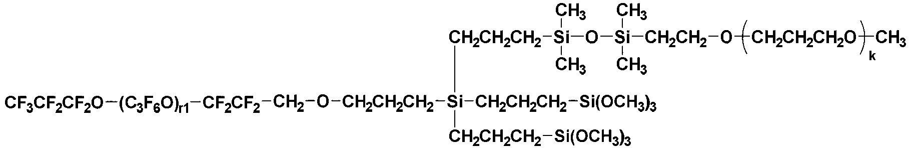 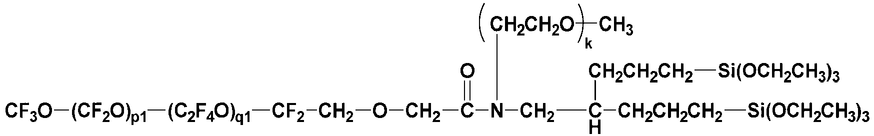 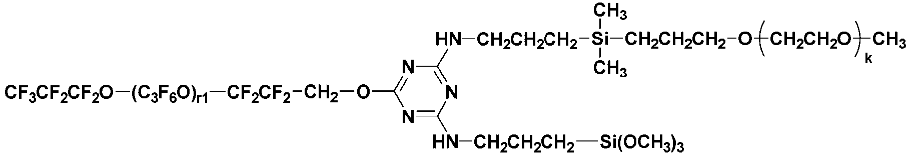 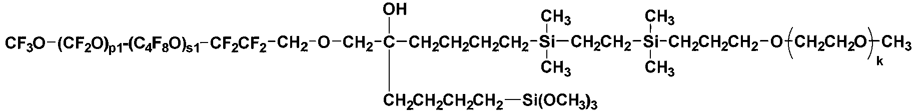 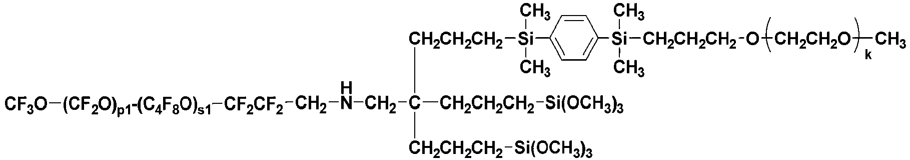 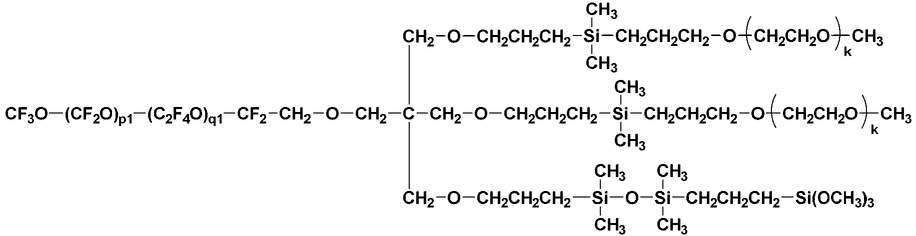 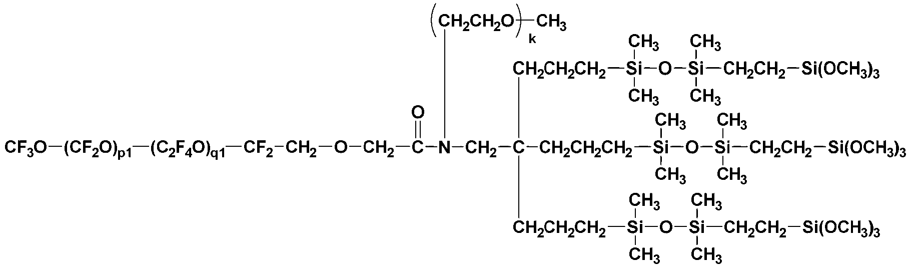 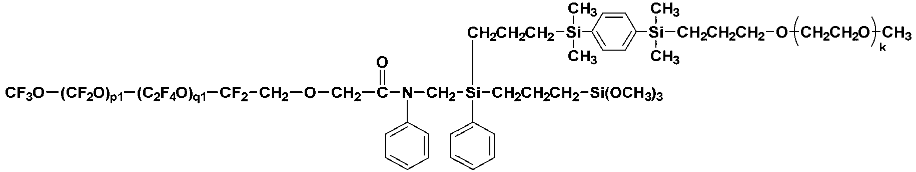 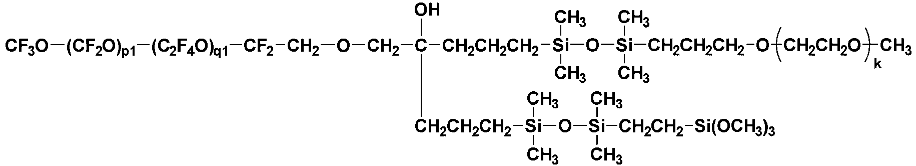 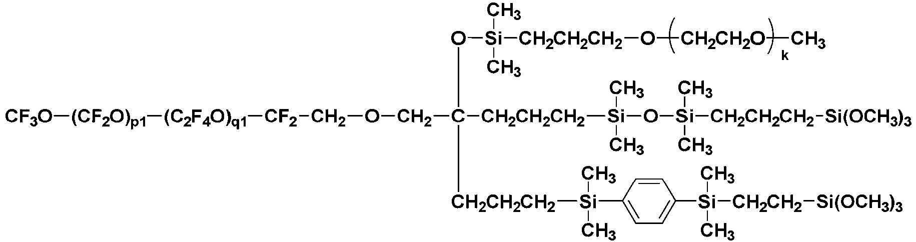 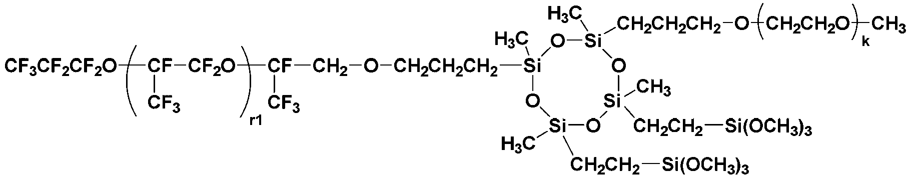 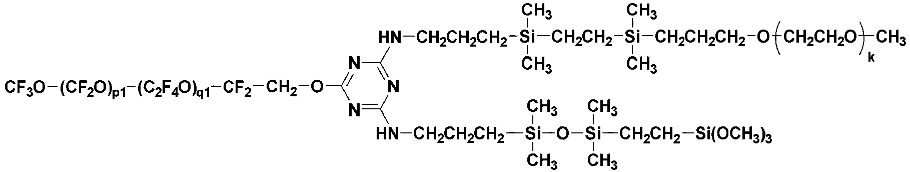 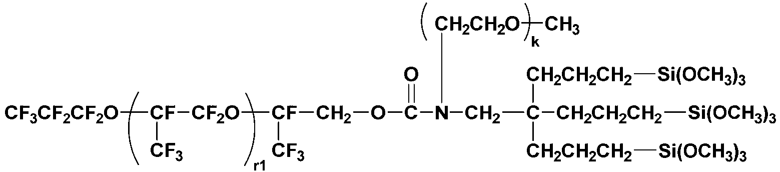 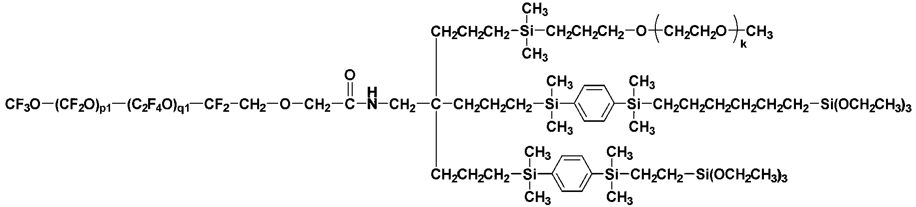 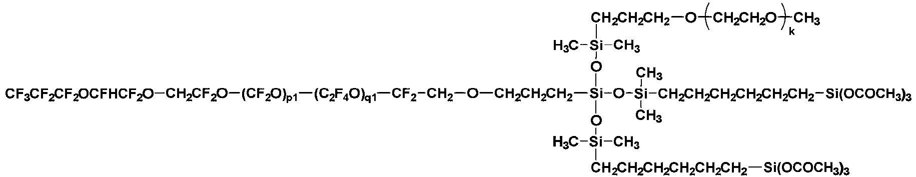 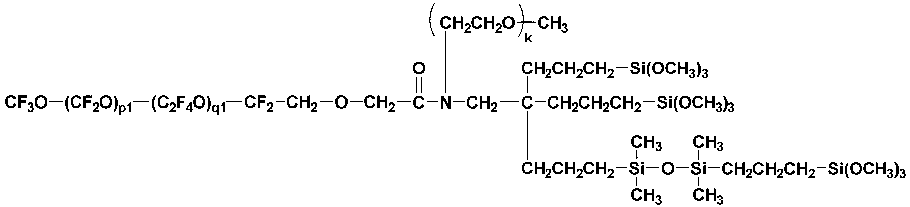 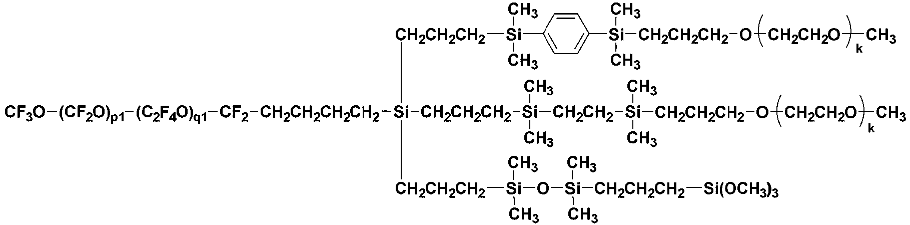 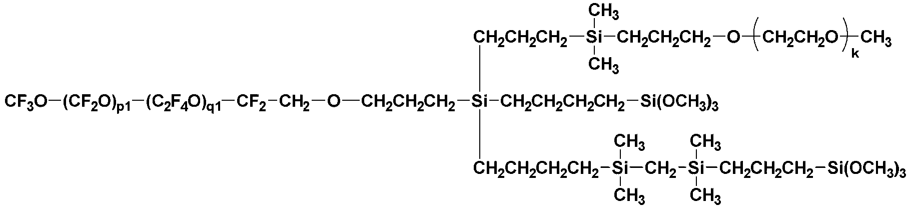 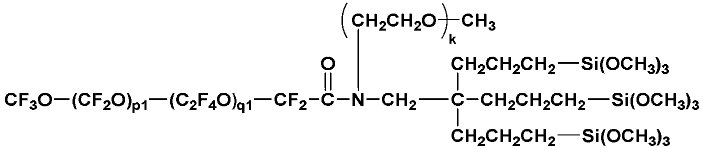 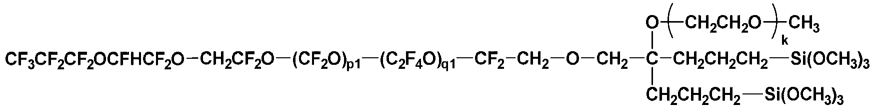 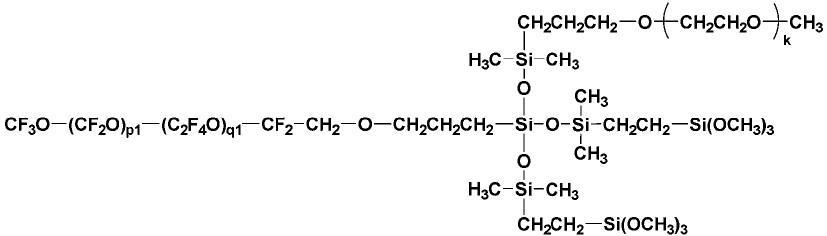 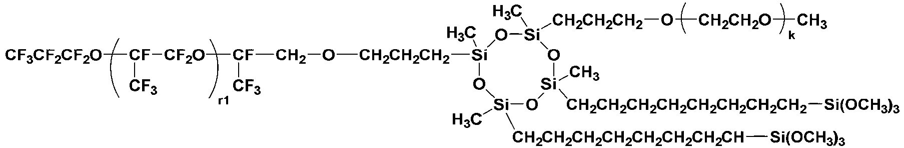 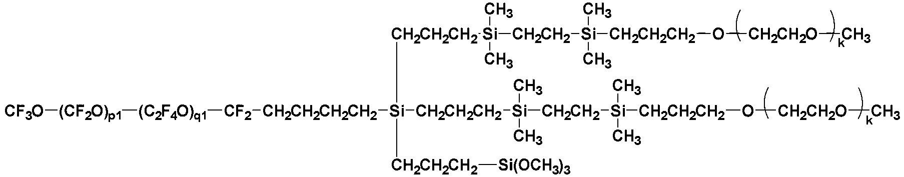 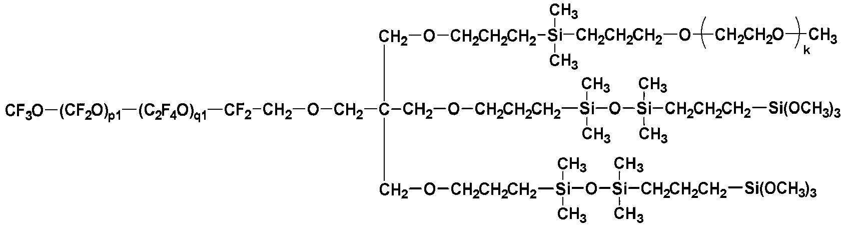 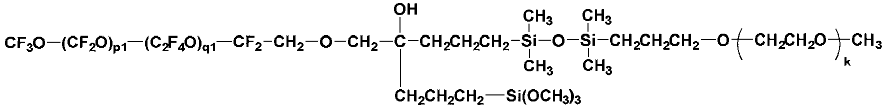 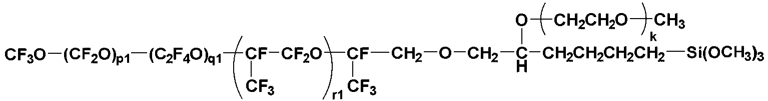 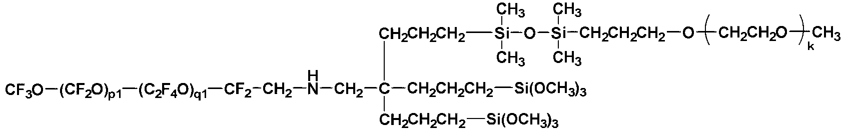 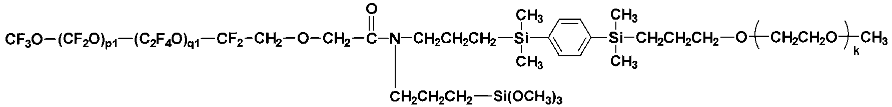 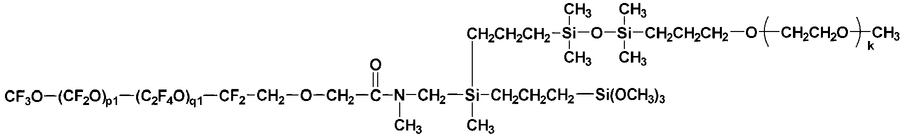 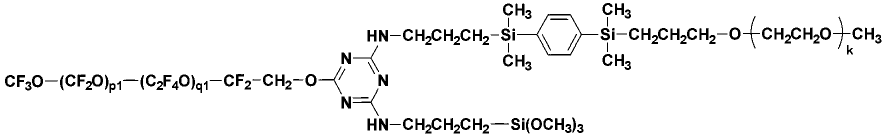 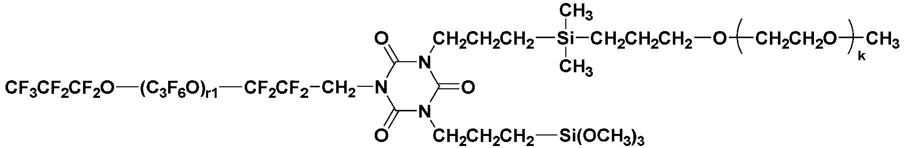 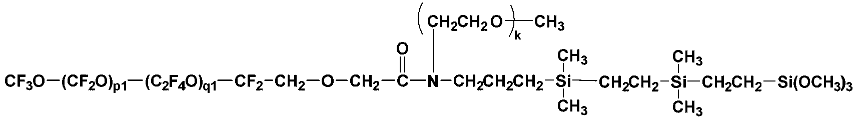 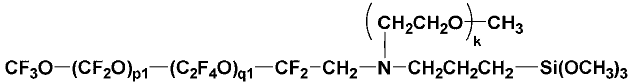 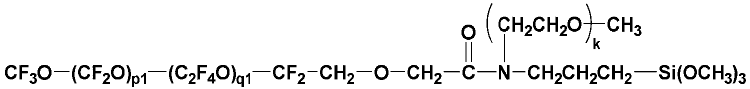 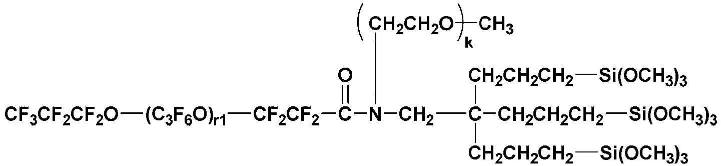 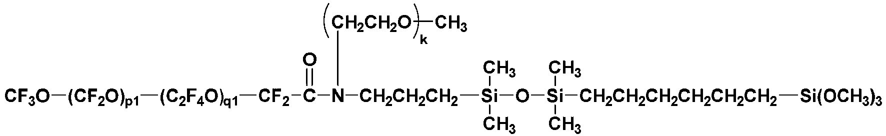 wobei p1, q1, r1 und s1 jeweils ganze Zahlen von 1 bis 200 sind, vorausgesetzt, dass die Summe von p1, q1, r1 und s1 in jeder Formel beträgt 3 bis 200, r2 und r3 jeweils ganze Zahlen von mindestens 1 sind, die Summe von r2 und r3 2 bis 199 ist, die einzelnen Einheiten innerhalb der Klammern mit p1, q1, r1, r2, r3 und s1 zufällig gebunden sein können und k eine ganze Zahl von 1 bis 20 ist.

11. Oberflächenbehandlungsmittel, umfassend das fluorpolyethergruppenhaltige Polymer nach einem der Ansprüche 1 bis 10 und/oder ein partielles (hydrolytisches) Kondensat davon.

## Revendications

1. Polymère contenant un groupe fluoropolyéther ayant un groupe hydroxyle ou un groupe hydrolysable et un groupe polyéther, ayant la formule générale (1) : 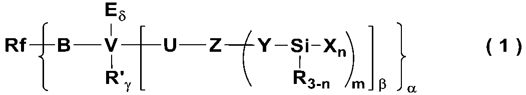
dans laquelle Rf est un groupe fluoropolyéther mono- ou divalent,
B est indépendamment un groupe organique divalent qui est choisi parmi le groupe constitué d'un groupe alkylène en C₁ à C₁₀, d'un groupe alkylène ayant un groupement arylène en C₆ à C₈, d'un groupe divalent ayant des groupements alkylène liées via un groupement diorganosilylène, une structure silalkylène ou une structure silarylène, et d'un groupe divalent ayant un groupement alkylène en C₁ à C ₁₀ liée à la liaison de valence d'un résidu d'organopolysiloxane linéaire de 2 à 10 atomes de silicium, ou à la liaison de valence d'un résidu d'organopolysiloxane ramifié ou cyclique de 3 à 10 atomes de silicium, d'un groupe carbonyle et d'un groupe amide, et peut contenir au moins un élément parmi un atome d'oxygène, un atome de soufre, une amine secondaire, une amine tertiaire, une cétone, un amide et un groupe ester,
V est indépendamment un atome de carbone, un atome de silicium, un atome d'azote ou un groupe organique tri- à octavalent,
E est indépendamment un groupe monovalent représenté par -W'(-(LO)ₖ-R")_{f'}, dans lequel W' est une liaison simple, un atome d'oxygène, X', ou un groupe divalent ou trivalent qui est une combinaison de X' et d'un atome d'oxygène, X' est un groupe divalent ou trivalent ayant un groupement hydrocarbure divalent en C₁ à C₂₀ qui peut contenir un atome d'azote, un atome de silicium, une liaison siloxane, une liaison silalkylène ou une liaison silarylène, ou un groupe amide, L est indépendamment un groupe alkylène en C₁ à C₄ , k est un entier de 1 à 20, R" est un groupe alkyle en C₁ à C₄ ou un groupe phényle, et f vaut 1 ou 2,
R' est indépendamment un atome d'hydrogène, un groupe hydroxyle, un groupe alkyle en C₁ à C₄, un groupe phényle, un groupe alcoxy en C₁ à C₄ ou un groupe halogène,
U est indépendamment une liaison simple ou un groupe organique divalent,
Z est indépendamment une liaison simple, un atome de carbone, un atome de silicium, un atome d'azote ou un groupe organique tri- à octavalent,
Y est indépendamment un groupe hydrocarbure divalent qui peut contenir au moins un élément choisi parmi un atome d'oxygène, un atome de soufre, un atome de silicium et une liaison siloxane,
R est indépendamment un groupe alkyle en C₁ à C₄ ou un groupe phényle,
X est indépendamment un groupe hydroxyle ou un groupe hydrolysable,
n est indépendamment un entier de 1 à 3 pour chaque atome de silicium à lier,
m est indépendamment un entier de 1 à 7,
α vaut 1 ou 2,
β est indépendamment un entier de 1 à 6,
γ vaut indépendamment 0 ou 1,
δ vaut indépendamment 1 ou 2, et
la somme de β, γ et δ est indépendamment un entier de 2 à 7 pour chaque V à lier.

2. Polymère contenant un groupe fluoropolyéther selon la revendication 1, dans lequel, dans la formule (1), α vaut 1, et Rf est un groupe ayant la formule générale (2) : 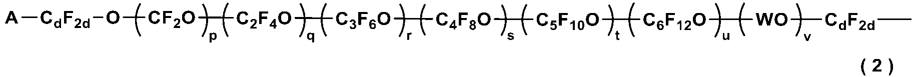
dans laquelle A est un atome de fluor, un atome d'hydrogène ou un groupe fluoroalkyle terminé par un groupe -CF₃,
W est un groupe fluoroalkylène contenant au moins un atome d'hydrogène,
d est indépendamment un entier de 1 à 3 pour chaque motif,
p, q, r, s, t, u et v sont chacun un entier de 0 à 200,
p + q + r + s + t + u + v vaut de 3 à 200,
chacun des motifs peut être linéaire ou ramifié, et
des motifs répétés individuels entre parenthèses avec p, q, r, s, t, u, et v peuvent être liés de façon aléatoire.

3. Polymère contenant un groupe fluoropolyéther selon la revendication 1, dans lequel, dans la formule (1), α vaut 2, et Rf est un groupe ayant la formule générale (3) : 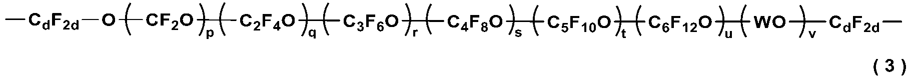
dans laquelle W est un groupe fluoroalkylène contenant au moins un atome d'hydrogène,
d est indépendamment un entier de 1 à 3 pour chaque motif,
p, q, r, s, t, u et v sont chacun un entier de 0 à 200,
p + q + r + s + t + u + v vaut de 3 à 200,
chacun des motifs peut être linéaire ou ramifié, et
des motifs répétés individuels entre parenthèses avec p, q, r, s, t, u, et v peuvent être liés de façon aléatoire.

4. Polymère contenant un groupe fluoropolyéther selon l'une quelconque des revendications 1 à 3, dans lequel, dans la formule (1), B est un élément quelconque choisi parmi le groupe représenté par les formules suivantes : 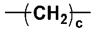 -(CH₂)ₐ-O-(CH₂)_{b}- -(CH₂)ₐ-O- 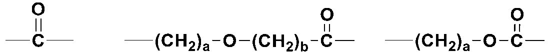 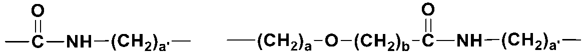 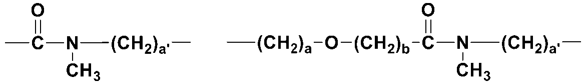 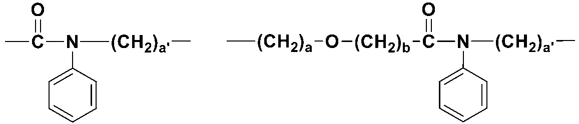 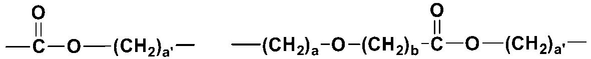 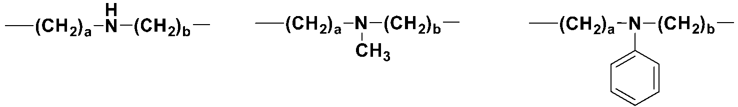 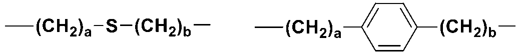 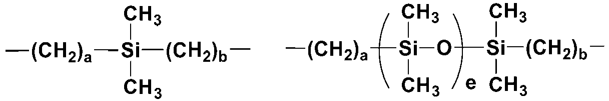 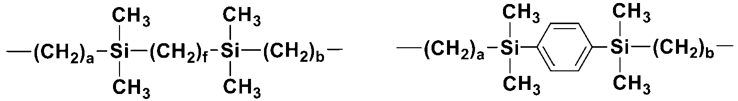 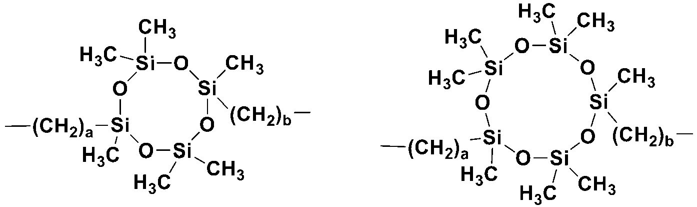 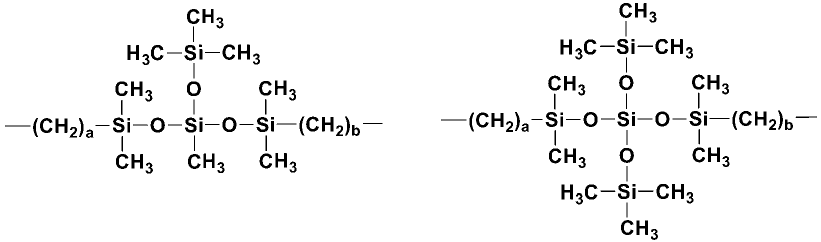 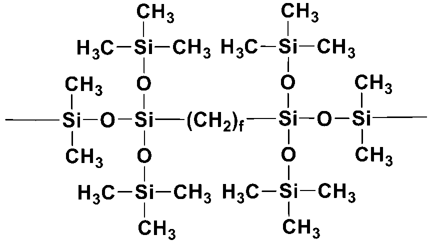
dans lesquelles, dans les structures, la liaison de valence à gauche est liée à Rf et la liaison de valence à droite est liée à V,
f est un entier de 2 à 4,
a, a' et b sont chacun un entier de 1 à 4,
c est un entier de 1 à 10, et
e est un entier de 1 à 9.

5. Polymère contenant un groupe fluoropolyéther selon l'une quelconque des revendications 1 à 4, dans lequel, dans la formule (1), V est un atome de carbone, un atome de silicium, un atome d'azote, un résidu d'organopolysiloxane tri- à hexavalent linéaire de 2 à 10 atomes de silicium, un résidu d'organopolysiloxane tri- à hexavalent ramifié ou cyclique de 3 à 10 atomes de silicium, un groupe isocyanurique trivalent ou un groupe contenant un cycle de triazine trivalent.

6. Polymère contenant un groupe fluoropolyéther selon l'une quelconque des revendications 1 à 5, dans lequel, dans la formule (1), Y est un groupe choisi parmi le groupe constitué d'un groupe alkylène en C₁ à C₁₀ qui peut contenir un atome d'oxygène ou un atome de soufre, un groupe alkylène ayant un groupe arylène en C₆ à C₈, un groupe divalent ayant des groupements alkylène liés via un groupement diorganosilylène, une structure silalkylène ou une structure silarylène, et un groupe divalent ayant un groupement alkylène en C₁ à C₁₀ lié à la liaison de valence d'un résidu d'organopolysiloxane linéaire de 2 à 10 atomes de silicium, ou à la liaison de valence d'un résidu d'organopolysiloxane ramifié ou cyclique de 3 à 10 atomes de silicium.

7. Polymère contenant un groupe fluoropolyéther selon l'une quelconque des revendications 1 à 6, dans lequel, dans la formule (1), U est un groupe choisi parmi le groupe constitué d'une liaison simple, d'un groupe alkylène en C₁ à C₁₀ qui peut contenir un atome d'oxygène et un atome de soufre, d'un groupe alkylène ayant un groupement arylène en C₆ à C₈, d'un groupe divalent ayant des groupements alkylène liés via un groupement diorganosilylène, une structure silalkylène ou une structure silarylène, et d'un groupe divalent ayant un groupement alkylène en C₁ à C₁₀ lié à la liaison de valence d'un résidu d'organopolysiloxane linéaire de 2 à 10 atomes de silicium, ou à la liaison de valence d'un résidu d'organopolysiloxane ramifié ou cyclique de 3 à 10 atomes de silicium.

8. Polymère contenant un groupe fluoropolyéther selon l'une quelconque des revendications 1 à 7, dans lequel, dans la formule (1), Z est un élément quelconque choisi parmi le groupe constitué d'une liaison simple, d'un atome de carbone, d'un atome de silicium, d'un atome d'azote, de -CH=, d'un résidu d'organopolysiloxane tri- à hexavalent linéaire de 2 à 10 atomes de silicium et d'un résidu d'organopolysiloxane tri- à hexavalent ramifié ou cyclique de 3 à 10 atomes de silicium.

9. Polymère contenant un groupe fluoropolyéther selon l'une quelconque des revendications 1 à 8, dans lequel, dans la formule (1), X est choisi parmi le groupe constitué d'un groupe hydroxyle, d'un groupe alcoxy en C₁ à C₁₀, d'un groupe alcoxyalcoxy en C₂ à C₁₀, d'un groupe acyloxy en C₁ à C₁₀, d'un groupe alcényloxy en C₂ à C₁₀ et d'un groupe halogène.

10. Polymère contenant un groupe fluoropolyéther selon l'une quelconque des revendications 1 à 9, dans lequel le polymère contenant un groupe fluoropolyéther ayant la formule (1) a l'une quelconque des formules : 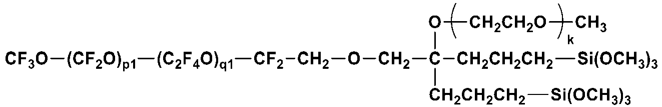 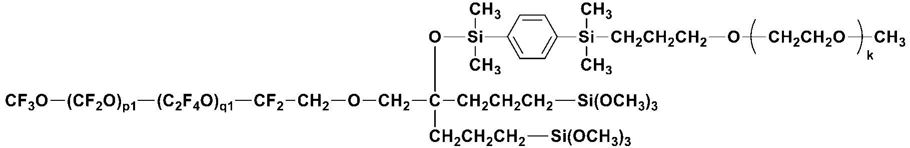 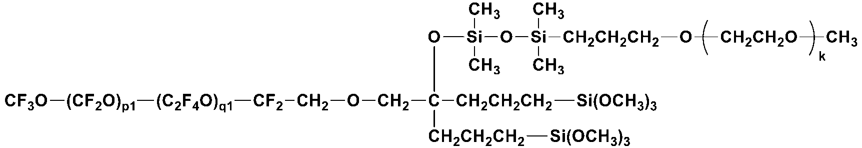 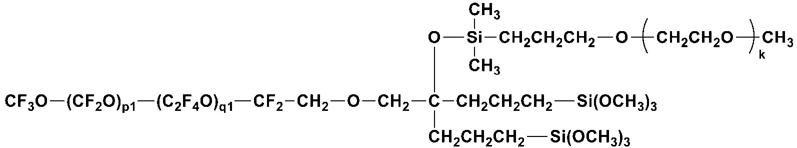 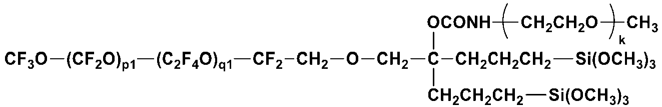 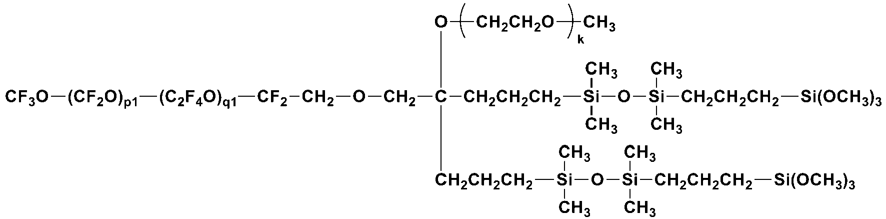 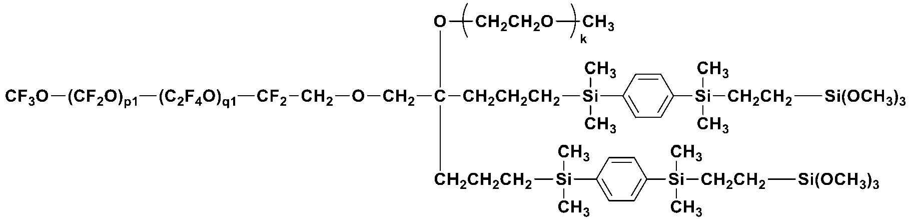 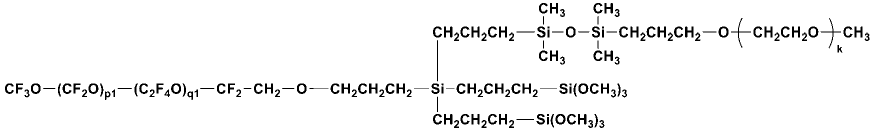 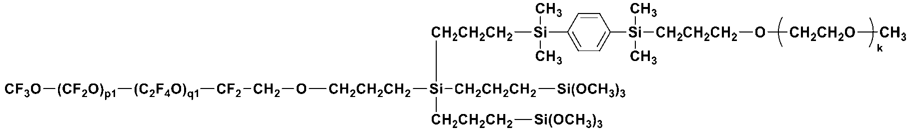 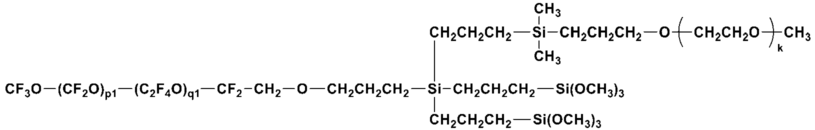 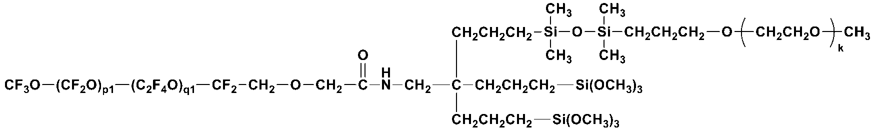 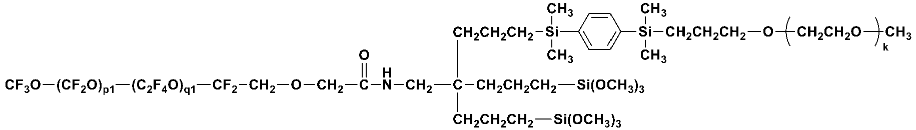 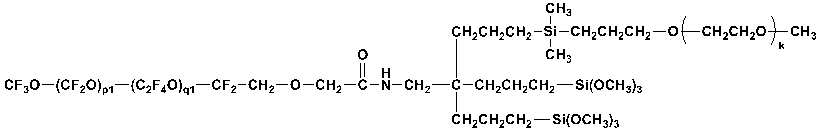 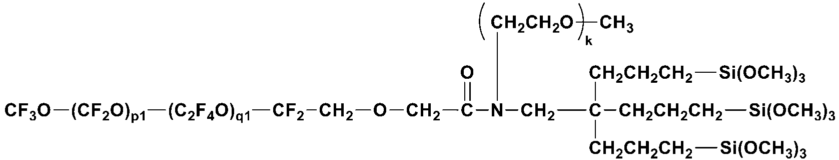 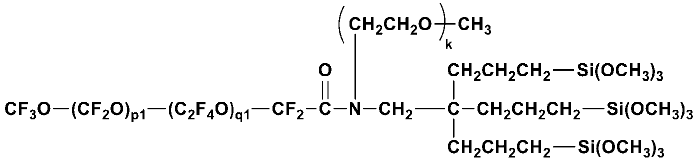 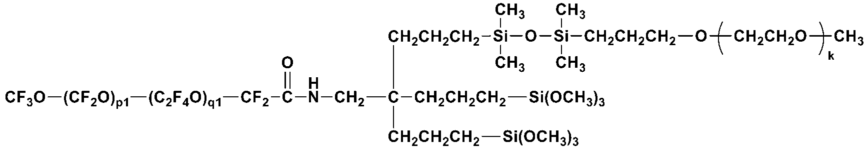 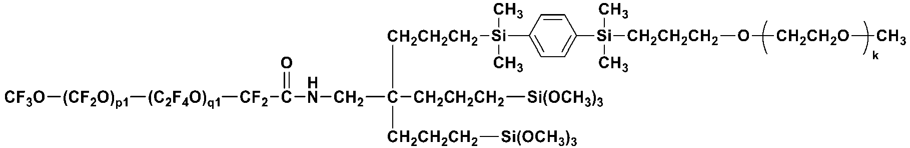 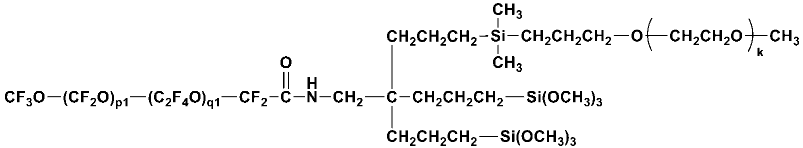 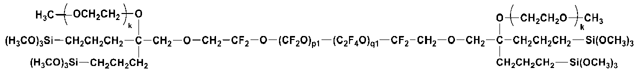 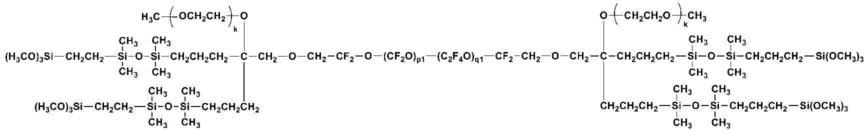 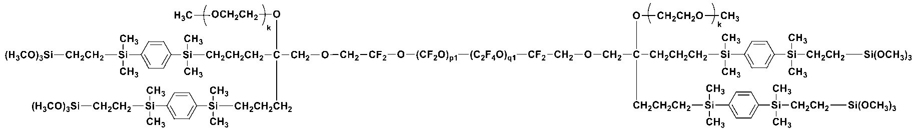 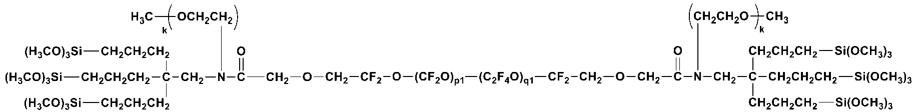 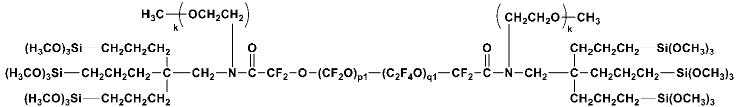 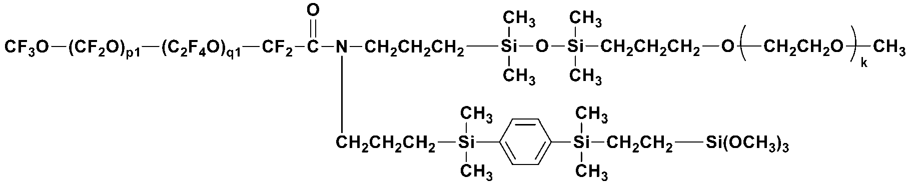 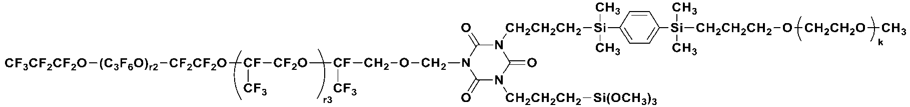 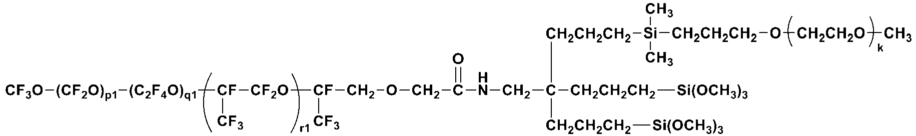 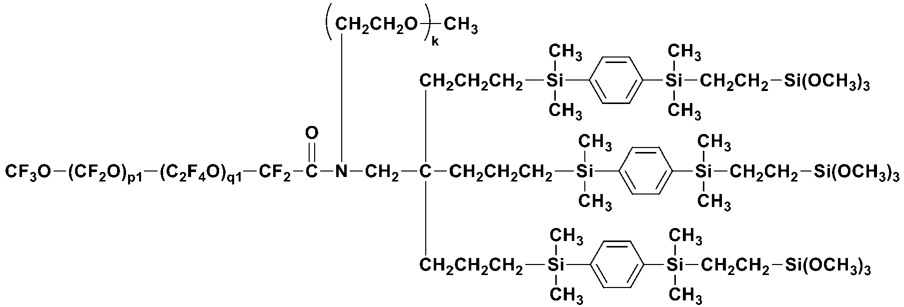 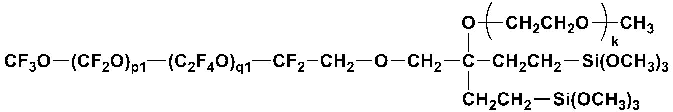 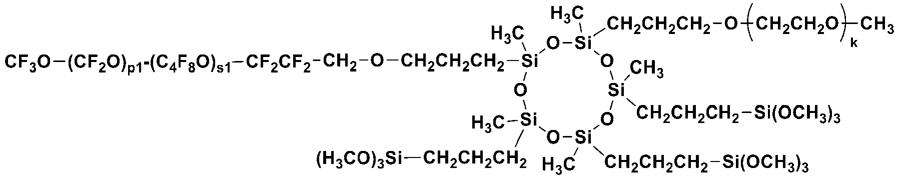 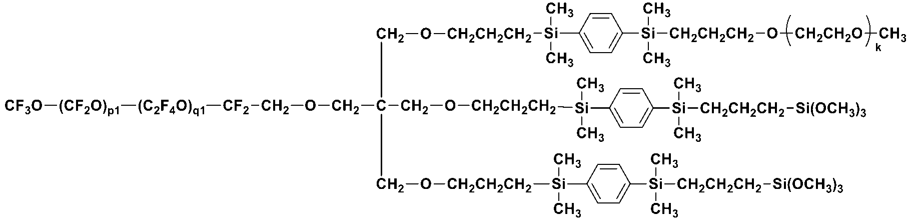 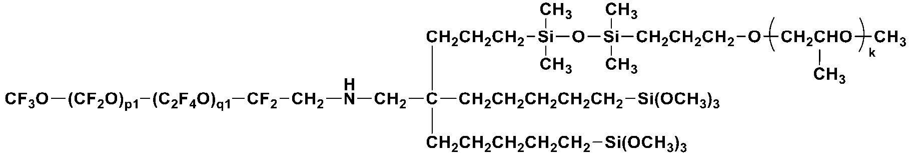 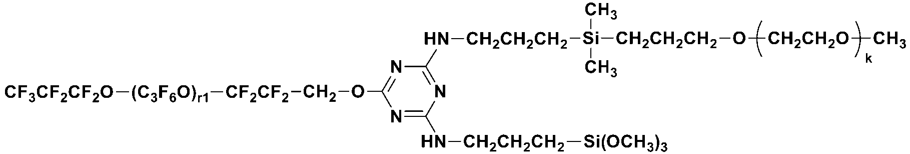 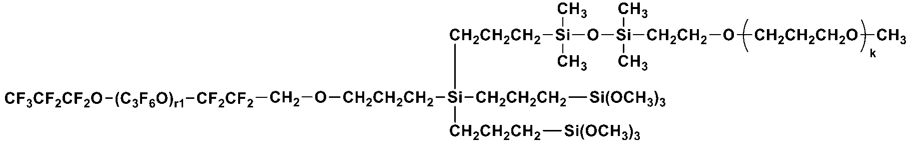 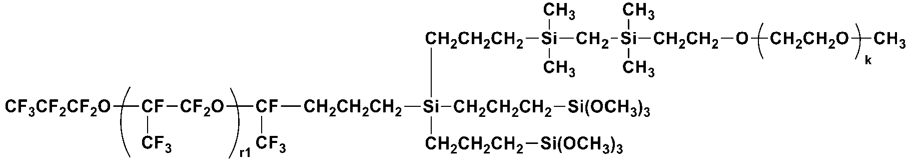 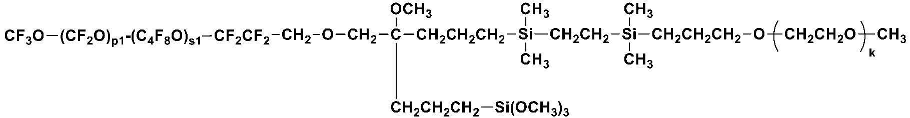 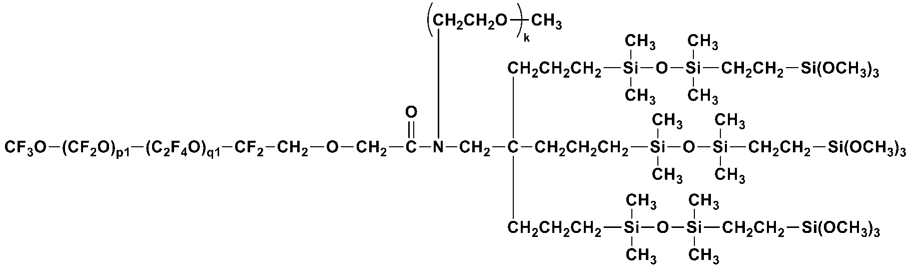 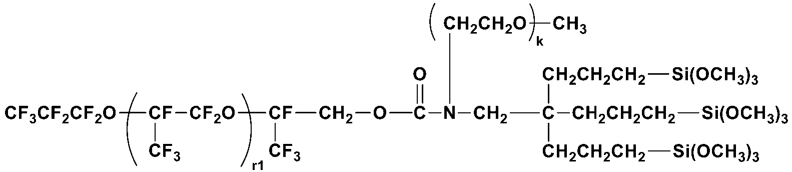 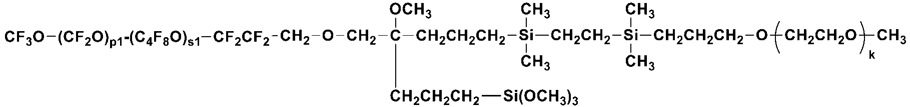 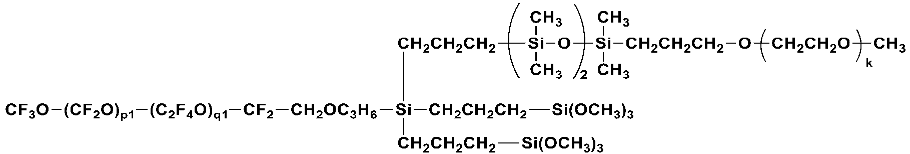 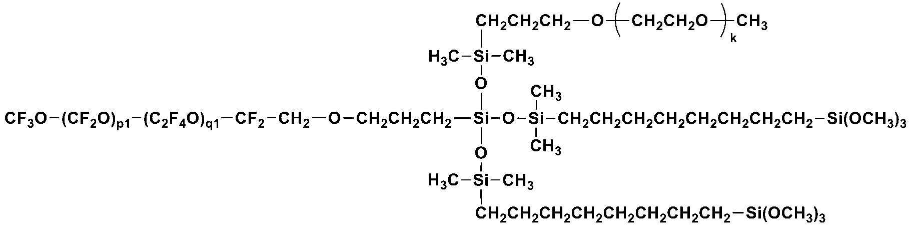 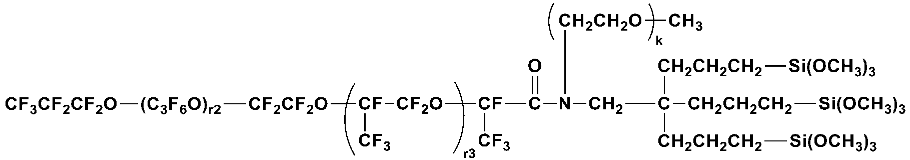 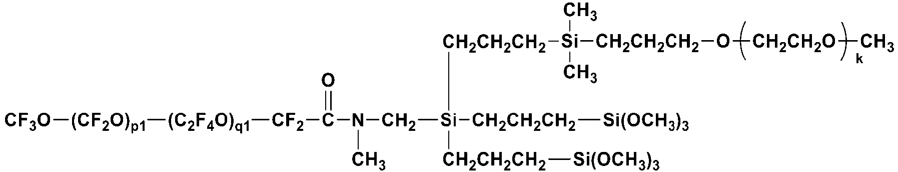 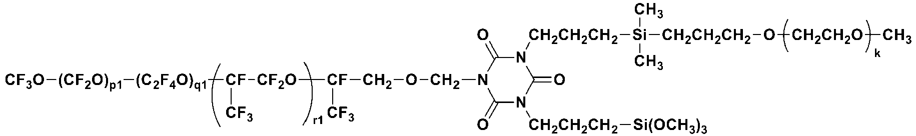 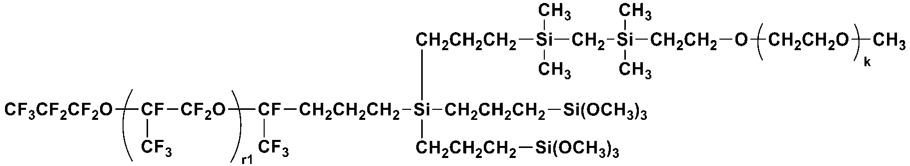 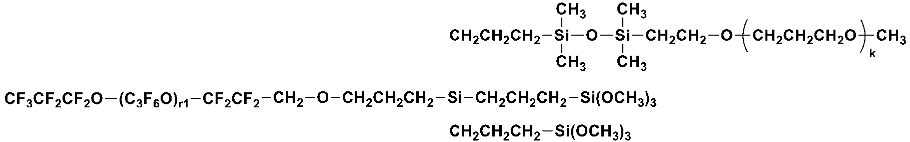 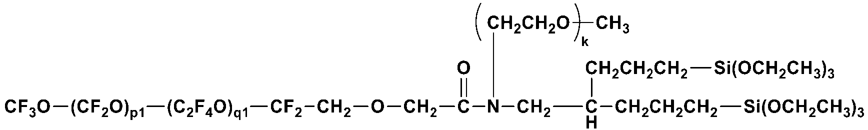 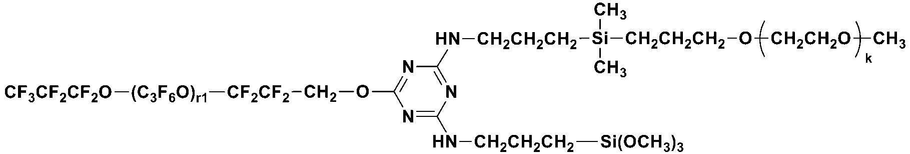 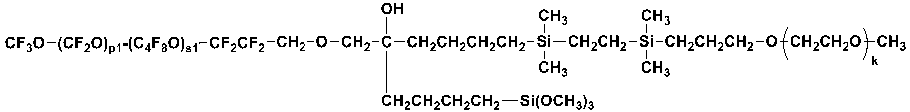 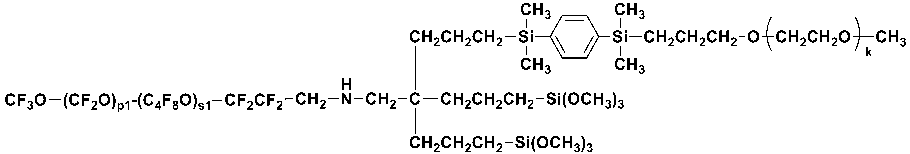 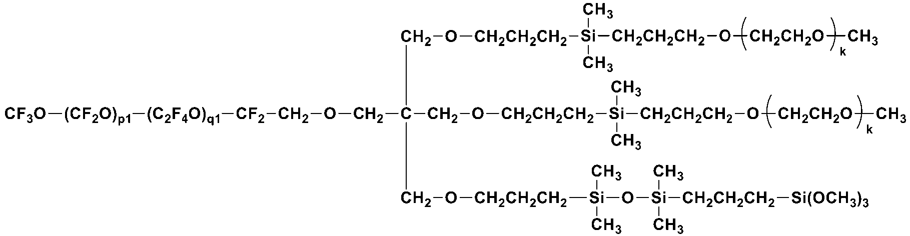 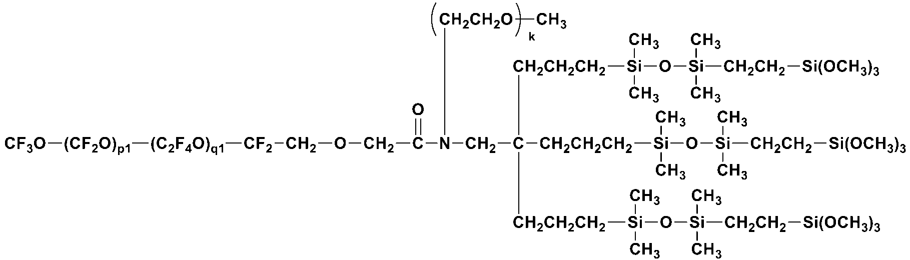 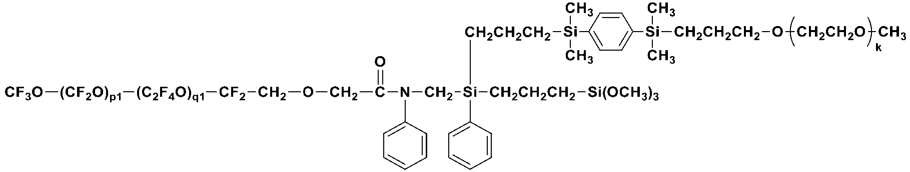 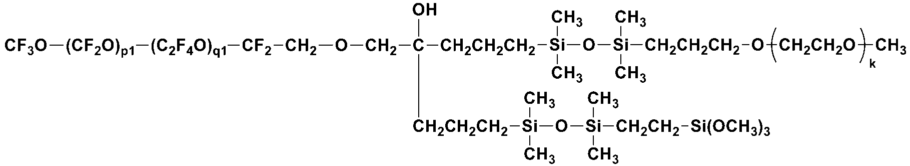 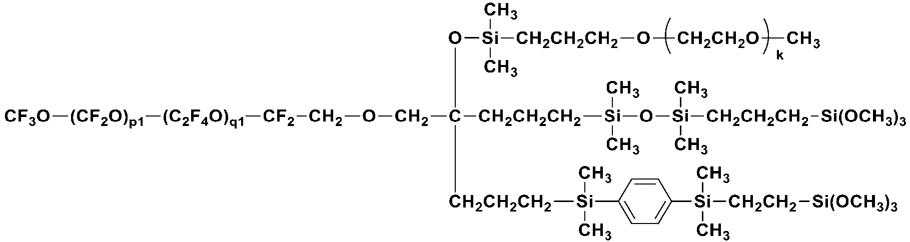 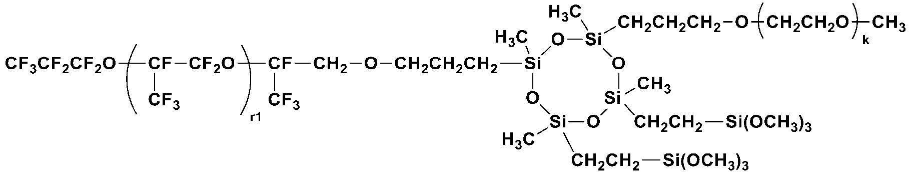 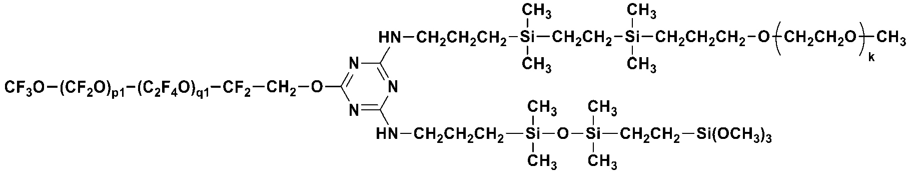 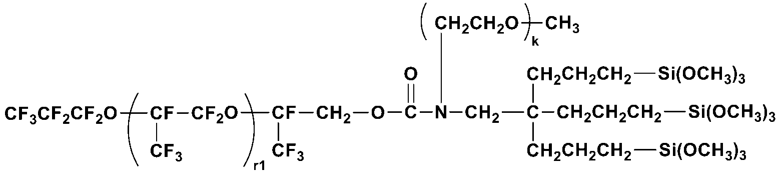 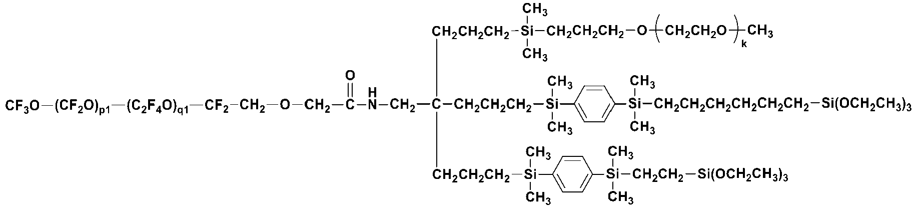 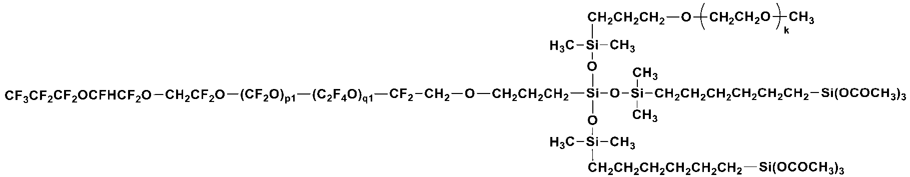 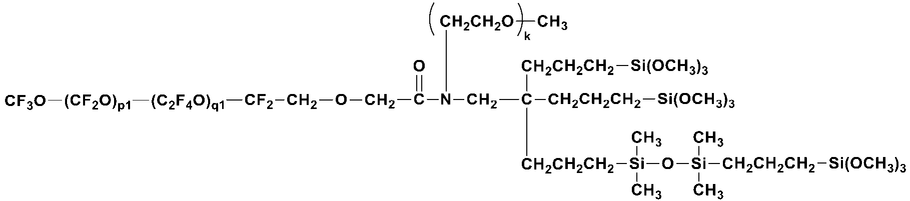 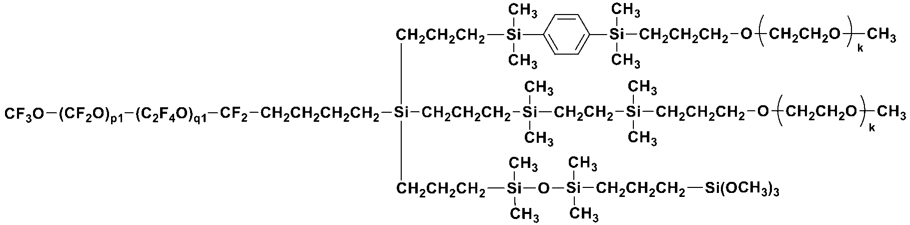 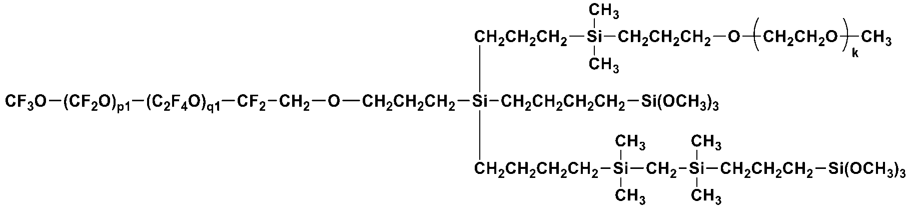 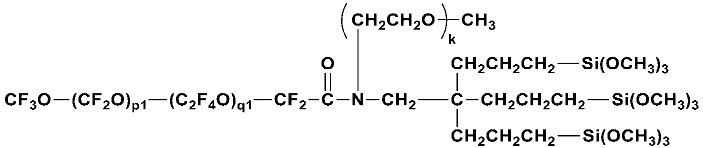 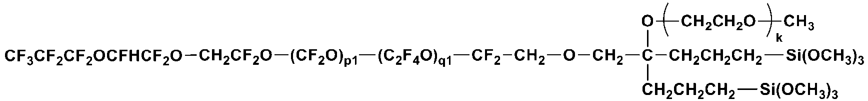 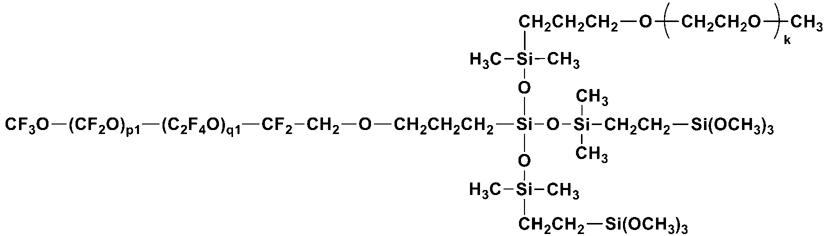 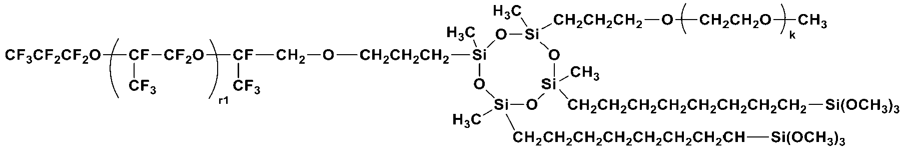 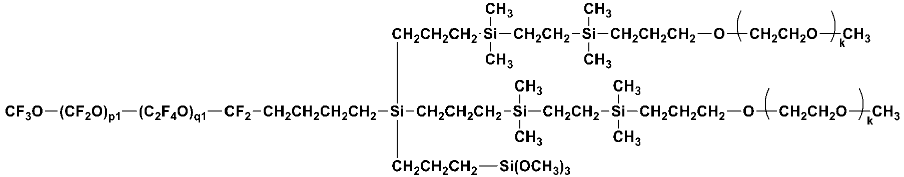 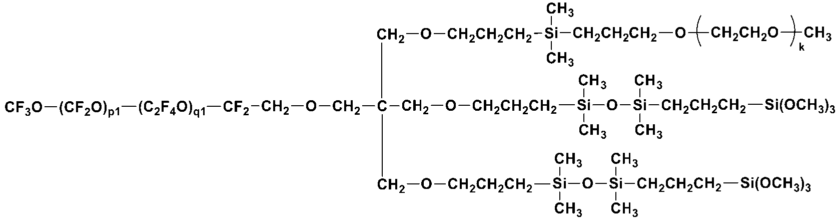 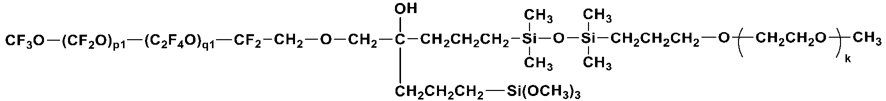 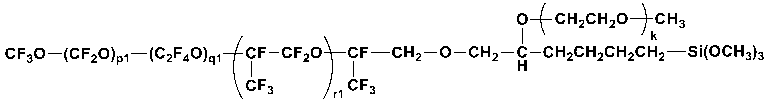 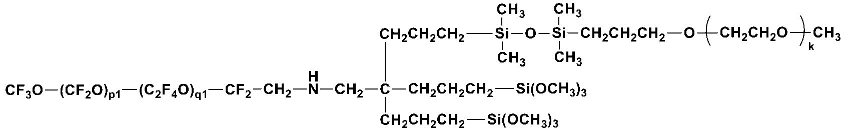 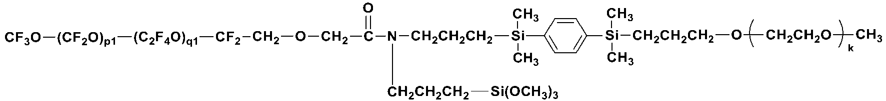 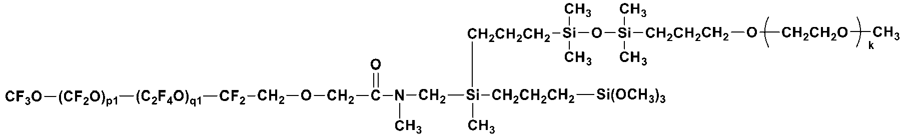 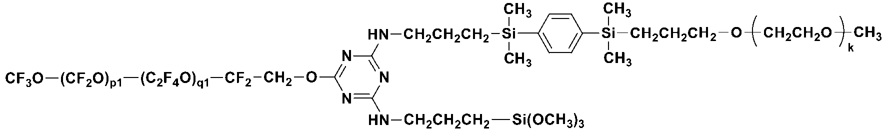 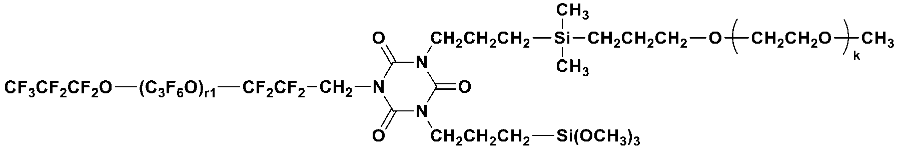 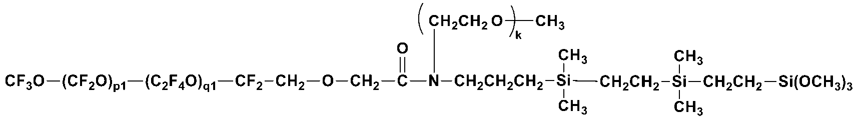 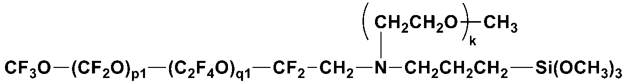 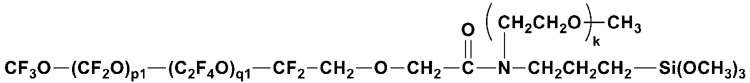 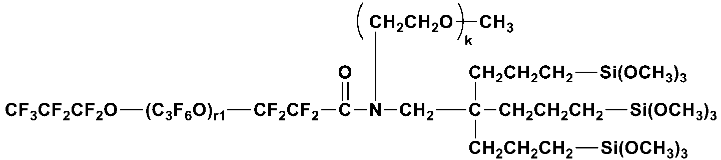 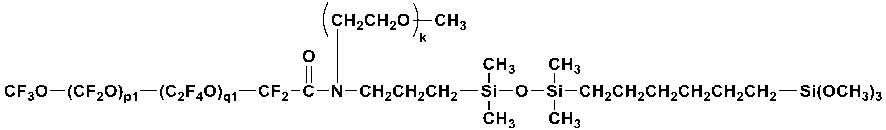 dans lesquelles p1, q1, r1 et s1 sont chacun un entier de 1 à 200, à condition que la somme de p1, q1, r1 et s1 dans chaque formule soit de 3 à 200, r2 et r3 sont chacun un entier au moins égal à 1, la somme de r2 et r3 vaut de 2 à 199, des motifs individuels entre parenthèses avec p1, q1, r1, r2, r3, et s1 peuvent être liés de façon aléatoire, et k est un entier de 1 à 20.

11. Agent de traitement de surface comportant le polymère contenant un groupe fluoropolyéther selon l'une quelconque des revendications 1 à 10 et/ou un condensat (hydrolytique) partiel de celui-ci.
